(19) Europäisches Patentamt
European Patent Office
Office européen des brevets

(11) EP 3 173 860 B1

(12) **EUROPEAN PATENT SPECIFICATION**

(45) Date of publication and mention of the grant of the patent:
**26.06.2019 Bulletin 2019/26**

(21) Application number: **14898120.2**

(22) Date of filing: **23.07.2014**

(51) Int Cl.:
***G02F 1/1339*** *(2006.01)*
***C09K 19/30*** *(2006.01)*
***G02F 1/13*** *(2006.01)*
***C08F 220/18*** *(2006.01)*
***C08F 222/10*** *(2006.01)*
***C09J 133/06*** *(2006.01)*
***G02F 1/00*** *(2006.01)*
***C09K 19/12*** *(2006.01)*
***C09K 19/42*** *(2006.01)*
***C09K 19/54*** *(2006.01)*
***C09K 19/32*** *(2006.01)*
***C09K 19/52*** *(2006.01)*
***C09J 135/02*** *(2006.01)*
***C08L 63/04*** *(2006.01)*

(86) International application number:
**PCT/JP2014/069411**

(87) International publication number:
**WO 2016/013064 (28.01.2016 Gazette 2016/04)**

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.05.2017 Bulletin 2017/22**

(73) Proprietor: **DIC Corporation**
**Tokyo 174-8520 (JP)**

(72) Inventors:
- **ONO, Yoshiyuki**
**Saitama 362-8577 (JP)**
- **KAWAMURA, Jouji**
**Saitama 362-8577 (JP)**
- **IWASHITA, Yoshinori**
**Saitama 362-8577 (JP)**
- **TAKEDA, Hiroyuki**
**Sakura-shi**
**Chiba 285-8668 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**WO-A1-2009/054276**
**WO-A1-2011/074384**
**WO-A1-2014/109266**
**JP-A- 2013 124 324**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 173 860 B1

## Description

Technical Field

The present invention relates to liquid crystal display devices.

Background Art

Liquid crystal display devices are used in various products, including clocks, calculators, household electrical appliances, measuring instruments, automotive instrument panels, word processors, electronic organizers, printers, computers, and televisions. Typical types of liquid crystal display devices include twisted nematic (TN), super-twisted nematic (STN), dynamic scattering (DS), guest-host (GH), in-plane switching (IPS), optically compensated birefringence (OCB), electrically controlled birefringence (ECB), vertically aligned (VA), color super-homeotropic (CSH), and ferroelectric liquid crystal (FLC) display devices. Whereas conventional liquid crystal display devices are statically driven, multiplexed liquid crystal display devices are now in widespread use, including passive-matrix display devices and, more recently, active-matrix (AM) display devices, which are driven by elements such as thin-film transistors (TFTs) and thin-film diodes (TFDs) .

One of the widely used methods for manufacturing liquid crystal display devices is one-drop filling using photocurable, thermally curable sealants. This method begins by forming a rectangular seal pattern on one of two transparent substrates having electrodes thereon by dispensing or screen printing. Small droplets of liquid crystal are then dispensed over the entire area within the frame pattern of the uncured sealant on the transparent substrate, immediately followed by laminating the other transparent substrate and pre-curing the sealant by exposure to UV radiation. The sealant is then post-cured by heating during the annealing of the liquid crystal to produce a liquid crystal display device. The substrates can be laminated together under reduced pressure, which allows the liquid crystal display device to be significantly efficiently manufactured.

However, if a photocurable, thermally curable sealant is used in a small liquid crystal display panel, a seal pattern formed of the sealant overlaps complicated metal wiring and a black matrix. This leaves an unexposed area that has not been exposed to light for pre-curing. In this area, the uncured sealant may dissolve into and contaminate the liquid crystal during the process from light exposure to thermal curing. Recent liquid crystal display panels for low-power applications such as mobile applications tend to include liquid crystals with low driving voltages (low-voltage liquid crystals). Since low-voltage liquid crystals have high dielectric anisotropy, they have a problem in that they are readily contaminated with residues such as unreacted polymerization initiator and curing agent, ionic impurities such as chlorine, and other impurities such as silane coupling agents present in the sealant. These impurities disturb the alignment and decrease the voltage holding ratio over time.

Accordingly, thermally curable sealants for one-drop filling that require no pre-curing by light exposure have been proposed. However, conventional thermally curable sealants have a problem in that the viscosity of the resin used as a raw material decreases upon heating. This results in partial deformation of the seal pattern and dissolution of the sealant components into the liquid crystal and thus decreases the electrical characteristics of the liquid crystal display device.

To reduce the dissolution of the sealant components into the liquid crystal material, it has been proposed to increase the softening point of the epoxy resin present in the sealant to reduce the contamination of the liquid crystal material due to contact with uncured sealant, thereby reducing color unevenness (PTL 1).

Although epoxy resins generally have high adhesion, they tend to contaminate liquid crystal materials. One solution to this problem is to reduce the contamination of a liquid crystal material by acrylic modification. This technique is expected to reduce the contamination of the liquid crystal material while improving the adhesion. However, acrylic modification may decrease the thermal curability and may thus result in contamination of the liquid crystal material due to dissolution of the sealant components. Accordingly, it has also been proposed to add a tertiary amine, such as imidazole, for curing the acrylic component while adding a small amount of epoxy resin, thereby thermally curing the acrylic resin through the interaction with the epoxy resin (PTL 2).

Conventional thermally curable sealants also have a problem in that the viscosity of the resin used as a raw material decreases upon heating. This results in partial deformation of the seal pattern and leakage of the liquid crystal outside the seal pattern. Accordingly, a composition with improved curability without a decrease in adhesion to substrates has been proposed (PTL 3).

However, the foregoing proposals assume common liquid crystal materials and focus only on the compositions of sealants; that is, they are intended to avoid the problems by modifying the compositions of sealants. These proposals often fail to achieve good display characteristics when applied to specific liquid crystal display devices. In particular, these proposals are not sufficiently effective in reducing image-sticking of liquid crystal display devices.

WO 2011/074384 A1 describes a liquid crystal composition that contains a polymerizable compound. The liquid

crystal composition is to be used in a liquid crystal display element wherein an ability to align liquid crystal molecules is imparted by polymerization. The composition contains a polymerizable compound that can be polymerized even when no or a little photopolymerization initiator is used. Therefore, the composition is characterized in that the alignment after the polymerization is so stable that no defects in display characteristics occur. Thus, the composition is suitable as a component of a liquid crystal composition for practical use. A liquid crystal display element using the liquid crystal composition is suitable for use in a VA- or IPS-type liquid crystal display device.

WO 2009/054276 A1 describes a sealing material for liquid crystal dispensing method which does not contaminate a liquid crystal when used in the production of liquid crystal displays by the dispenser method even if a component of the sealing material is dissolved in the liquid crystal and which makes it possible to produce liquid crystal displays excellent in display quality and reliability. To that end, the document describes a sealing material for liquid crystal dispensing method which contains both a curable resin and a photo-radical initiator, wherein the photo-radical initiator is one which does not precipitate from a liquid crystal as tested by dissolving the initiator completely in the liquid crystal in a concentration of 4 wt.-% at 120°C and allowing the resulting solution to stand at -20 °C for 144 hours and which exhibits an absorptivity of 50 mL/g·cm or above as determined at 405 nm in a solvent.

WO 2014/109266 A1 describes a liquid-crystal sealing agent for a liquid-crystal dripping process having extremely low contamination of the liquid crystal throughout the step because of the speed of the reaction using heat, and having excellent handling properties and storage stability. This liquid-crystal sealing agent for a liquid-crystal dripping process contains: (a) a thermal radical polymerization initiator; (b) a radical polymerization preventing agent; (c) a curable resin having a (meth)acryloyl group; and (d) an organic filler, component (b) being expressed by any of formulas (1)-(3), or having a piperidine skeleton. In the formulas, $R^1$, $R^2$, $R^4$, and $R^5$ represent a hydrogen atom or a methyl group, and $R^3$ and $R^6$ represent a hydroxy group or a $C_{1-4}$ alkyl group. Note that one of $-OR^1$, $-OR^2$, and $-R^3$, and one of $-OR^4$, $-OR^5$, and $-R^6$ is a hydroxy group. $R^7$ represents a hydrogen atom, a hydroxy group, or a $C_{1-4}$ alkyl group.

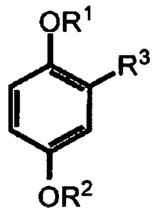
(1)

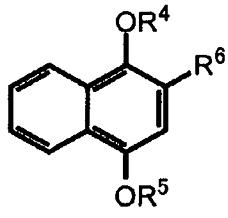
(2)

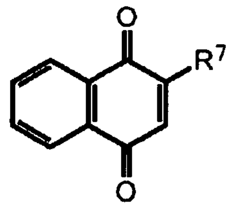
(3)

JP 2013 124324 A relates to the problem to provide a curable polyorganosiloxane composition, capable of suppressing the discoloring of silver used in an electrode for LED or the like due to a contaminant under the usage environment. As a solution to the problem, the document describes a curable polyorganosiloxane composition which contains: (A) a curable condensed type silicone resin containing two or more silanol groups in one molecule; (B) a curing catalyst; and (C) an epoxy resin having bisphenol group, in which the ratio (weight ratio) of (C) the epoxy resin having bisphenol group to the total solid content in the composition is 0.01/100 or more and 0.8/100 or less. The blending of a predetermined amount of the (C) the epoxy resin having bisphenol group allows suppression of the discoloring of silver resulting from a contaminant such as sulfur component.

Citation List

Patent Literature

PTL 1: Japanese Unexamined Patent Application Publication No. 2006-23582
PTL 2: Japanese Unexamined Patent Application Publication No. 2008-116825
PTL 3: Japanese Unexamined Patent Application Publication No. 2009-175180

Summary of Invention

Technical Problem

The present invention focuses on the interaction between the compositions of liquid crystal materials and sealants, which has not been sufficiently explored in the art, and proposes a combination of a liquid crystal composition

and a sealant composition that provides a liquid crystal display device with improved characteristics such as reduced image-sticking.

Specifically, the present invention provides a liquid crystal display device including a particular liquid crystal composition and a cured product of a particular curable resin composition serving as a sealant. This liquid crystal display device has a practical liquid crystal phase temperature limit, a large absolute value of dielectric anisotropy ($\Delta\varepsilon$), a low viscosity, and a suitable refractive index anisotropy ($\Delta n$) and does not suffer from a decrease in the voltage holding ratio (VHR) of the liquid crystal layer or the problem of display defects such as white spots, alignment unevenness, and image-sticking.

Solution to Problem

To solve the foregoing problems, the inventors have conducted extensive research on various combinations of curable resin compositions for sealants and liquid crystal materials for liquid crystal layers. As a result, the inventors have discovered that a liquid crystal display device including a liquid crystal material having a particular structure and a cured product of a particular curable resin composition serving as a sealant does not suffer from a decrease in the voltage holding ratio (VHR) of the liquid crystal layer or the problem of display defects such as white spots, alignment unevenness, and image-sticking. This discovery has led to the present invention.

Specifically, the present invention provides a liquid crystal display device defined in claim 1, which includes a first substrate, a second substrate, a liquid crystal layer containing a liquid crystal composition between the first and second substrates, and a sealant joining together the first and second substrates. The sealant is a cured product of a thermally curable resin composition. The liquid crystal composition contains 10% to 50% by weight of a compound represented by general formula (I).

[Chem. 1]

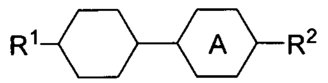

(I)

In the formula, $R^1$ and $R^2$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; and A is 1,4-phenylene or trans-1,4-cyclohexylene. The liquid crystal composition further contains 35% to 80% by weight of a compound represented by general formula (II).

[Chem. 2]

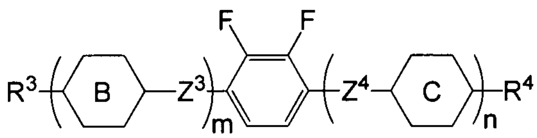

(II)

In the formula, $R^3$ and $R^4$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^3$ and $Z^4$ are each independently a single bond, -CH=CH-, -C≡C-, $-CH_2CH_2-$, $-(CH_2)_4-$, -COO-, -OCO-, $-OCH_2-$, $-CH_2O-$, $-OCF_2-$, or $-CF_2O-$; B and C are each independently optionally fluorinated 1,4-phenylene or trans-1,4-cyclohexylene; and m and n are each independently an integer of 0 to 4, where m + n = 1 to 4. The curable resin composition contains a compound containing at least one epoxy group per molecule and having a weight average molecular weight of 300 to 10,000, and the curable resin composition has a hydrogen-bonding functional group value of $1 \times 10^{-4}$ to $5 \times 10^{-2}$ mol/g.

Advantageous Effects of Invention

The liquid crystal display device according to the present invention, which includes a particular liquid crystal composition and a cured product of a particular curable resin composition serving as a sealant, has a practical liquid crystal phase temperature limit, a large absolute value of dielectric anisotropy ($\Delta\varepsilon$), a low viscosity, and a suitable refractive index anisotropy ($\Delta n$) and does not suffer from a decrease in the voltage holding ratio (VHR) of the liquid crystal layer or display defects such as white spots, alignment unevenness, and image-sticking.

Brief Description of Drawings

Fig. 1 is a plan view of a liquid crystal display device according to the present invention.
Fig. 2 is an enlarged view of the liquid crystal display device according to the present invention.

Reference Signs List

1 substrate
2 sealant
3 liquid crystal
4 driver
5 wiring line from pixel electrode
6 overcoat layer
7 pixel electrode or wiring line
8 alignment layer

Description of Embodiments

Fig. 1 is a plan view of a liquid crystal display device according to the present invention, where details such as pixel electrodes, TFTs, and wiring lines are not shown. The upper view of Fig. 2 is a partial enlarged view of the plan view, showing that wiring lines extend under a sealant from pixel electrodes to a driver. The lower view of Fig. 2 is a sectional view of the upper view of Fig. 2. The sealant contacts a liquid crystal and an alignment layer. Although not all situations are shown in the drawings, the sealant or the liquid crystal may contact the wiring lines or an overcoat layer depending on the position of the sealant.

Liquid Crystal Layer

The liquid crystal layer of the liquid crystal display device according to the present invention is formed of a liquid crystal composition containing 10% to 50% by weight of a compound represented by general formula (I).

[Chem. 3]

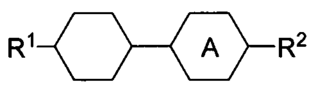

(I)

In the formula, $R^1$ and $R^2$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; and A is 1,4-phenylene or trans-1,4-cyclohexylene. The liquid crystal composition further contains 35% to 80% by weight of a compound represented by general formula (II):

[Chem. 4]

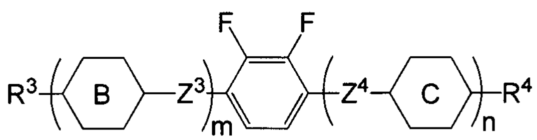

(II)

In the formula, $R^3$ and $R^4$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^3$ and $Z^4$ are each independently a single bond, -CH=CH-, -C≡C-, $-CH_2CH_2-$, $-(CH_2)_4-$, -COO-, -OCO-, $-OCH_2-$, $-CH_2O-$, $-OCF_2-$, or $-CF_2O-$; B and C are each independently optionally fluorinated 1,4-phenylene or trans-1,4-cyclohexylene; and m and n are each independently an integer of 0 to 4, wherein m + n = 1 to 4.

The compound represented by general formula (I) is present in the liquid crystal layer of the liquid crystal display device according to the present invention in an amount of 10% to 50% by weight, preferably 15% to 48% by weight, more preferably 20% to 46% by weight.

In general formula (I), $R^1$ and $R^2$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms. If A is trans-1,4-cyclohexylene, $R^1$ and $R^2$ are each preferably an alkyl group of 1 to 5 carbon atoms, an alkenyl group of 2 to 5 carbon atoms, an alkoxy group of 1 to 5 carbon atoms, or an alkenyloxy group of 2 to 5 carbon atoms, more preferably an alkyl group of 2 to 5 carbon atoms, an alkenyl group of 2 to 4 carbon atoms, an alkoxy group of 1 to 4 carbon atoms, or an alkenyloxy group of 2 to 4 carbon atoms. $R^1$ is preferably an alkyl group, more preferably an alkyl group of 2, 3, or 4 carbon atoms. If $R^1$ is an alkyl group of 3 carbon atoms, $R^2$ is preferably an alkyl group of 2, 4, or 5 carbon atoms or an alkenyl group of 2 or 3 carbon atoms, more preferably an alkyl group of 2 carbon atoms.

If A is 1,4-phenylene, $R^1$ and $R^2$ are each preferably an alkyl group of 1 to 5 carbon atoms, an alkenyl group of 4 or 5 carbon atoms, an alkoxy group of 1 to 5 carbon atoms, or an alkenyloxy group of 3 to 5 carbon atoms, more preferably an alkyl group of 2 to 5 carbon atoms, an alkenyl group of 4 or 5 carbon atoms, an alkoxy group of 1 to 4 carbon atoms, or an alkenyloxy group of 2 to 4 carbon atoms. $R^1$ is preferably an alkyl group, more preferably an alkyl group of 1, 3, or 5 carbon atoms. $R^2$ is preferably an alkoxy group of 1 or 2 carbon atoms.

Preferably, compounds represented by general formula (I) where at least one of $R^1$ and $R^2$ is an alkyl group of 3 to 5 carbon atoms are present in an amount of 50% by weight or more, more preferably 70% by weight or more, even more preferably 80% by weight or more, of all the compounds represented by general formula (I). Preferably, compounds represented by general formula (I) where at least one of $R^1$ and $R^2$ is an alkyl group of 3 carbon atoms are present in an amount of 50% by weight or more, more preferably 70% by weight or more, even more preferably 80% by weight or more, most preferably 100% by weight, of all the compounds represented by general formula (I).

The liquid crystal composition may contain one or more compounds represented by general formula (I), preferably at least one compound where A is trans-1,4-cyclohexylene and at least one compound where A is 1,4-phenylene.

Preferably, compounds represented by general formula (I) where A is trans-1,4-cyclohexylene are present in an amount of 50% by weight or more, more preferably 70% by weight or more, even more preferably 80% by weight or more, of all the compounds represented by general formula (I).

Specific preferred compounds represented by general formula (I) include compounds represented by general formulas (Ia) to (Ik) below.

[Chem. 5]

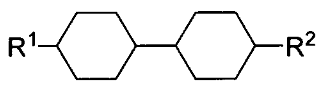 ( Ia )

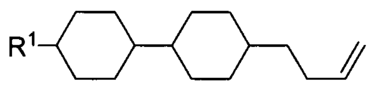 ( Id )

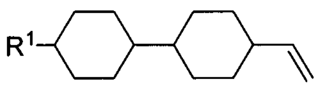 ( Ib )

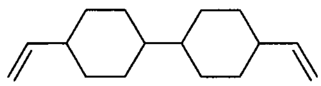 ( Ie )

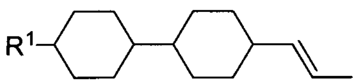 ( Ic )

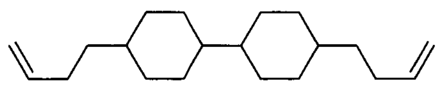 ( If )

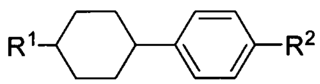 ( Ig )

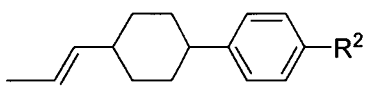 ( Ii )

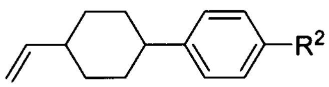 ( Ih )

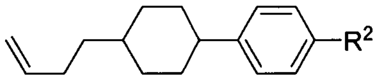 ( Ij )

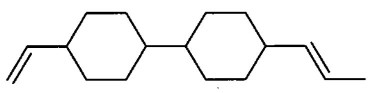 (Ik)

In the formulas, $R^1$ and $R^2$ are each independently an alkyl group of 1 to 5 carbon atoms or an alkoxy group of 1 to 5 carbon atoms, preferably as defined for $R^1$ and $R^2$, respectively, in general formula (I).

Preferred among general formulas (Ia) to (Ik) are general formulas (Ia), (Ib), (Ic), and (Ig), more preferably general formulas (Ia), (Ib), and (Ic), even more preferably general formulas (Ia) and (Ib). General formulas (Ib) and (Ic) are preferred to achieve a faster response time, and it is more preferred to use a combination of general formulas (Ib) and (Ic). General formula (Ia) is preferred to achieve a higher reliability.

With these points in mind, compounds represented by general formulas (Ia), (Ib), and (Ic) are preferably present in an amount of 80% by weight or more, more preferably 90% by weight or more, even more preferably 95% by weight or more, most preferably 100% by weight, of all the compounds represented by general formula (I). Preferably, compounds represented by general formula (Ia) are present in an amount of 65% to 100% by weight of all the compounds represented by general formula (I), and compounds represented by general formulas (Ib) and (Ic) are present in an amount of 0% to 35% by weight of all the compounds represented by general formula (I). Also preferably, compounds represented by general formula (Ia) are present in an amount of 0% to 10% by weight of all the compounds represented by general formula (I), and compounds represented by general formulas (Ib) and (Ic) are present in an amount of 90% to 100% by weight of all the compounds represented by general formula (I) .

The compound represented by general formula (II) is present in the liquid crystal layer of the liquid crystal display device according to the present invention in an amount of 35% to 80% by weight, preferably 40% to 75% by weight, more preferably 45% to 70% by weight.

In general formula (II), $R^3$ is an alkyl group of 1 to 8 carbon atoms, an alkenyl group of 2 to 8 carbon atoms, an alkoxy group of 1 to 8 carbon atoms, or an alkenyloxy group of 2 to 8 carbon atoms. Preferably, $R^3$ is an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 or 3 carbon atoms, still more preferably an alkyl group of 2 or 3 carbon atoms or an alkenyl group of 2 carbon atoms, most preferably an alkyl group of 2 or 3 carbon atoms.

$R^4$ is an alkyl group of 1 to 8 carbon atoms, an alkenyl group of 4 to 8 carbon atoms, an alkoxy group of 1 to 8 carbon atoms, or an alkenyloxy group of 3 to 8 carbon atoms. Preferably, $R^4$ is an alkyl group of 1 to 5 carbon atoms or an alkoxy group of 1 to 5 carbon atoms, more preferably an alkyl group of 1 to 3 carbon atoms or an alkoxy group of 1 to 4 carbon atoms, even more preferably an alkoxy group of 2 to 4 carbon atoms. $Z^3$ and $Z^4$ are each independently a single bond, $-CH=CH-$, $-C\equiv C-$, $-CH_2CH_2-$, $-(CH_2)_4-$, -COO-, -OCO-, $-OCH_2-$, $-CH_2O-$, $-OCF_2-$, or $-CF_2O-$. Preferably, $Z^3$ and $Z^4$ are each a single bond, $-CH_2CH_2-$, -COO-, $-OCH_2-$, $-CH_2O-$, $-OCF_2-$, or - $CF_2O-$, more preferably a single bond or $-CH_2O-$.

m and n are preferably each independently an integer of 0 to 3, more preferably an integer of 0 to 2, and m + n is preferably 1 to 3, more preferably 1 or 2.

The liquid crystal layer of the liquid crystal display device according to the present invention may contain three to ten, preferably four to nine, even more preferably five to eight, compounds represented by general formula (II).

Preferred compounds represented by general formula (II) include compounds represented by general formulas (II-1) and (II-2) below.

[Chem. 6]

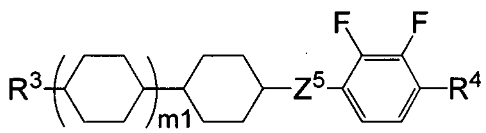
(II-1)

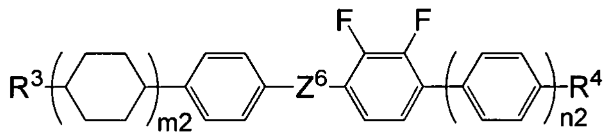
(II-2)

In the formulas, $R^3$ and $R^4$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^5$ and $Z^6$ are each independently a single bond, $-CH=CH-$, $-C\equiv C-$, $-CH_2CH_2-$, - $(CH_2)_4-$, -COO-, -OCO-, $-OCH_2-$, $-CH_2O-$, $-OCF_2-$, or $-CF_2O-$; and m1, m2, and n2 are each independently 0 or 1.

In general formula (II-1), $R^3$ is preferably an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 carbon atoms, still more preferably an alkyl group of 3 carbon atoms. $R^4$ is preferably an alkyl group of 1 to 5 carbon atoms or an alkoxy group of 1 to 5 carbon atoms, more preferably an alkyl group of 1 to 3 carbon atoms or an alkoxy group of 1 to 3 carbon atoms, even more preferably an alkyl group of 3 carbon atoms or an alkoxy group of 2 carbon atoms, still more preferably an alkoxy group

of 2 carbon atoms. $Z^5$ is preferably a single bond, $-CH_2CH_2-$, -COO-, $-OCH_2-$, $-CH_2O-$, $-OCF_2-$, or $-CF_2O-$, more preferably a single bond or $-CH_2O-$.

The compound represented by general formula (II-1) is preferably present in the liquid crystal layer of the liquid crystal display device according to the present invention in an amount of 15% to 60% by weight, more preferably 17% to 50% by weight, even more preferably 18% to 40% by weight, still more preferably 19% to 30% by weight.

The liquid crystal layer of the liquid crystal display device according to the present invention may contain one or more, preferably one to six, even more preferably two to five, still more preferably three or four, compounds represented by general formula (II-1).

In general formula (II-2), $R^3$ is preferably an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 carbon atoms, still more preferably an alkyl group of 2 or 3 carbon atoms. $R^4$ is preferably an alkyl group of 1 to 5 carbon atoms or an alkoxy group of 1 to 5 carbon atoms, more preferably an alkyl group of 1 to 3 carbon atoms or an alkoxy group of 1 to 3 carbon atoms, even more preferably an alkyl group of 3 carbon atoms or an alkoxy group of 2 carbon atoms. $Z^6$ is preferably a single bond, $-CH_2CH_2-$, -COO-, $-OCH_2-$, $-CH_2O-$, $-OCF_2-$, or $-CF_2O-$, more preferably a single bond or $-CH_2O-$.

The compound represented by general formula (II-2) is preferably present in the liquid crystal layer of the liquid crystal display device according to the present invention in an amount of 10% to 50% by weight, more preferably 15% to 45% by weight, even more preferably 20% to 40% by weight, still more preferably 25% to 35% by weight.

The liquid crystal layer of the liquid crystal display device according to the present invention may contain one or more, preferably one to six, even more preferably two to five, still more preferably three or four, compounds represented by general formula (II-2).

Specific preferred compounds represented by general formula (II-1) include compounds represented by general formulas (II-1a) to (II-1d) below.

[Chem. 7]

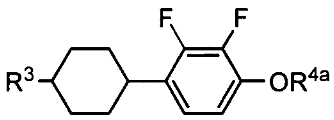 (II-1a) 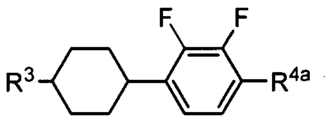 (II-1b)

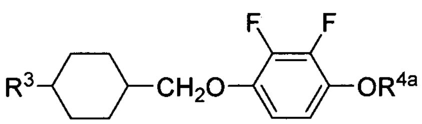 (II-1c) 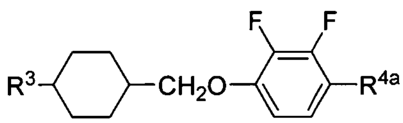 (II-1d)

In the formulas, $R^3$ is an alkyl group of 1 to 5 carbon atoms or an alkenyl group of 2 to 5 carbon atoms, and $R^{4a}$ is an alkyl group of 1 to 5 carbon atoms.

In general formulas (II-1a) and (II-1c), $R^3$ is preferably as defined in general formula (II-1). $R^{4a}$ is preferably an alkyl group of 1 to 3 carbon atoms, more preferably an alkyl group of 1 or 2 carbon atoms, even more preferably an alkyl group of 2 carbon atoms.

In general formulas (II-1b) and (II-1d), $R^3$ is preferably as defined in general formula (II-1). $R^{4a}$ is preferably an alkyl group of 1 to 3 carbon atoms, more preferably an alkyl group of 1 or 3 carbon atoms, even more preferably an alkyl group of 3 carbon atoms.

Among general formulas (II-1a) to (II-1d), general formulas (II-1a) and (II-1c) are preferred, more preferably general formula (II-1a), to achieve a larger absolute value of dielectric anisotropy.

The liquid crystal layer of the liquid crystal display device according to the present invention preferably contains one or more, more preferably one or two, compounds represented by any of general formulas (II-1a) to (II-1d), even more preferably one or two compounds represented by general formula (II-1a).

Other specific preferred compounds represented by general formula (II-1) include compounds represented by general formulas (II-1e) to (II-1h) below.

[Chem. 8]

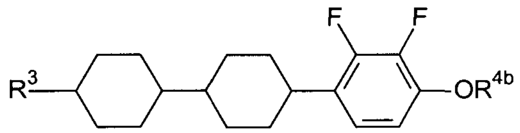

(II-1e)

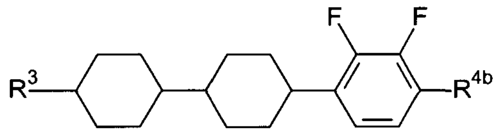

(II-1f)

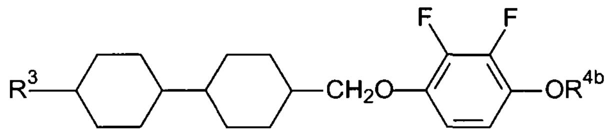

(II-1g)

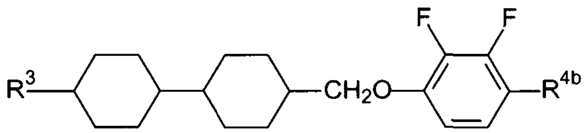

(II-1h)

In the formulas, $R^3$ is an alkyl group of 1 to 5 carbon atoms or an alkenyl group of 2 to 5 carbon atoms, and $R^{4b}$ is an alkyl group of 1 to 5 carbon atoms.

In general formulas (II-1e) and (II-1g), $R^3$ is preferably as defined in general formula (II-1). $R^{4b}$ is preferably an alkyl group of 1 to 3 carbon atoms, more preferably an alkyl group of 1 or 2 carbon atoms, even more preferably an alkyl group of 2 carbon atoms.

In general formulas (II-1f) and (II-1h), $R^3$ is preferably as defined in general formula (II-1) $R^{4b}$ is preferably an alkyl group of 1 to 3 carbon atoms, more preferably an alkyl group of 1 or 3 carbon atoms, even more preferably an alkyl group of 3 carbon atoms.

Among general formulas (II-1e) to (II-1h), general formulas (II-1e) and (II-1g) are preferred to achieve a larger absolute value of dielectric anisotropy.

Specific preferred compounds represented by general formula (11-2) include compounds represented by general formulas (II-2a) to (II-2d) below.

[Chem. 9]

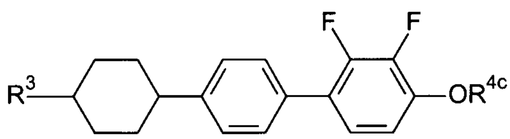

(II-2a)

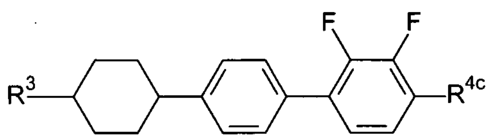

(II-2b)

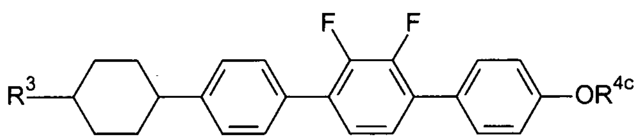

(II-2c)

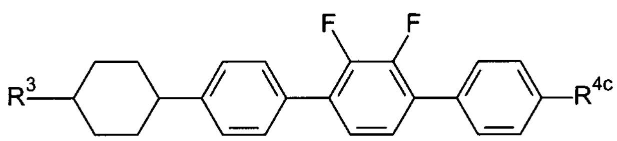

(II-2d)

In the formulas, $R^3$ is an alkyl group of 1 to 5 carbon atoms or an alkenyl group of 2 to 5 carbon atoms, and $R^{4c}$ is an alkyl group of 1 to 5 carbon atoms. Preferably, $R^3$ and $R^{4c}$ are as defined for $R^3$ and $R^4$, respectively, in general formula (II-2).

In general formulas (II-2a) and (II-2c), $R^3$ is preferably as defined in general formula (II-2). $R^{4c}$ is preferably an alkyl group of 1 to 3 carbon atoms, more preferably an alkyl group of 1 or 2 carbon atoms, even more preferably an alkyl group of 2 carbon atoms.

In general formulas (II-2b) and (II-2d), $R^3$ is preferably as defined in general formula (II-2). $R^{4c}$ is preferably an alkyl group of 1 to 3 carbon atoms, more preferably an alkyl group of 1 or 3 carbon atoms, even more preferably an alkyl group of 3 carbon atoms.

Among general formulas (II-2a) to (II-2d), general formula (II-2a) and (II-2c) are preferred, more preferably general formula (II-2a), to achieve a larger absolute value of dielectric anisotropy.

Other specific preferred compounds represented by general formula (11-2) include compounds represented by general formulas (II-2e) to (II-2j) below.

[Chem. 10]

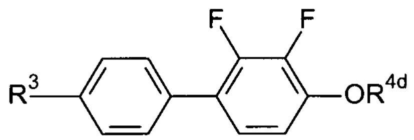
(II-2e)

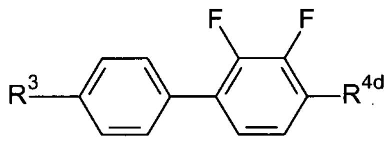
(II-2f)

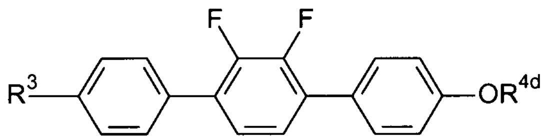
(II-2g)

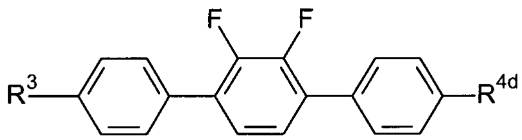
(II-2h)

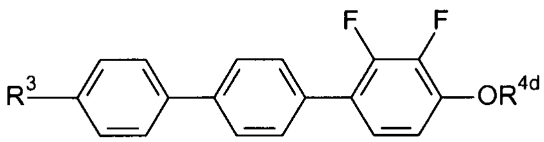
(II-2i)

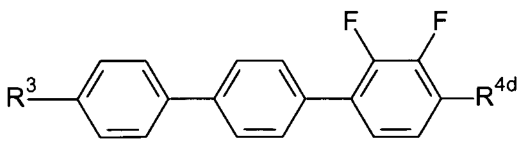
(II-2j)

In the formulas, $R^3$ is an alkyl group of 1 to 5 carbon atoms or an alkenyl group of 2 to 5 carbon atoms, and $R^{4d}$ is an alkyl group of 1 to 5 carbon atoms. Preferably, $R^3$ and $R^{4d}$ are as defined for $R^3$ and $R^4$, respectively, in general formula (II-2).

In general formulas (II-2e), (II-2g), and (II-2i), $R^3$ is preferably as defined in general formula (II-2). $R^{4d}$ is preferably an alkyl group of 1 to 3 carbon atoms, more preferably an alkyl group of 1 or 2 carbon atoms, even more preferably an alkyl group of 2 carbon atoms.

In general formulas (II-2f), (II-2h), and (II-2j), $R^3$ is preferably as defined in general formula (II-2). $R^{4d}$ is preferably an alkyl group of 1 to 3 carbon atoms, more preferably an alkyl group of 1 or 3 carbon atoms, even more preferably an alkyl group of 2 carbon atoms.

Among general formulas (II-2e) to (II-2i), general formulas (II-2e) and (II-2h) are preferred.

The compounds represented by general formula (I) and (II) are preferably present in the liquid crystal layer of

the liquid crystal display device according to the present invention in a total amount of 75% to 100% by weight, more preferably 80% to 100% by weight, even more preferably 85% to 100% by weight, still more preferably 90% to 100% by weight, most preferably 95% to 100% by weight.

The liquid crystal layer of the liquid crystal display device according to the present invention may further contain a compound represented by general formula (III).

[Chem. 11]

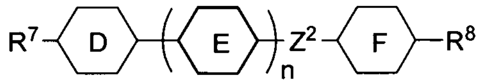 (III)

In the formula, $R^7$ and $R^8$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; D, E, and F are each independently optionally fluorinated 1,4-phenylene or trans-1,4-cyclohexylene; $Z^2$ is a single bond, $-OCH_2-$, -OCO-, $-CH_2O-$, -COO-, or -OCO-; and n is 0, 1, or 2, with the proviso that compounds represented by general formulas (I), (II-1), and (II-2) are excluded.

The compound represented by general formula (III) is preferably present in an amount of 1% to 20%, more preferably 2% to 15%, even more preferably 4% to 10%.

In general formula (III), $R^7$ is an alkyl group of 1 to 8 carbon atoms, an alkenyl group of 2 to 8 carbon atoms, an alkoxy group of 1 to 8 carbon atoms, or an alkenyloxy group of 2 to 8 carbon atoms. If D is trans-1,4-cyclohexylene, $R^7$ is preferably an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 or 3 carbon atoms, still more preferably an alkyl group of 3 carbon atoms. If D is optionally fluorinated 1,4-phenylene, $R^7$ is preferably an alkyl group of 1 to 5 carbon atoms or an alkenyl group of 4 or 5 carbon atoms, more preferably an alkyl group of 2 to 5 carbon atoms or an alkenyl group of 4 carbon atoms, even more preferably an alkyl group of 2 to 4 carbon atoms.

$R^8$ is an alkyl group of 1 to 8 carbon atoms, an alkenyl group of 2 to 8 carbon atoms, an alkoxy group of 1 to 8 carbon atoms, or an alkenyloxy group of 3 to 8 carbon atoms. If F is trans-1,4-cyclohexylene, $R^8$ is preferably an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 or 3 carbon atoms, still more preferably an alkyl group of 3 carbon atoms. If F is optionally fluorinated 1,4-phenylene, $R^8$ is preferably an alkyl group of 1 to 5 carbon atoms or an alkenyl group of 4 or 5 carbon atoms, more preferably an alkyl group of 2 to 5 carbon atoms or an alkenyl group of 4 carbon atoms, even more preferably an alkyl group of 2 to 4 carbon atoms.

If $R^7$ or $R^8$ is an alkenyl group and D or F to which it is attached is optionally fluorinated 1,4-phenylene, alkenyl groups of 4 or 5 carbon atoms having the following structures are preferred.

[Chem. 12]

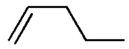 , 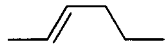

In the formulas, the right end is attached to the cyclic structure. In this case, the alkenyl group of 4 carbon atoms is more preferred.

D, E, and F are each independently optionally fluorinated 1,4-phenylene or trans-1,4-cyclohexylene, preferably 2-fluoro-1,4-phenylene, 2,3-difluoro-1,4-phenylene, 1,4-phenylene, or trans-1,4-cyclohexylene, more preferably 2-fluoro-1,4-phenylene, 2,3-difluoro-1,4-phenylene, or 1,4-phenylene, even more preferably 2,3-difluoro-1,4-phenylene or 1,4-phenylene. $Z^2$ is a single bond, $-OCH_2-$, -OCO-, $-CH_2O-$, or -COO-, preferably a single bond, - $CH_2O-$, or -COO-, more preferably a single bond.

n is 0, 1, or 2, preferably 0 or 1. If $Z^2$ is a substituent, rather than a single bond, n is preferably 1.

Among compounds represented by general formula (III) where n is 1, compounds represented by general formulas (III-1c) to (III-1e) are preferred to achieve a larger negative dielectric anisotropy, and general formulas (III-1f) to (III-1j) are preferred to achieve a faster response time.

[Chem. 13]

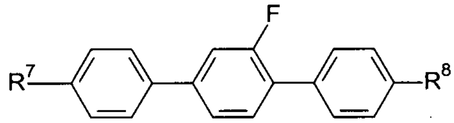

( III-1c)

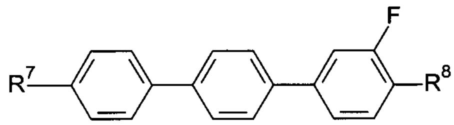

( III-1d)

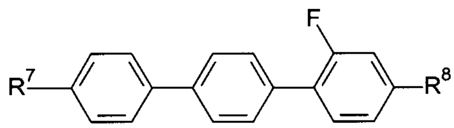

( III-1e)

[Chem. 14]

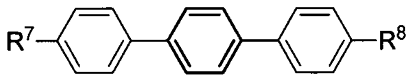

(III-1f)

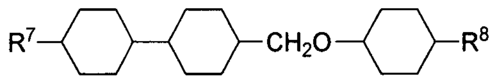

(III-1g)

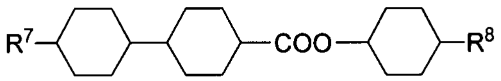

(III-1h)

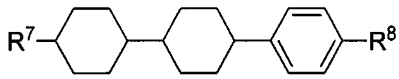

(III-1i)

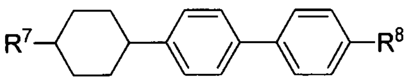

(III-1j)

In the formulas, $R^7$ and $R^8$ are each independently an alkyl group of 1 to 5 carbon atoms, an alkenyl group of 2 to 5 carbon atoms, or an alkoxy group of 1 to 5 carbon atoms, preferably as defined for $R^7$ and $R^8$, respectively, in general formula (III).

Among compounds represented by general formula (III) where n is 2, compounds represented by general formulas (III-2a) to (III-2h) are preferred to achieve a larger negative dielectric anisotropy, and general formulas (III-2j) to (111-21) are preferred to achieve a faster response time.

[Chem. 15]

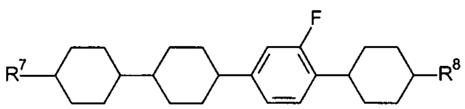

( III-2a)

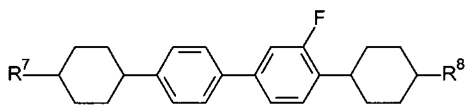

( III-2b)

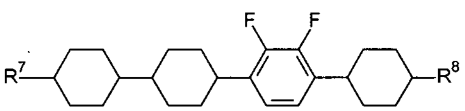

( III-2c)

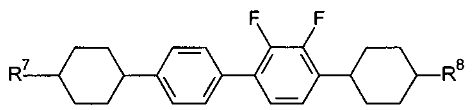

( III-2d)

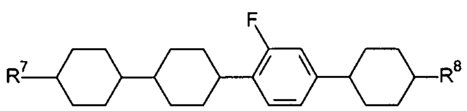

( III-2e)

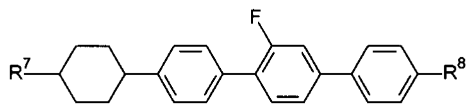

( III-2f)

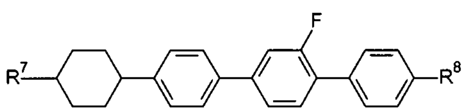

( III-2g)

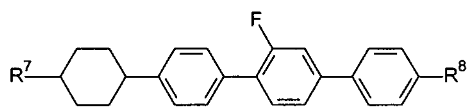

( III-2h)

[Chem. 16]

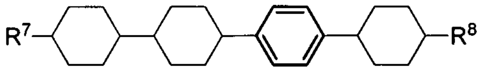 (III-2j) 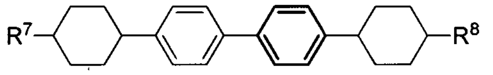 (III-2k)

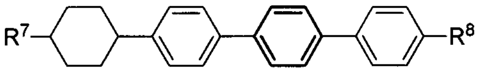 (III-2l)

In the formulas, $R^7$ and $R^8$ are each independently an alkyl group of 1 to 5 carbon atoms, an alkenyl group of 2 to 5 carbon atoms, or an alkoxy group of 1 to 5 carbon atoms, preferably as defined for $R^7$ and $R^8$, respectively, in general formula (III).

Among compounds represented by general formula (III) where n is 0, compounds represented by general formula (III-3b) are preferred to achieve a faster response time.

[Chem. 17]

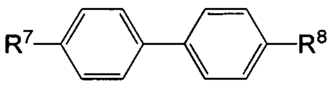 (III-3b)

In the formula, $R^7$ and $R^8$ are each independently an alkyl group of 1 to 5 carbon atoms, an alkenyl group of 2 to 5 carbon atoms, or an alkoxy group of 1 to 5 carbon atoms, preferably as defined for $R^7$ and $R^8$, respectively, in general formula (III).

$R^7$ is preferably an alkyl group of 2 to 5 carbon atoms, more preferably an alkyl group of 3 carbon atoms. $R^8$ is preferably an alkoxy group of 1 to 3 carbon atoms, more preferably an alkoxy group of 2 carbon atoms.

The liquid crystal layer of the liquid crystal display device according to the present invention can have a wide range of nematic-isotropic liquid phase transition temperature ($T_{ni}$). Preferably, the liquid crystal layer has a nematic-isotropic liquid phase transition temperature ($T_{ni}$) of 60°C to 120°C, more preferably 70°C to 100°C, even more preferably 70°C to 85°C.

The liquid crystal layer of the liquid crystal display device according to the present invention preferably has a dielectric anisotropy at 25°C of -2.0 to -6.0, more preferably -2.5 to -5.0, even more preferably -2.5 to -4.0.

The liquid crystal layer of the liquid crystal display device according to the present invention preferably has a refractive index anisotropy at 25°C of 0.08 to 0.13, more preferably 0.09 to 0.12. For small cell gaps, the liquid crystal layer preferably has a refractive index anisotropy at 25°C of 0.10 to 0.12. For large cell gaps, the liquid crystal layer preferably has a refractive index anisotropy at 25°C of 0.08 to 0.10.

The liquid crystal layer of the liquid crystal display device according to the present invention preferably has a rotational viscosity ($\gamma 1$) of 150 or less, more preferably 130 or less, even more preferably 120 or less.

The liquid crystal layer of the liquid crystal display device according to the present invention preferably has a particular value of Z, which is a function of rotational viscosity and refractive index anisotropy.

[Math. 1]

$$Z = \gamma 1 / \Delta n^2$$

In the equation, $\gamma 1$ is the rotational viscosity, and $\Delta n$ is the refractive index anisotropy. Z is preferably 13,000 or less, more preferably 12,000 or less, even more preferably 11,000 or less.

When used in an active-matrix display device, the liquid crystal layer of the liquid crystal display device according to the present invention has to have a resistivity of $10^{12}$ $\Omega \cdot m$ or more, preferably $10^{13}$ $\Omega \cdot m$, more preferably $10^{14}$ $\Omega \cdot m$ or more.

In addition to the compounds described above, the liquid crystal layer of the liquid crystal display device according to the present invention may contain other components depending on the application, including common nematic, smectic, and cholesteric liquid crystals, antioxidants, UV absorbers, and polymerizable monomers.

A preferred polymerizable monomer is a difunctional monomer represented by general formula (V).

[Chem. 18]

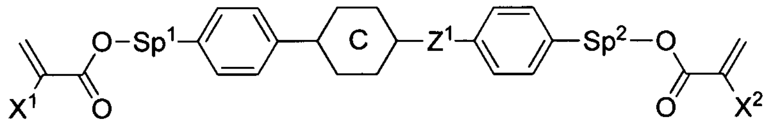

(V)

In the formula, $X^1$ and $X^2$ are each independently hydrogen or methyl; $Sp^1$ and $Sp^2$ are each independently a single bond, an alkylene group of 1 to 8 carbon atoms, or - $O-(CH_2)_s-$ (where s is an integer of 2 to 7, and the oxygen atom is attached to the aromatic ring); $Z^1$ is $-OCH_2-$, $-CH_2O-$, -COO-, -OCO-, $-CF_2O-$, $-OCF_2-$, $-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, - $CH_2-COO-$, $-CH_2-OCO-$, $-CY^1=CY^2-$ (where $Y^1$ and $Y^2$ are each independently fluorine or hydrogen), -C≡C-, or a single bond; C is 1,4-phenylene, trans-1,4-cyclohexylene, or a single bond; and any hydrogen atom in any 1,4-phenylene group in the formula is optionally replaced with fluorine.

Preferred difunctional monomers include diacrylate derivatives, where both $X^1$ and $X^2$ are hydrogen, and dimethacrylate derivatives, where both $X^1$ and $X^2$ are methyl. Also preferred are compounds where one of $X^1$ and $X^2$ is hydrogen and the other is methyl. Diacrylate derivatives have the highest rates of polymerization, dimethacrylate derivatives have the lowest rates of polymerization, and asymmetrical compounds have intermediate rates of polymerization, of which any suitable compound may be used depending on the application. Dimethacrylate derivatives are preferred for PSA display devices.

$Sp^1$ and $Sp^2$ above are each independently a single bond, an alkylene group of 1 to 8 carbon atoms, or $-O-(CH_2)_s-$. Compounds where at least one of $Sp^1$ and $Sp^2$ is a single bond are preferred for PSA display devices, including those where both of $Sp^1$ and $Sp^2$ are single bonds and those where one of $Sp^1$ and $Sp^2$ is a single bond and the other is an alkyl group of 1 to 8 carbon atoms or $-O-(CH_2)_s-$. In this case, an alkyl group of 1 to 4 carbon atoms is preferred, and s is preferably 1 to 4.

$Z^1$ is preferably $-OCH_2-$, $-CH_2O-$, -COO-, -OCO-, $-CF_2O-$, - $OCF_2-$, $-CH_2CH_2-$, $-CF_2CF_2-$, or a single bond, more preferably - COO-, -OCO-, or a single bond, even more preferably a single bond.

C is 1,4-phenylene or trans-1,4-cyclohexylene where any hydrogen atom is optionally replaced with fluorine, or a single bond. Preferably, C is 1,4-phenylene or a single bond. If C is a cyclic structure, rather than a single bond, $Z^1$ is also preferably a linking group, rather than a single bond. If C is a single bond, $Z^1$ is preferably a single bond.

With these points in mind, specific preferred cyclic structures between $Sp^1$ and $Sp^2$ in general formula (V) include the following structures.

If C in general formula (V) is a single bond, preferred cyclic structures composed of two rings include those represented by formulas (Va-1) to (Va-5) below, more preferably formulas (Va-1) to (Va-3), even more preferably formula (Va-1).

[Chem. 19]

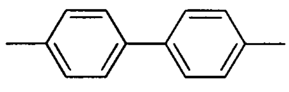

(Va-1)

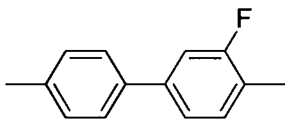

(Va-2)

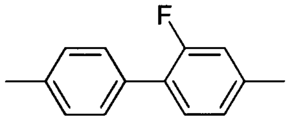

(Va-3)

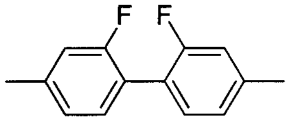

(Va-4)

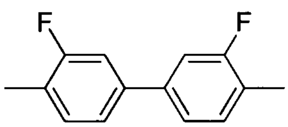

(Va-5)

In the formulas, both ends are attached to $Sp^1$ and $Sp^2$.

Polymerizable compounds having these backbones have optimal anchoring force for PSA display devices after polymerization, which results in good alignment with little or no display unevenness.

With the above in mind, preferred polymerizable monomers include those represented by general formulas (V-1) to (V-4), most preferably general formula (V-2).

[Chem. 20]

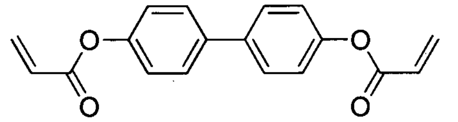

(V-1)

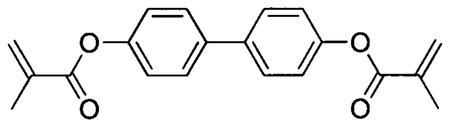

(V-2)

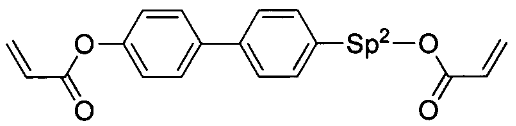

(V-3)

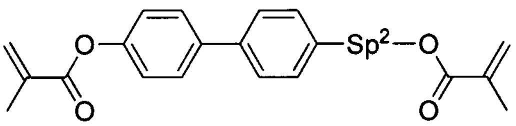

(V-4)

In the formulas, $Sp^2$ is an alkylene group of 2 to 5 carbon atoms.

Although a polymerizable monomer, if used, polymerizes without a polymerization initiator, a polymerization initiator may be added to promote the polymerization. Examples of polymerization initiators include benzoin ethers, benzophenones, acetophenones, benzyl ketals, and acylphosphine oxides. A stabilizer may also be added to improve the storage stability. Examples of stabilizers that can be used include hydroquinones, hydroquinone monoalkyl ethers, tert-butylcatechols, pyrogallols, thiophenols, nitro compounds, β-naphthylamines, β-naphthols, and nitroso compounds.

The liquid crystal layer according to the present invention is useful for liquid crystal display devices such as active-matrix liquid crystal display devices (AM-LCDs), twisted nematic (TN) liquid crystal display devices, super-twisted nematic liquid crystal display devices (STN-LCDs), OCB-LCDs, and in-plane switching liquid crystal display devices (IPS-LCDs). In particular, the liquid crystal layer according to the present invention can be used for AM-LCDs such as PSA, PSVA, VA, IPS, and ECB liquid crystal display devices.

Sealant

The sealant used in the liquid crystal display device according to the present invention is formed of a cured product of a curable resin composition containing a compound containing at least one epoxy group per molecule and having a weight average molecular weight of 300 to 10,000.

Examples of compounds containing at least one epoxy group per molecule include novolac epoxy resins and bisphenol epoxy resins. Specific preferred examples include biphenyl epoxy resins, naphthalene epoxy resins, tris(hydroxyphenyl)alkyl epoxy resins, and tetrakis(hydroxyphenyl)alkyl epoxy resins. More specific examples include bisphenol A epoxy resins, bisphenol E epoxy resins, bisphenol F epoxy resins, bisphenol S epoxy resins, 2,2'-diallyl bisphenol A epoxy resins, hydrogenated bisphenol epoxy resins, polyoxypropylene bisphenol A epoxy resins, propylene oxide adducts of bisphenol A epoxy resins, resorcinol epoxy resins, biphenyl epoxy resins, sulfide epoxy resins, diphenyl ether epoxy resins, dicyclopentadiene epoxy resins, naphthalene epoxy resins, phenol novolac epoxy resins, cresol novolac epoxy resins, trisphenol novolac epoxy resins, dicyclopentadiene novolac epoxy resins, biphenyl novolac epoxy resins, naphthalene phenol novolac epoxy resins, glycidylamine epoxy resins, alkyl polyol epoxy resins, rubber-modified epoxy resins, glycidyl esters, and bisphenol A episulfide resins. Preferred among these are bisphenol A epoxy resins, bisphenol E epoxy resins, bisphenol F epoxy resins, resorcinol epoxy resins, phenol novolac epoxy resins, and diphenyl ether epoxy resins.

Examples of commercially available epoxy compounds include bisphenol A epoxy resins such as jER828EL,

jER1004 (available from Mitsubishi Chemical Corporation), and Epiclon 850-S (available from DIC Corporation); bisphenol F epoxy resins such as jER806 and jER4004 (available from Mitsubishi Chemical Corporation); bisphenol E epoxy resins such as R-710; bisphenol S epoxy resins such as Epiclon EXA1514 (available from DIC Corporation); 2,2'-diallyl bisphenol A epoxy resins such as RE-810NM (available from Nippon Kayaku Co., Ltd.); hydrogenated bisphenol epoxy resins such as Epiclon EXA7015 (available from DIC Corporation); propylene oxide adducts of bisphenol A epoxy resins such as EP-4000S (available from Adeka Corporation); resorcinol epoxy resins such as EX-201 (available from Nagase ChemteX Corporation); biphenyl epoxy resins such as jERYX-4000H (available from Mitsubishi Chemical Corporation); sulfide epoxy resins such as YSLV-50TE (available from Nippon Steel Chemical Co., Ltd.); biphenyl ether epoxy resins such as YSLV-80DE (available from Nippon Steel Chemical Co., Ltd.); dicyclopentadiene epoxy resins such as EP-4088S (available from Adeka Corporation); naphthalene epoxy resins such as Epiclon HP4032 and Epiclon EXA-4700 (available from DIC Corporation); phenol novolac epoxy resins such as Epiclon N-740, Epiclon N-770, Epiclon N-775 (available from DIC Corporation), jER152, and jER154 (available from Mitsubishi Chemical Corporation); o-cresol novolac epoxy resins such as Epiclon N-670-EXP-S (available from DIC Corporation); cresol novolac epoxy resins such as Epiclon N660, Epiclon N665, Epiclon N670, Epiclon N673, Epiclon N680, Epiclon N695, Epiclon N665EXP, and Epiclon N672EXP (available from DIC Corporation); dicyclopentadiene novolac epoxy resins such as Epiclon HP7200 (available from DIC Corporation); biphenyl novolac epoxy resins such as NC-3000P (available from Nippon Kayaku Co., Ltd.); naphthalene phenol novolac epoxy resins such as ESN-165S (available from Nippon Steel Chemical Co., Ltd.); glycidylamine epoxy resins such as jER630 (available from Mitsubishi Chemical Corporation), Epiclon 430 (available from DIC Corporation), and TETRAD-X (available from Mitsubishi Gas Chemical Company, Inc.); alkyl polyol epoxy resins such as ZX-1542 (available from Nippon Steel Chemical Co., Ltd.), Epiclon 726 (available from DIC Corporation), Epolight 80MFA (available from Kyoeisha Chemical Co., Ltd.), and Denacol EX-611, (available from Nagase ChemteX Corporation); rubber-modified epoxy resins such as YR-450, YR-207 (available from Nippon Steel Chemical Co., Ltd.), and Epolead PB (available from Daicel Corporation); glycidyl esters such as Denacol EX-147 (available from Nagase ChemteX Corporation); bisphenol A episulfide resins such as jERYL-7000 (available from Mitsubishi Chemical Corporation); and other compounds such as YDC-1312, YSLV-80XY, YSLV-90CR (available from Nippon Steel Chemical Co., Ltd.), XAC4151 (available from Asahi Kasei Corporation), jER1031, jER1032 (available from Mitsubishi Chemical Corporation), EXA-7120 (available from DIC Corporation), and TEPIC (available from Nissan Chemical Industries, Ltd.).

The compound containing at least one epoxy group per molecule has a weight average molecular weight of 300 to 10,000. A compound having a weight average molecular weight of 300 or more is preferred since it is unlikely to contaminate the liquid crystal. A compound having a weight average molecular weight of 10,000 or less is preferred since it facilitates the control of the sealant viscosity. The lower limit of the weight average molecular weight is preferably 500 or more, more preferably 1,000 or more. The upper limit of the weight average molecular weight is preferably 7,000 or less, more preferably 5,000 or less, even more preferably 3,000 or less.

The curable resin composition containing the compound containing at least one epoxy group per molecule has a hydrogen-bonding functional group value of $1 \times 10^{-4}$ to $5 \times 10^{-2}$ mol/g, preferably $5 \times 10^{-4}$ to $1 \times 10^{-2}$ mol/g, more preferably $1 \times 10^{-3}$ to $5 \times 10^{-3}$ mol/g. Such a curable resin composition is preferred since it forms intramolecular hydrogen bonds and thus, when used as a sealant, does not readily dissolve into the liquid crystal both before and after curing. This reduces the risk of contamination of the liquid crystal and thus reduces the problem of display defects such as white spots, alignment unevenness, and image-sticking.

The hydrogen bonds are formed by compounds containing a hydrogen-bonding functional group or residue. Examples of such compounds include those containing functional groups such as -OH, -SH, $-NH_2$, -NHR (where R is an aromatic or aliphatic hydrocarbon group or a derivative thereof), -COOH, $-CONH_2$, and -NHOH groups and those containing residues such as -NHCO-, -NH-, -CONHCO-, and -NH-NH- linkages in the molecule. If the curable resin composition contains a single compound containing hydrogen-bonding functional groups, the hydrogen-bonding functional group value is calculated by the following equation (equation (1)):

Hydrogen-bonding functional group value (HX) (mol/g) = (number of hydrogen-bonding functional groups per molecule of Compound X) / (molecular weight of Compound X) (equation 1)

If the curable resin composition contains a mixture of resins containing hydrogen-bonding functional groups, the hydrogen-bonding functional group value may be calculated by taking into account the contents per unit weight (weight fractions) of the individual compounds containing hydrogen-bonding functional groups. For example, if the compounds containing hydrogen-bonding functional groups are Compounds A, B, and C, the hydrogen-bonding functional group value is represented by the following equation (equation (2)).

$$\text{Hydrogen-bonding functional group value } (H_{ABC}) = H_A P_A + H_B P_B + H_C P_C \quad \text{(equation 2)}$$

where $P\alpha$ is the weight fraction of Compound $\alpha$.

A curable resin composition having a hydrogen-bonding functional group value of less than $1 \times 10^{-4}$ mol/g readily dissolves into the liquid crystal and thus disturbs the alignment of the liquid crystal. A curable resin composition having a hydrogen-bonding functional group value of more than $5 \times 10^{-2}$ mol/g forms a cured product with high moisture permeability through which moisture readily enters the liquid crystal display device.

The curable resin composition may contain a single compound containing hydrogen-bonding functional groups that itself has a hydrogen-bonding functional group value within the above range or may contain a mixture of compounds containing hydrogen-bonding functional groups that together have a hydrogen-bonding functional group value within the above range. That is, the curable resin composition may contain a single compound or a mixture of compounds containing hydrogen-bonding functional groups that have an average hydrogen-bonding functional group value within the above range.

The curable resin composition containing the compound containing at least one epoxy group per molecule preferably has a volume resistivity of $1 \times 10^{13}$ $\Omega$·cm or more after curing. A volume resistivity of less than $1 \times 10^{13}$ $\Omega$·cm indicates that the sealant contains ionic impurities. If such a curable resin composition is used as a sealant, ionic impurities dissolve into the liquid crystal while a voltage is being applied. This decreases the voltage holding ratio (VHR) and increases the ionic density of the liquid crystal layer and causes display defects such as white spots, alignment unevenness, and image-sticking.

The curable resin composition containing the compound containing at least one epoxy group per molecule preferably has a resistivity of $1.0 \times 10^6$ to $1.0 \times 10^{10}$ $\Omega$·cm before curing. A curable resin composition having a resistivity of less than $1.0 \times 10^6$ $\Omega$·cm before curing, when used as a sealant, dissolves into the liquid crystal. This decreases the voltage holding ratio (VHR) and increases the ionic density of the liquid crystal layer and causes display defects such as white spots, alignment unevenness, and image-sticking. A curable resin composition having a resistivity of more than $1.0 \times 10^{10}$ $\Omega$·cm before curing may have poor adhesion to substrates.

The compound containing at least one epoxy group per molecule preferably contains at least one ethylenically unsaturated bond per molecule. Preferred among such compounds are those containing at least one epoxy group and at least one (meth)acrylic group per molecule.

Examples of compounds containing at least one epoxy group and at least one (meth)acrylic group per molecule include, but not limited to, (meth)acrylic-modified epoxy resins and urethane-modified (meth)acrylic epoxy resins.

1) (Meth)acrylic-Modified Epoxy Resins

(Meth)acrylic-modified epoxy resins may be prepared by any method, for example, by reacting (meth)acrylic acid with an epoxy resin in the presence of a basic catalyst in a usual manner.

Examples of (meth)acrylic-modified epoxy resins include partial (meth)acrylates of epoxy resins such as novolac epoxy resins and bisphenol epoxy resins. Preferred epoxy resins include biphenyl epoxy resins, naphthalene epoxy resins, tris(hydroxyphenyl)alkyl epoxy resins, and tetrakis(hydroxyphenyl)alkyl epoxy resins.

Specifically, for example, a (meth)acrylic-modified epoxy resin may be prepared by mixing 360 parts by weight of a resorcinol epoxy resin (EX-201 available from Nagase ChemteX Corporation), 2 parts by weight of p-methoxyphenol, serving as a polymerization inhibitor, 2 parts by weight of triethylamine, serving as a reaction catalyst, and 210 parts by weight of acrylic acid and reacting the mixture with stirring under reflux at 90°C for five hours while supplying air.

Examples of commercially available (meth)acrylic-modified epoxy resins include Ebecryl 860, Ebecryl 1561, Ebecryl 3700, Ebecryl 3600, Ebecryl 3701, Ebecryl 3703, Ebecryl 3200, Ebecryl 3201, Ebecryl 3702, Ebecryl 3412, Ebecryl 860, Ebecryl RDX63182, Ebecryl 6040, Ebecryl 3800 (available from Daicel-Cytec Co., Ltd.), EA-1020, EA-1010, EA-5520, EA-5323, EA-CHD, EMA-1020 (available from Shin Nakamura Chemical Co., Ltd.), Epoxy Ester M-600A, Epoxy Ester 40EM, Epoxy Ester 70PA, Epoxy Ester 200PA, Epoxy Ester 80MFA, Epoxy Ester 3002M, Epoxy Ester 3002A, Epoxy Ester 1600A, Epoxy Ester 3000M, Epoxy Ester 3000A, Epoxy Ester 200EA, Epoxy Ester 400EA (available from Kyoeisha Chemical Co., Ltd.), Denacol Acrylate DA-141, Denacol Acrylate DA-314, and Denacol Acrylate DA-911 (available from Nagase ChemteX Corporation).

2) Urethane-Modified (Meth)Acrylic Epoxy Resins

Urethane-modified (meth)acrylic epoxy resins may be prepared, for example, by reacting a polyol with a di- or higher functional isocyanate and then reacting the resulting compound with a hydroxyl-containing (meth)acrylic monomer and glycidol, by reacting a di- or higher functional isocyanate with a hydroxyl-containing (meth)acrylic monomer and glycidol without a polyol, or by reacting an isocyanate-containing (meth)acrylate with glycidol. Specifically, for example, a urethane-modified (meth)acrylic epoxy resin may be prepared by reacting 1 mol of trimethylolpropane and 3 mol of isophorone diisocyanate in the presence of a tin-based catalyst and reacting the isocyanate groups remaining in the resulting compound with hydroxyethyl acrylate, which is a hydroxyl-containing acrylic monomer, and glycidol, which is a hydroxyl-containing epoxy compound.

Examples of polyols include, but not limited to, ethylene glycol, glycerol, sorbitol, trimethylolpropane, and (poly)propylene glycol.

Examples of di- or higher functional isocyanates include, but not limited to, isophorone diisocyanate, 2,4-tolylene diisocyanate, 2,6-tolylene diisocyanate, hexamethylene diisocyanate, trimethylhexamethylene diisocyanate, diphenylmethane 4,4'-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, triphenylmethane triisocyanate, tris(isocyanatophenyl) thiophosphate, tetramethylxylene diisocyanate, and 1,6,10-undecane triisocyanate.

Examples of hydroxyl-containing (meth)acrylic monomers include, but not limited to, monomers containing one hydroxyl group in the molecule, including hydroxyethyl (meth)acrylate, hydroxypropyl (meth)acrylate, and hydroxybutyl (meth)acrylate; and monomers containing two or more hydroxyl groups in the molecule, including epoxy (meth)acrylates such as bisphenol A-modified epoxy (meth)acrylate. These may be used alone or in combination.

The compound containing at least one epoxy group and at least one (meth)acrylic group per molecule preferably contains a hydrogen-bonding group, for example, a hydroxyl group and/or a urethane linkage, to reduce the compatibility with the liquid crystal and thereby to eliminate contamination. This reduces the problem of display defects such as white spots, alignment unevenness, and image-sticking.

The compound containing at least one epoxy group and at least one (meth)acrylic group per molecule preferably contains at least one molecular backbone selected from biphenyl backbones, naphthalene backbones, bisphenol backbones, and partial (meth)acrylates of novolac epoxy resins. This improves the heat resistance of the curable resin composition according to the present invention.

The curable resin composition containing the compound containing at least one epoxy group per molecule may contain a compound containing an ethylenically unsaturated bond, preferably a compound containing a (meth)acryloyloxy group. Examples of compounds containing a (meth)acryloyloxy group include esters obtained by reacting (meth)acrylic acid with a hydroxyl-containing compound and urethane (meth)acrylates obtained by reacting an isocyanate with a hydroxyl-containing (meth)acrylic acid derivative.

(1) Esters Obtained by Reacting (Meth)acrylic Acid with Hydroxyl-Containing Compound

Examples of monofunctional esters obtained by reacting (meth)acrylic acid with a hydroxyl-containing compound include, but not limited to, 2-hydroxyethyl (meth)acrylate, 2-hydroxypropyl (meth)acrylate, 4-hydroxybutyl (meth)acrylate, 2-hydroxybutyl (meth)acrylate, isobutyl (meth)acrylate, t-butyl (meth)acrylate, isooctyl (meth)acrylate, lauryl (meth)acrylate, stearyl (meth)acrylate, isobornyl (meth)acrylate, cyclohexyl (meth)acrylate, 2-methoxyethyl (meth)acrylate, methoxyethylene glycol (meth)acrylate, 2-ethoxyethyl (meth)acrylate, tetrahydrofurfuryl (meth)acrylate, benzyl (meth)acrylate, ethylcarbitol (meth)acrylate, phenoxyethyl (meth)acrylate, phenoxy diethylene glycol (meth)acrylate, phenoxy polyethylene glycol (meth)acrylate, methoxy polyethylene glycol (meth)acrylate, 2,2,2-trifluoroethyl (meth)acrylate, 2,2,3,3-tetrafluoropropyl (meth)acrylate, 1H,1H,5H-octafluoropentyl (meth)acrylate, imide (meth)acrylate, methyl (meth)acrylate, ethyl (meth)acrylate, n-butyl (meth)acrylate, propyl (meth)acrylate, n-butyl (meth)acrylate, cyclohexyl (meth)acrylate, 2-ethylhexyl (meth)acrylate, n-octyl (meth)acrylate, isononyl (meth)acrylate, isomyristyl (meth)acrylate, 2-butoxyethyl (meth)acrylate, 2-phenoxyethyl (meth)acrylate, bicyclopentenyl (meth)acrylate, isodecyl (meth)acrylate, diethylaminoethyl (meth)acrylate, dimethylaminoethyl (meth)acrylate, 2-(meth)acryloyloxyethylsuccinic acid, 2-(meth)acryloyloxyethylhexahydrophthalic acid, 2-(meth)acryloyloxyethyl 2-hydroxypropyl phthalate, glycidyl (meth)acrylate, and 2-(meth)acryloyloxyethyl phosphate.

Examples of difunctional esters obtained by reacting (meth)acrylic acid with a hydroxyl-containing compound include, but not limited to, 1,4-butanediol di(meth)acrylate, 1,3-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, dipropylene glycol di(meth)acrylate, tripropylene glycol di(meth)acrylate, polypropylene glycol di(meth)acrylate, ethylene glycol di(meth)acrylate, diethylene glycol di(meth)acrylate, tetraethylene glycol di(meth)acrylate, polyethylene glycol di(meth)acrylate, propylene oxide adducts of bisphenol A di(meth)acrylate, ethylene oxide adducts of bisphenol A di(meth)acrylate, ethylene oxide adducts of bisphenol F di(meth)acrylate, dimethyloldicyclopentadiene di(meth)acrylate, 1,3-butylene glycol di(meth)acrylate, neopentyl glycol di(meth)acrylate, ethylene-oxide-modified isocyanurate di(meth)acrylate, 2-hydroxy-3-acryloyloxypropyl di(meth)acrylate, carbonate diol di(meth)acrylate, polyether diol di(meth)acrylate, polyester diol di(meth)acrylate, polycaprolactone diol di(meth)acrylate, and polybutadiene diol di(meth)acrylate.

Examples of tri- and higher functional esters obtained by reacting (meth)acrylic acid with a hydroxyl-containing compound include, but not limited to, pentaerythritol tri(meth)acrylate, trimethylolpropane tri(meth)acrylate, propylene oxide adducts of trimethylolpropane tri(meth)acrylate, ethylene oxide adducts of trimethylolpropane tri(meth)acrylate, caprolactone-modified trimethylolpropane tri(meth)acrylate, ethylene oxide adducts of isocyanurate tri(meth)acrylate, dipentaerythritol penta(meth)acrylate, dipentaerythritol hexa(meth)acrylate, ditrimethylolpropane tetra(meth)acrylate, pentaerythritol tetra(meth)acrylate, glycerol tri(meth)acrylate, propylene oxide adducts of glycerol tri(meth)acrylate, and tris(meth)acryloyloxyethyl phosphate.

(2) Urethane (Meth)acrylates Obtained by Reacting Isocyanate with Hydroxyl-Containing (Meth)acrylic Acid Derivative

(Meth)acrylates obtained by reacting an isocyanate with a hydroxyl-containing (meth)acrylic acid derivative may be prepared by any method, for example, by reacting one equivalent of a compound containing two isocyanate groups with two equivalents of a hydroxyl-containing (meth)acrylic acid derivative in the presence of a tin compound serving as a catalyst.

Examples of isocyanates that can be used as a raw material for urethane (meth)acrylates obtained by reacting an isocyanate with a hydroxyl-containing (meth)acrylic acid derivative include, but not limited to, isophorone diisocyanate, 2,4-tolylene diisocyanate, 2,6-tolylene diisocyanate, hexamethylene diisocyanate, trimethylhexamethylene diisocyanate, diphenylmethane 4,4'-diisocyanate (MDI), hydrogenated MDI, polymeric MDI, 1,5-naphthalene diisocyanate, norbornane diisocyanate, tolidine diisocyanate, xylylene diisocyanate (XDI), hydrogenated XDI, lysine diisocyanate, triphenylmethane triisocyanate, tris(isocyanatophenyl) thiophosphate, tetramethylxylene diisocyanate, and 1,6,10-undecane triisocyanate.

Other examples of isocyanates that can be used as a raw material for urethane (meth)acrylates obtained by reacting an isocyanate with a hydroxyl-containing (meth)acrylic acid derivative include chain-extended isocyanates obtained by reacting, with excess isocyanate, polyols such as ethylene glycol, glycerol, sorbitol, trimethylolpropane, (poly)propylene glycol, carbonate diols, polyether diols, polyester diols, and polycaprolactone diols.

Examples of hydroxyl-containing (meth)acrylic acid derivatives include, but not limited to, commercially available compounds such as 2-hydroxyethyl (meth)acrylate, 2-hydroxypropyl (meth)acrylate, 4-hydroxybutyl (meth)acrylate, and 2-hydroxybutyl (meth)acrylate; mono(meth)acrylates of dihydric alcohols such as ethylene glycol, propylene glycol, 1,3-propanediol, 1,3-butanediol, 1,4-butanediol, and polyethylene glycol; mono(meth)acrylates and di(meth)acrylates of trihydric alcohols such as trimethylolethane, trimethylolpropane, and glycerol; and epoxy (meth)acrylates such as bisphenol A-modified epoxy (meth)acrylates.

Specifically, for example, a urethane (meth)acrylate may be prepared by mixing 134 parts by weight of trimethylolpropane, 0.2 part by weight of BHT, serving as a polymerization inhibitor, 0.01 part by weight of dibutyltin dilaurate, serving as a reaction catalyst, and 666 parts by weight of isophorone diisocyanate, reacting the mixture with stirring under reflux at 60°C for two hours, adding 51 parts by weight of 2-hydroxyethyl acrylate, and reacting the mixture with stirring under reflux at 90°C for two hours while supplying air.

Examples of commercially available urethane (meth)acrylates include M-1100, M-1200, M-1210, M-1600 (available from Toagosei Co., Ltd.), Ebecryl 230, Ebecryl 270, Ebecryl 4858, Ebecryl 8402, Ebecryl 8804, Ebecryl 8803, Ebecryl 8807, Ebecryl 9260, Ebecryl 1290, Ebecryl 5129, Ebecryl 4842, Ebecryl 210, Ebecryl 4827, Ebecryl 6700, Ebecryl 220, Ebecryl 2220 (available from Daicel-Cytec Co., Ltd.), Art Resin UN-9000H, Art Resin UN-9000A, Art Resin UN-7100, Art Resin UN-1255, Art Resin UN-330, Art Resin UN-3320HB, Art Resin UN-1200TPK, Art Resin SH-500B (available from Negami Chemical Industrial Co., Ltd.), U-122P, U-108A, U-340P, U-4HA, U-6HA, U-324A, U-15HA, UA-5201P, UA-W2A, U-1084A, U-6LPA, U-2HA, U-2PHA, UA-4100, UA-7100, UA-4200, UA-4400, UA-340P, U-3HA, UA-7200, U-2061BA, U-10H, U-122A, U-340A, U-108, U-6H, UA-4000 (available from Shin Nakamura Chemical Co., Ltd.), AH-600, AT-600, UA-306H, AI-600, UA-101T, UA-101I, UA-306T, and UA-306I.

Thermally curable sealants have a problem in that the viscosity of the resin used as a raw material decreases upon heating. This results in dissolution of ionic impurities from the sealant into the liquid crystal in contact with the sealant and leakage of the liquid crystal due to deformation of the seal pattern. To reduce the decrease in resin viscosity upon heating, it is effective to improve the curing rate so that the sealant can be quickly cured before its viscosity decreases. As discussed above, it is preferred that the curable resin composition according to the present invention contain a compound containing an ethylenically unsaturated bond. More preferably, the curable resin composition contains a combination of a (meth)acrylic-containing resin, which can react with radicals, and (2) a thermal radical polymerization initiator and has a carbon-carbon double bond content of 0.002 to 0.006 mol/g. This allows adjacent carbon-carbon double bonds to react with each other quickly and thus improves the curing rate of the resin composition, which

results in good leakage resistance.

Although a curable resin composition having a carbon-carbon double bond content of more than 0.006 mol/g has a higher curing rate, the resulting cured product may have a higher crosslink density and may thus have a lower adhesion strength with the substrates that form liquid crystal display panels. A curable resin composition having a carbon-carbon double bond content of less than 0.002 mol/g has a low curing rate. Thus, a resin composition having a carbon-carbon double bond content within the above range has a good balance of curability and adhesion to substrates. A carbon-carbon double bond content of 0.002 to 0.003 mol/g is preferred to achieve a better balance of curability and adhesion to substrates.

If the curable resin composition contains a mixture of resins containing carbon-carbon double bonds, the carbon-carbon double bond content may be calculated by taking into account the contents per unit weight (weight fractions) of the individual compounds containing carbon-carbon double bonds. For example, if the compounds containing carbon-carbon double bonds are Compounds A, B, and C, the carbon-carbon double bond content is represented by the following equation (equation (3)):

$$\text{Carbon-carbon double bond content } (N_{ABC}) = N_A P_A + N_B P_B + N_C P_C \quad \text{(equation 3)}$$

where $N\alpha$ is the carbon-carbon double bond content (mol/g) of Compound $\alpha$, and $P\alpha$ is the weight fraction of Compound $\alpha$ in Compounds A, B, and C.

The carbon-carbon double bond content of a curable resin can be calculated as the number of carbon-carbon double bonds in the molecule divided by the molecular weight of the resin and is expressed in mol/g. The molecular weight of each curing resin is preferably measured by GPC using polystyrene standards. Although the number average molecular weight and the weight average molecular weight are calculated in this case, the carbon-carbon double bond content is preferably calculated from the number average molecular weight.

The curable resin composition may contain a single resin that itself has a carbon-carbon double bond content within the above range or may contain a mixture of resins that together have a carbon-carbon double bond content within the above range. That is, the curable resin composition may contain a single compound or a mixture of compounds having an average carbon-carbon double bond within the above range.

The curable resin composition according to the present invention may contain a compound containing at least one epoxy group and at least one (meth)acrylic group per molecule or may contain a compound containing a (meth)acryloyloxy group. In this case, the curable resin composition preferably has an epoxy-to-(meth)acrylic mixing ratio of 15:85 to 95:5, more preferably 25:75 to 90:10, even more preferably 25:75 to 70:30. A curable resin composition having a (meth)acrylic equivalent ratio of less than 30 may have low reactivity and thus, when used as a sealant, may fail to cure quickly upon heating after coating and may dissolve considerably into the liquid crystal. A curable resin composition having a (meth)acrylic equivalent ratio of more than 85 may have insufficient adhesion and moisture resistance. More preferably, the curable resin composition has an epoxy-to-(meth)acrylic equivalent ratio of 50:50 to 30:70.

The curable resin composition containing the compound containing at least one epoxy group per molecule preferably contains a thermal curing agent. The thermal curing agent is used to react and crosslink the epoxy groups and/or ethylenically unsaturated bonds in the curable resin composition upon heating, thereby improving the adhesion and moisture resistance of the curable resin composition after curing.

Although any thermal curing agent may be used to react epoxy groups, it is preferred to use a latent thermal curing agent having a melting point of 100°C or higher. A thermal curing agent having a melting point of 100°C or lower may noticeably decrease the storage stability.

If the curable resin composition contains a compound containing at least one ethylenically unsaturated bond such as a (meth)acrylic group per molecule, it preferably contains a thermal radical initiator. The thermal radical initiator is used to react and crosslink the ethylenically unsaturated bonds in the curable resin composition upon heating. In particular, the thermal radical initiator contributes to improving the curing rate and serves to reduce the permeation of ionic impurities. Although any thermal radical initiator may be used, it is preferred to use a thermal radical initiator having a 10-hour half-life temperature of 40°C to 80°C. A thermal radical initiator having a 10-hour half-life temperature of 40°C or lower may noticeably decrease the storage stability.

Examples of thermal curing agents include dihydrazides such as 1,3-bis[hydrazinocarbonoethyl-5-isopropylhydantoin] (melting point: 120°C), adipic acid dihydrazide (melting point: 181°C), 7,11-octadecadiene-1,18-dicarbohydrazide (melting point: 160°C), dodecanedioic acid dihydrazide (melting point: 190°C), and sebacic acid dihydrazide (melting point: 189°C); dicyandiamides such as dicyandiamide (melting point: 209°C); guanidines; imidazoles such as 1-cyanoethyl-2-phenylimidazole, N-[2-(2-methyl-1-imidazolyl)ethyl]urea, 2,4-diamino-6-[2'-methylimidazolyl-(1')]-ethyl-s-triazine, N,N'-bis(2-methyl-1-imidazolylethyl)urea, N,N'-(2-methyl-1-imidazolylethyl)-adipamide, 2-phenyl-4-methyl-5-hydroxymethylimidazole, 2-phenyl-4,5-dihydroxymethylimidazole, 2-hydroxymethylimidazole (molecular weight: 98.1,

melting point: 115°C), 2-phenyl-4,5-dihydroxymethylimidazole (molecular weight: 204, solid, melting point: over 230°C (degraded)), and 2-methylimidazole (molecular weight: 82, solid, melting point: 137°C to 145°C), preferably those containing a hydroxyl group, which reduces the dissolution of the sealant into the liquid crystal; acid anhydrides such as modified aliphatic polyamines, tetrahydrophthalic anhydride, and ethylene glycol bis(anhydrotrimellitate); and phenol compounds such as adducts of various amines and epoxy resins, phenol novolac resins, cresol novolac resins, and xyloc novolac resins. These may be used alone or in combination.

If the compound containing at least one (meth)acrylic group and at least one epoxy group per molecule is an acrylic-modified epoxy resin, the reactivity of the acrylic epoxy resin varies greatly depending on the structure. Whereas urethane-modified epoxy resins have high stability and thus provide good storage stability when used in combination with highly reactive thermal curing agents, (Meth)acrylic-modified epoxy resins have high reactivity and are therefore preferably used in combination with less reactive thermal curing agents having melting points of 100°C or higher.

The thermal curing agent is preferably added in an amount of 5 to 60 parts by weight, more preferably 10 to 50 parts by weight, per 100 parts by weight of the curable compound. If the thermal curing agent is added in an amount outside this range, the resulting cured product may have low adhesion and chemical resistance. This may result in an earlier decrease in the characteristics of the liquid crystal in a high-temperature high-humidity operation test.

A preferred thermal curing agent is a coated thermal curing agent, described below. The coated thermal curing agent according to the present invention can be used to obtain a one-component sealant with significantly high storage stability.

Specifically, the coated thermal curing agent, which is composed of solid thermal curing agent particles coated with fine particles that are poorly volatile and poorly soluble in organic materials, can be used to obtain a sealant containing a curing agent with high storage stability.

As used herein, the term "solid thermal curing agent" refers to a curing agent that is solid at room temperature and that melts or softens upon heating and starts reacting with a curable resin. The solid thermal curing agent may be any thermal curing agent having a melting point or softening point higher than room temperature. Examples of solid thermal curing agents include solid amines, phenol compounds, and acid anhydrides. Particularly preferred are solid amines, which have good reactivity at low temperature.

The term "solid amine" refers to a solid compound having one or more primary to tertiary amino groups in the molecule. Examples of solid amines include aromatic amines such as m-phenylenediamine and diaminodiphenylmethane; imidazoles such as 2-methylimidazole, 1,2-dimethylimidazole, and 1-cyanoethyl-2-methylimidazole; imidazolines such as 2-methylimidazoline; and dihydrazides such as sebacic acid dihydrazide and isophthalic acid dihydrazide. Examples of commercially available solid amines include amine adducts and dicyandiamides such as Amicure PN-23 and Amicure MY-24 (available from Ajinomoto Fine-Techno Co., Inc.).

Examples of polyhydric phenol compounds include polyphenols and novolac phenol resins. Examples of commercially available polyhydric phenol compounds include jERCURE 170, jERCURE YL6065, and jERCURE MP402FPI (available from Mitsubishi Chemical Corporation).

Examples of acid anhydrides include glycerol bis(anhydrotrimellitate), ethylene glycol bis(anhydrotrimellitate), tetrahydrophthalic anhydride, hexahydrophthalic anhydride, 4-methylhexahydrophthalic anhydride, and 3-methyltetrahydrophthalic anhydride. Examples of commercially available acid anhydrides include jERCURE YH-306 and YH-307 (available from Mitsubishi Chemical Corporation).

The solid thermal curing agent particles preferably, but not necessarily, have an average particle size of 0.1 to 50 μm. Solid thermal curing agent particles having an average particle size of less than 0.1 μm may be inefficiently coated with the fine particles. Solid thermal curing agent particles having an average particle size of more than 50 μm, when added to a sealant, may settle during storage and may unevenly cure the resin. More preferably, the solid thermal curing agent particles have an average particle size of 0.5 to 10 μm.

Examples of fine particles for coating the surface of the solid thermal curing agent particles include oxides, hydroxides, and halides of silicon, aluminum, titanium, iron, manganese, and magnesium as well as styrene beads and rubber particles. These fine particles may be used alone or in combination.

The fine particles preferably have an average particle size of 0.05 μm or less. Fine particles having an average particle size of more than 0.05 μm may inefficiently coat the surface of the solid thermal curing agent particles. More preferably, the fine particles have an average particle size of 0.03 μm or less. The fine particles preferably have a particle size of 10% or less of that of the solid thermal curing agent particles. Fine particles having a particle size of 10% or more may be insufficiently effective in controlling the reactivity.

The weight ratio of the solid thermal curing agent particles to the fine particles in the coated thermal curing agent is preferably 50:1 to 3:1. If the solid thermal curing agent particles are present in a weight ratio of more than 50, the fine particles may be insufficiently effective in controlling the reactivity. If the solid thermal curing agent particles are present in a weight ratio of less than 3, the fine particles are present in excess and may thus decrease the curing function. More preferably, the weight ratio of the solid thermal curing agent particles to the fine particles is 20:1 to 5:1.

The surface of the solid thermal curing agent particles may be coated with the fine particles by any method,

for example, by homogeneously mixing the solid thermal curing agent particles and the fine particles in a container using a commercially available blender.

The coated thermal curing agent is preferably added to the curable resin composition in an amount of 1 to 100 parts by weight per 100 parts by weight of the curable resin composition. If the coated thermal curing agent is added in an amount of less than 1 part by weight, the curable resin composition may be insufficiently cured. If the coated thermal curing agent is added in an amount of more than 100 parts by weight, excess residual thermal curing agent may decrease the properties, such as toughness, of the resulting cured product.

The coated thermal curing agent, when added to the curable resin composition, exhibits high storage stability since the fine particles on the surface of the solid thermal curing agent particles minimize the contact between the solid thermal curing agent and the polymerizable resin during storage at room temperature. During curing, the solid thermal curing agent liquefies upon heating and contacts the curable resin without being blocked by the fine particles, thus quickly initiating a curing reaction. This improves the storage stability of the curable resin composition. The coated thermal curing agent can be significantly easily manufactured at room temperature within a short period of time without the use of a special reaction.

The curable resin composition according to the present invention preferably contains a thermal radical polymerization initiator. The term "thermal radical polymerization initiator" refers to a compound that produces radicals when heated, i.e., a compound that is degraded to produce radical species as it absorbs thermal energy. The thermal radical polymerization initiator is preferably present in an amount of 0.01 to 3.0 parts by mass per 100 parts by mass of the resin units. An excessive amount of thermal radical polymerization initiator results in low viscosity stability, whereas an insufficient amount of thermal radical polymerization initiator results in low curability.

As discussed above, if the curable resin composition according to the present invention is used as a liquid crystal sealant, it is preferred to minimize the decrease in the viscosity of the curable resin composition upon heating since an excessive decrease in the viscosity of the liquid crystal sealant upon heating results in dissolution of impurities and leakage of the liquid crystal. To reduce the decrease in resin viscosity upon heating, as discussed above, it is advantageous to control the carbon-carbon double bond content of the curable resin composition within a predetermined range. This improves the curing rate of the resin composition and thus promotes gelation. The decrease in resin viscosity can be further reduced by the proper use of a thermal radical polymerization initiator.

The gelation of the curable resin composition is promoted by the use of a thermal radical polymerization initiator having a low 10-hour half-life temperature. The term "10-hour half-life temperature" refers to the temperature required for the concentration of a thermal radical polymerization initiator to decrease to one half of its initial concentration after a pyrolysis reaction is performed at constant temperature in the presence of an inert gas for 10 hours. A curable resin composition containing a thermal radical polymerization initiator having a low 10-hour half-life temperature cures readily at low temperatures since radicals are readily produced at relatively low temperatures. A curable resin composition containing a thermal radical polymerization initiator having a high 10-hour half-life temperature has low curability since radicals are not readily produced.

To promote the gelation of the curable resin composition, therefore, the thermal radical polymerization initiator preferably has a 10-hour half-life temperature of 40°C to 80°C, more preferably 50°C to 70°C. A thermal radical polymerization initiator having a 10-hour half-life temperature of 80°C or lower, or 70°C or lower, readily produces radicals during the curing of the composition (the curing temperature is typically 80°C to 150°C). This promotes the curing reaction and thus reduces the decrease in viscosity during thermal curing.

A thermal radical polymerization initiator having an extremely low 10-hour half-life temperature, however, induces a curing reaction even at room temperature. This decreases the stability of the liquid crystal sealant. A curable resin composition containing a thermal radical polymerization initiator having a 10-hour half-life temperature of 40°C or higher, preferably 50°C or higher, exhibits good stability during storage and the application of the sealant to substrates (which is typically performed at room temperature).

Specifically, the 10-hour half-life temperature of the thermal radical polymerization initiator is determined as follows.

Assuming that the pyrolysis reaction is a first-order reaction gives the following equation.

[Math. 1]

$$\ln(C_0/C_t) = kd \times t$$

where

$C_0$: initial concentration of thermal radical polymerization initiator

$C_t$: concentration of thermal radical polymerization initiator after t hours
kd: rate constant of pyrolysis
t: reaction time

The half-life is the time required for the concentration of a thermal radical polymerization initiator to decrease to one-half of its initial concentration, i.e., the time at which $C_t = C_0/2$. Hence, assuming that the thermal radical polymerization initiator has a half-life of t hours gives the following equation.

[Math. 2]

$$kd = (1/t) \cdot \ln 2$$

Substituting the Arrhenius equation, which describes the temperature dependence of the rate constant, gives the following equation.

[Math. 3]

$$kd = A\exp(-\Delta E/RT)$$

$$(1/t) \cdot \ln 2 = A\exp(-\Delta E/RT)$$

where

A: frequency factor
$\Delta E$: activation energy
R: gas constant (8.314 J/mol·K)
T: absolute temperature (K)

The values of A and $\Delta E$ are disclosed in J. Brandrup et al., "Polymer Handbook, 4th Edition, Volume 1, pages II-2 to II-69, John & Wiley (1999)". Hence, substituting t = 10 hours give the 10-hour half-life temperature T.

Preferred thermal radical polymerization initiators include organic peroxides and azo compounds. Examples of organic peroxides include ketone peroxides, peroxyketals, hydroperoxides, dialkyl peroxides, peroxyesters, diacyl peroxides, and peroxydicarbonates.

Specific examples are shown below, where the numbers in parentheses beside the individual compounds are their respective 10-hour half-life temperatures (see catalogues available from Wako Pure Chemical Industries, Ltd. and API Corporation and the polymer handbook shown above).

Examples of ketone peroxides include methyl ethyl ketone peroxide (109°C) and cyclohexanone peroxide (100°C).

Examples of peroxyketals include 1,1-bis(t-hexylperoxy)-3,3,5-trimethylcyclohexane (87°C), 1,1-bis(t-hexylperoxy)cyclohexane (87°C), 1,1-bis(t-butylperoxy)cyclohexane (91°C), 2,2-bis(t-butylperoxy)butane (103°C), 1,1-(t-amylperoxy)cyclohexane (93°C), n-butyl 4,4-bis(t-butylperoxy)valerate (105°C), and 2,2-bis(4,4-di-t-butylperoxycyclohexyl)propane (95°C).

Examples of hydroperoxides include P-menthane hydroperoxide (128°C), diisopropylbenzene peroxide (145°C), 1,1,3,3-tetramethylbutyl hydroperoxide (153°C), cumene hydroperoxide (156°C), and t-butyl hydroperoxide (167°C).

Examples of dialkyl peroxides include $\alpha,\alpha$-bis(t-butylperoxy)diisopropylbenzene (119°C), dicumyl peroxide (116°C), 2,5-dimethyl-2,5-bis(t-butylperoxy)hexane (118°C), t-butyl cumyl peroxide (120°C), t-amyl peroxide (123°C), dit-butyl peroxide (124°C), and 2,5-dimethyl-2,5-bis(t-butylperoxy)hexane-3 (129°C).

Examples of peroxyesters include cumyl peroxyneodecanoate (37°C), 1,1,3,3-tetramethylbutyl peroxyneodecanoate (41°C), t-hexyl peroxyneodecanoate (45°C), t-butyl peroxyneodecanoate (46°C), t-amyl peroxyneodecanoate (46°C), t-hexyl peroxypivalate (53°C), t-butyl peroxypivalate (55°C), t-amyl peroxypivalate (55°C), 1,1,3,3-tetramethylbutyl peroxy-2-ethylhexanoate (65°C), 2,5-dimethyl-2,5-bis(2-ethylhexanoylperoxy)hexane (66°C), t-hexyl peroxy-2-ethylhexanoate (70°C), t-butyl peroxy-2-ethylhexanoate (72°C), t-amyl peroxy-2-ethylhexanoate (75°C), t-butyl peroxyisobutyrate (82°C), t-hexylperoxyisopropyl monocarbonate (95°C), t-butylperoxymaleic acid (96°C), t-amyl peroxy-n-octoate (96°C), t-amyl peroxyisononanoate (96°C), t-butyl peroxy-3,5,5-trimethylhexanoate (97°C), t-butyl peroxylaurate (98°C), t-butylperoxyisopropyl monocarbonate (99°C), t-butylperoxy-2-ethylhexyl monocarbonate (99°C), t-hexyl peroxybenzoate (99°C), 2,5-dimethyl-2,5-bis(benzoylperoxy)hexane (100°C), t-amyl peroxyacetate (100°C), t-amyl peroxybenzoate (100°C), t-butyl peroxyacetate (102°C), and t-butyl peroxybenzoate (104°C).

Examples of diacyl peroxides include diisobutyryl peroxide (33°C), di-3,5,5-trimethylhexanoyl peroxide (60°C), dilauroyl peroxide (62°C), disuccinoyl peroxide (66°C), and dibenzoyl peroxide (73°C).

Examples of peroxydicarbonates include di-n-propyl peroxydicarbonate (40°C), diisopropyl peroxydicarbonate (41°C), bis(4-t-butylcyclohexyl) peroxydicarbonate (41°C), di-2-ethylhexyl peroxydicarbonate (44°C), t-amyl peroxypropyl carbonate (96°C), and t-amyl peroxy-2-ethylhexyl carbonate (99°C).

The curable resin composition containing the compound containing at least one epoxy group per molecule may contain a radical polymerization inhibitor.

Examples of radical polymerization inhibitors include 2,6-di-t-butylcresol, butylated hydroxyanisole, 2,6-di-t-butyl-4-ethylphenol, stearyl β-(3,5-di-t-butyl-4-hydroxyphenyl)propionate, 2,2'-methylenebis(4-methyl-6-t-butylphenol), 2,2'-methylenebis(4-ethyl-6-t-butylphenol), 4,4'-thiobis(3-methyl-6-t-butylphenol), 4,4-butylidenebis(3-methyl-6-t-butylphenol), 3,9-bis[1,1-dimethyl-2-[β-(3-t-butyl-4-hydroxy-5-methylphenyl)propionyloxy]ethyl], 2,4,8,10-tetraoxaspiro[5,5]undecane, tetrakis[methylene-3-(3',5'-di-t-butyl-4'-hydroxyphenyl) propionate]methane, 1,3,5-tris(3',5'-di-t-butyl-4'-hydroxybenzyl)-sec-triazine-2,4,6-(1H,3H,5H)trione, hydroquinone, p-methoxyphenol, p-benzoquinone, toluquinone, t-butyl-p-benzoquinone, 2,5-di-t-butyl-p-benzoquinone, and 2,5-diphenyl-p-benzoquinone, preferably p-benzoquinone, toluquinone, and t-butyl-p-benzoquinone. These radical polymerization inhibitors may be used alone or in combination.

The radical polymerization inhibitor is preferably added in an amount of 0.1 to 0.4 part by weight per 100 parts by weight of the curable resin composition. If the radical polymerization inhibitor is added in an amount of less than 0.1 part by weight, the curable resin composition may accidentally undergo a curing reaction in the event of unintentional heating during the storage of the sealant or during the manufacture of the liquid crystal display device. This induces changes in properties such as increased thickness. If the radical polymerization inhibitor is added in an amount of more than 0.4 part by weight, the resulting sealant may exhibit noticeably low thermal curability and may thus fail to cure when heated to cure the sealant.

The curable resin composition containing the compound containing at least one epoxy group per molecule may further contain a silane coupling agent. The silane coupling agent serves mainly as an adhesion aid to improve the adhesion between the sealant and the liquid crystal display substrate. The silane coupling agent may also be used to treat the surface of an inorganic or organic filler that is added, for example, to improve the adhesion through a stress dispersion effect or to improve the linear expansion coefficient. This improves the interaction between the filler and the resins that form the sealant.

The silane coupling agent is preferably a silane containing at least one functional group selected from Group (2-A) and at least one functional group selected from Group (2-B) below.

[Chem. 21]

(2-A)

$-OCH_3$ $-OC_2H_5$

[Chem. 22]

(2-B)

$-NH_2$ $-HN$ $-SH$ $-NCO$ 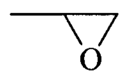

Specific examples of such silanes include γ-aminopropyltrimethoxysilane, γ-mercaptopropyltrimethoxysilane, γ-glycidoxypropyltrimethoxysilane, and γ-isocyanatopropyltrimethoxysilane. These silanes may be used alone or in combination.

A silane having such a structure, when used as a silane coupling agent, improves the adhesion to substrates and also reduces the dissolution of the curable resin into the liquid crystal by combining chemically with the curable resin through the functional group from Group (2-B).

To treat the surface of the filler with the silane coupling agent, the silane is mixed with the curable resin components, and the mixture is heated. Upon heating, the silane combines chemically with the curable resin components via the functional group from Group (2-B). To improve the reaction efficiency, it is preferred to stir the resin mixture during heating. The resin mixture may be stirred by any method, typically by rotating a stirrer or stirring impeller with a motor. The preferred heating temperature is 30°C to 70°C. A heating temperature of lower than 30°C may result in insufficient reaction between the silane and the curable resins. A heating temperature of higher than 70°C may trigger thermal curing. A more preferred heating temperature is 40°C to 60°C. The preferred heating time is one to two hours. A heating time of less than one hour may be insufficient to react all functional groups in the silane and may thus leave unreacted silane.

After heating, 10% or less of the at least one functional group selected from Group (2-B) should remain. If more than 10% of the at least one functional group selected from Group (2-B) remains, it may react with and thicken the resin components during storage and may dissolve into and contaminate the liquid crystal. The amount of at least one functional group selected from Group (2-B) remaining may be determined by 1H-NMR from the ratio of the peak intensity of the functional group in the silane to the peak intensity after heating.

A filler may be added to the curable resin composition containing the compound containing at least one epoxy group per molecule to control the viscosity and to improve the adhesion through a stress dispersion effect.

Examples of fillers include, but not limited to, inorganic fillers such as talc, asbestos, silica, diatomite, smectite, bentonite, calcium carbonate, magnesium carbonate, alumina, montmorillonite, diatomite, zinc oxide, iron oxide, magnesium oxide, tin oxide, titanium oxide, magnesium hydroxide, aluminum hydroxide, glass beads, silicon nitride, barium sulfate, gypsum, calcium silicate, sericite, activated clay, and aluminum nitride; and organic fillers such as polyester particles, polyurethane particles, vinyl polymer particles, acrylic polymer particles, and rubber particles.

These fillers may have any shape, including regular shapes such as spheres, needles, and plates and irregular shapes.

The curable resin composition containing the compound containing at least one epoxy group per molecule may contain resin particles.

The resin particles include a core particle made of a resin having rubber elasticity and a glass transition temperature of -10°C or lower and a shell layer formed on the surface of the core particle and made of a resin having a glass transition temperature of 50°C to 150°C.

Unless otherwise specified, the term "glass transition temperature" as used herein refers to the temperature measured by normal DSC at a heating rate of 10°C/min.

Examples of resins having rubber elasticity and a glass transition temperature of -10°C or lower include, but not limited to, polymers of (meth)acrylic monomers.

Examples of (meth)acrylic monomers include ethyl acrylate, propyl acrylate, n-butyl acrylate, cyclohexyl acrylate, 2-ethylhexyl acrylate, ethyl methacrylate, and butyl methacrylate. These (meth)acrylic monomers may be homopolymerized or copolymerized.

Examples of resins having a glass transition temperature of 50°C to 150°C include, but not limited to, polymers of isopropyl methacrylate, t-butyl methacrylate, cyclohexyl methacrylate, phenyl methacrylate, methyl methacrylate, styrene, 4-chlorostyrene, 2-ethylstyrene, acrylonitrile, and vinyl chloride. These monomers may be used alone or in combination.

Although the particle size of the resin particles may be selected depending on the purpose of use, it is preferably 0.01 to 5 μm. Resin particles having a particle size within this range have a sufficient surface area with the photocurable resin to cause the core layer to swell effectively. When used in a sealant for liquid crystal displays, such resin particles also facilitate the procedure of defining the gap between substrates.

The resin particles may be manufactured by any method, for example, by forming core particles through emulsion polymerization using the monomer for the core alone and then adding and polymerizing the monomer for the shell to form a shell layer on the surface of the core particles.

The resin particles are preferably added to the curable resin composition in an amount of 15 to 50 parts by weight per 100 parts by weight of the photocurable resin. If the resin particles are added in an amount of less than 15 parts by weight, they may be insufficiently effective in improving the adhesion. If the resin particles are added in an amount of more than 50 parts by weight, they may thicken the curable resin composition more than necessary. More preferably, the resin particles are added in an amount of 20 parts by weight or less.

The curable resin composition containing the compound containing at least one epoxy group per molecule is cured with heat. Preferably, the curable resin composition is cured only with heat.

## Alignment Layer

The liquid crystal display device according to the present invention may include alignment layers for aligning the liquid crystal composition on the surfaces of the first and second substrates adjacent to the liquid crystal composition.

Examples of alignment layer materials that can be used include transparent organic materials such as polyimides, polyamides, benzocyclobutene (BCB) polymers, and polyvinyl alcohol. Particularly preferred are polyimide alignment layers, which are formed by the imidation of polyamic acids synthesized from diamines such as aliphatic and alicyclic diamines, including p-phenylenediamine and 4,4'-diaminodiphenylmethane, and aliphatic and alicyclic tetracarboxylic anhydrides such as butanetetracarboxylic anhydride and 2,3,5-tricarboxycyclopentylacetic anhydride or aromatic tetracarboxylic anhydrides such as pyromellitic dianhydride. Although rubbing is a typical alignment process, photoalignment by photodegradation may instead be used in this case. Alternatively, polyimide alignment layers may be used without an alignment process, for example, if they are used as vertical alignment layers.

Other alignment layer materials include compounds containing functional groups such as chalcone, cinnamate, cinnamoyl, and azo groups. These alignment layer materials may be used in combination with other materials such as polyimides and polyamides. In this case, either rubbing or photoalignment may be used.

Although the alignment layers are typically formed by applying the alignment layer material to the substrates using a process such as spin coating to form a resin layer, other processes such as uniaxial drawing and the Langmuir-Blodgett technique may be used instead.

Transparent Electrode

The liquid crystal display device according to the present invention may include transparent electrodes made of conductive metal oxides. Examples of metal oxides that can be used include indium oxide ($In_2O_3$), tin oxide ($SnO_2$), zinc oxide (ZnO), indium tin oxide ($In_2O_3$-$SnO_2$), indium zinc oxide ($In_2O_3$-ZnO), niobium-doped titanium dioxide ($Ti_{1-x}Nb_xO_2$), fluorine-doped tin oxide, graphene nanoribbons, and metal nanowires, preferably zinc oxide (ZnO), indium tin oxide ($In_2O_3$-$SnO_2$), and indium zinc oxide ($In_2O_3$-ZnO). These transparent conductive films may be patterned by techniques such as photoetching and mask patterning.

The liquid crystal display device according to the present invention is particularly useful as an active-matrix-driven liquid crystal display device and can be used as a VA, PSVA, PSA, IPS, FFS, or ECB liquid crystal display device.

This liquid crystal display device can be used in combination with backlights for various applications, including liquid crystal display televisions, personal computer monitors, cell phone and smartphone displays, notebook personal computers, portable information terminals, and digital signage. Examples of backlights include cold cathode fluorescent lamp backlights and pseudo-white backlights with two or three wavelength peaks that include inorganic light-emitting diodes or organic EL devices.

EXAMPLES

The present invention is further illustrated by the following examples, although these examples are not intended to limit the invention. In the following Examples and Comparative Examples, percentages for compositions are by mass.

The properties measured in the examples are as follows:

$T_{ni}$: nematic-isotropic liquid phase transition temperature (°C)
$\Delta n$: refractive index anisotropy at 25°C
$\Delta\varepsilon$: dielectric anisotropy at 25°C
$\eta$: viscosity (mPa·s) at 20°C
$\gamma 1$: rotational viscosity (mPa·s) at 25°C
VHR: voltage holding ratio (%) at 70°C (as determined by applying a voltage of 5 V to a cell having a cell thickness of 3.5 μm and filled with a liquid crystal composition for a pulse duration of 64 μs, measuring the voltage after a frame time of 200 ms, and calculating the percentage of the measured voltage to the initial applied voltage)

Alignment Unevenness

Each liquid crystal display device was visually inspected for alignment unevenness around the contact area between the sealant and the liquid crystal with and without a voltage being applied. The liquid crystal display device was rated on the following four-level scale:

A: no alignment unevenness
B: slight and acceptable alignment unevenness
C: unacceptable alignment unevenness
D: severe alignment unevenness

Image-Sticking

Each liquid crystal display device was evaluated for image-sticking as follows. After a predetermined fixed pattern was displayed within the display area for 1,000 hours, a uniform image was displayed over the entire screen and was visually inspected for image-sticking of the fixed pattern. The liquid crystal display device was rated on the following four-level scale:

A: no image-sticking
B: slight and acceptable image-sticking
C: unacceptable image-sticking
D: severe image-sticking

Volume Resistivity of Sealant after Curing

Each sealant was thinly and uniformly applied to the chromium-coated surface of a chromium-coated glass substrate and was cured with UV radiation to form a UV-cured coating having a size of 85 mm × 85 mm and a thickness of 3 m. Another chromium-coated glass substrate was placed on the UV-cured coating with the chromium-coated surface thereof facing the UV-cured coating. These substrates were heated and pressed under a load on a hot plate at 120°C for one hour to obtain a test sample. The area (S ($cm^2$)) of the sealant on the test sample was measured. A predetermined voltage (V (V)) was applied between the chromium-coated surfaces of the opposing chromium-coated glass substrates using a constant-voltage generator (PA36-2A regulated DC power supply available from Kenwood Corporation). The current (A (A)) flowing through the coating was measured using an ammeter (R644C digital multimeter available from Advantest Corporation). The volume resistivity (Ω·cm) was calculated by the following equation:

$$\text{Volume resistivity } (\Omega\cdot\text{cm}) = (V\cdot S)/(A\cdot T)$$

where T (cm) is the thickness of the sealant. A DC voltage of 500 V was applied for one minute.

Resistivity of Sealant before Curing

The resistivity of each sealant before curing was measured under standard temperature and humidity conditions (20°C, 65% RH) using a resistivity meter (SR-6517 available from Toyo Corporation) and electrodes for liquids (LE-21 available from Ando Electric Co., Ltd.).

The compounds used in the examples are represented by the following abbreviations:

Side Chains and Linking Groups

-n: $-C_nH_{2n+1}$ linear alkyl group of n carbon atoms
n-: $C_nH_{2n+1}-$ linear alkyl group of n carbon atoms
-On: $-OC_nH_{2n+1}$ linear alkoxy group of n carbon atoms
nO-: $C_nH_{2n+1}O-$ linear alkoxy group of n carbon atoms
-V: $-CH=CH_2$
V-: $CH_2=CH-$
-V1: $-CH=CH-CH_3$
1V-: $CH_3-CH=CH-$
-2V: $-CH_2-CH_2-CH=CH_3$
V2-: $CH_3=CH-CH_2-CH_2-$
-2V1: $-CH_2-CH_2-CH=CH-CH_3$
1V2-: $CH_3-CH=CH-CH_2-CH_2$
-10-: $-CH_2O-$
-O1-: $-OCH_2-$

Cyclic Structures

[Chem. 23]

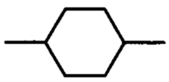
Cy

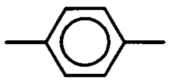
Ph

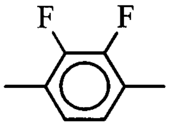
Ph5

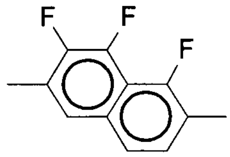
Nd4

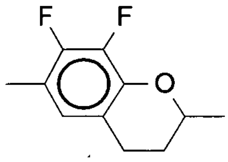
Ch3

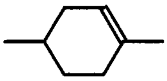
Cb

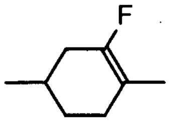
Cb1

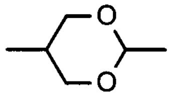
Oc

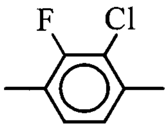
Ph15

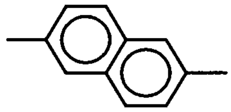
Nd

Preparation of Curable Resin Composition

Synthesis Example A: Synthesis of Modified Epoxy Resin (A)

A solvent was heated to the reflux temperature with nitrogen purging. To the solvent was added dropwise over five hours a solution containing 100 parts by weight of glycidyl methacrylate, 40 parts by weight of methyl methacrylate, 20 parts by weight of hydroxyethyl methacrylate, 40 parts by weight of styrene, 200 parts by weight of n-butyl methacrylate, and 40 parts by weight of a polymerization initiator (Perbutyl O available from NOF Corporation, 10-hour half-life temperature: 72.1°C, t-butyl peroxy-2-ethylhexanoate). The solution was maintained at 100°C for additional five hours. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Modified Epoxy Resin (A), which contained glycidyl and hydroxyl groups.

Modified Epoxy Resin (A) had a weight average molecular weight Mw of 4,020 (as measured by GPC), an epoxy equivalent weight of 640 g/eq, and a hydrogen-bonding functional group value of $3.4 \times 10^{-4}$ mol/g.

Synthesis Example B: Synthesis of Acrylic-Modified Epoxy Resin (B)

A solution was prepared by uniformly dissolving, in a solvent, 100 parts by weight of a bisphenol F epoxy resin (YDF-8170C available from Nippon Steel Chemical Co., Ltd.), 22.5 parts by weight of acrylic acid, and 0.125 parts by weight of triethanolamine. The solution was stirred under reflux at 110°C for five hours. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Acrylic-Modified Epoxy Resin (B).

Acrylic-Modified Epoxy Resin (B) had a weight average molecular weight Mw of 392 (as measured by GPC), a hydrogen-bonding functional group value of $2.6 \times 10^{-3}$ mol/g, and a carbon-carbon double bond content of $2.6 \times 10^{-3}$ mol/g.

Synthesis Example C: Synthesis of Monoacrylate-Modified Epoxy Resin (C)

A solution was prepared by uniformly dissolving, in a solvent, 100 parts by weight of a bisphenol F epoxy resin (YDF-8170C available from Nippon Steel Chemical Co., Ltd.), 22.5 parts by weight of acrylic acid, and 0.125 part by weight of triethanolamine. The solution was stirred under reflux at 110°C for five hours. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Monoacrylate-Modified Epoxy Resin (C).

Monoacrylate-Modified Epoxy Resin (C) had a weight average molecular weight Mw of 398 (as measured by GPC), a hydrogen-bonding functional group value of $2.5 \times 10^{-3}$ mol/g, and a carbon-carbon double bond content of $2.5 \times 10^{-3}$ mol/g.

Synthesis Example D: Synthesis of Diacrylate-Modified Epoxy Resin (D)

A solution was prepared by uniformly dissolving, in a solvent, 100 parts by weight of a bisphenol F epoxy resin (YDF-8170C available from Nippon Steel Chemical Co., Ltd.), 45 parts by weight of acrylic acid, and 0.20 part by weight of triethanolamine. The solution was stirred under reflux at 110°C for five hours. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Diacrylate-Modified Epoxy Resin (D).

Diacrylate-Modified Epoxy Resin (D) had a weight average molecular weight Mw of 484 (as measured by GPC), a hydrogen-bonding functional group value of $4.3 \times 10^{-3}$ mol/g, and a carbon-carbon double bond content of $4.3 \times 10^{-3}$ mol/g.

Synthesis Example E: Synthesis of Diacrylate-Modified Epoxy Resin (E)

A solution was prepared by uniformly dissolving, in a solvent, 117 parts by weight of resorcinol diglycidyl ether (Denacol EX-201 available from Nagase ChemteX Corporation, epoxy equivalent weight: 117 g/eq), 79 parts by weight of acrylic acid, and 1 part by weight of t-butylammonium bromide. The solution was stirred at 90°C for two hours and was then stirred under reflux for six hours to perform the reaction. The reaction solution was washed with ultrapure water, and the solvent was removed. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Diacrylate-Modified Epoxy Resin (E).

Diacrylate-Modified Epoxy Resin (E) had a weight average molecular weight Mw of 366 (as measured by GPC), a hydrogen-bonding functional group value of $5.3 \times 10^{-3}$ mol/g, and a carbon-carbon double bond content of $5.3 \times 10^{-3}$ mol/g.

Synthesis Example F: Synthesis of Diacrylate-Modified Epoxy Resin (F)

A solution was prepared by uniformly dissolving, in a solvent, 100 parts by weight of a diphenyl ether epoxy resin (YSLV-80DE available from Nippon Steel Chemical Co., Ltd., melting point: 84°C), 0.2 part by weight of a polymerization inhibitor (p-methoxyphenol), 0.2 part by weight of a reaction catalyst (triethylamine), and 40 parts by weight of acrylic acid. While air was supplied, the solution was stirred at 80°C for two hours and was then stirred under reflux for 36 hours to perform the reaction. The reaction solution was washed with ultrapure water, and the solvent was removed. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Diacrylate-Modified Epoxy Resin (F).

Diacrylate-Modified Epoxy Resin (F) had a weight average molecular weight Mw of 459 (as measured by GPC), a hydrogen-bonding functional group value of $3.7 \times 10^{-3}$ mol/g, and a carbon-carbon double bond content of $3.7 \times 10^{-3}$ mol/g.

Synthesis Example G: Synthesis of Diacrylate-Modified Epoxy Resin (G)

A solution was prepared by uniformly dissolving, in a solvent, 296.2 g (2 mol) of phthalic anhydride, 917.0 g (2 mol) of an adduct of 2-hydroxyethyl acrylate and 6-hexanolide (Placcel FA3 available from Daicel Corporation, molecular weight: 459 g/mol), 4 g of triethylamine, and 0.9 g of hydroquinone. The solution was stirred at 110°C to perform the reaction. The reaction temperature was adjusted to 90°C when the acid value of the reaction mixture reached 96 mg KOH/g. To the reaction mixture were added 680.82 g (2 mol) of bisphenol A diglycidyl ether and 1.6 g of tetrabutylammonium bromide. The reaction was performed at 90°C until the acid value of the reaction mixture reached 2 mg KOH/g.

To the reaction mixture were added 144.1 g (2 mol) of acrylic acid and 1.8 g of hydroquinone. The mixture was reacted at 80°C for two hours while air was supplied to the flask. The temperature was increased to 90°C, and the reaction was continued. The reaction was performed until the acid value of the reaction mixture reached 2 mg KOH/g. After the reaction was complete, the reaction mixture was washed with ultrapure water, and the solvent was removed. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Diacrylate-Modified Epoxy Resin (G).

Diacrylate-Modified Epoxy Resin (G) had a weight average molecular weight Mw of 1,005 (as measured by GPC), a hydrogen-bonding functional group value of $1.9 \times 10^{-3}$ mol/g, and a carbon-carbon double bond content of $1.9 \times 10^{-3}$ mol/g.

Synthesis Example H: Synthesis of Partially Acrylic-Modified Epoxy Resin (H)

A solution was prepared by uniformly dissolving, in a solvent, 100 parts by weight of a diphenyl ether epoxy resin (YSLV-80DE available from Nippon Steel Chemical Co., Ltd., melting point: 84°C), 0.2 part by weight of a polymerization inhibitor (p-methoxyphenol), 20 parts by weight of acrylic acid, and 0.2 part by weight of a reaction catalyst (triethylamine). While air was supplied, the solution was stirred at 80°C for two hours and was then stirred under reflux for 24 hours to perform the reaction. After the reaction was complete, the reaction mixture was purified through a column and was washed with ultrapure water, and the solvent was removed. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Partially Acrylic-Modified Epoxy Resin (H), in which 50% of the epoxy groups were acrylated.
Partially Acrylic-Modified Epoxy Resin (H) had a weight average molecular weight Mw of 386 (as measured by GPC), a hydrogen-bonding functional group value of $2.2 \times 10^{-3}$ mol/g, and a carbon-carbon double bond content of $2.2 \times 10^{-3}$ mol/g.

Synthesis Example I: Synthesis of Partially Methacrylic-Modified Epoxy Resin (I)

A solution was prepared by uniformly dissolving, in a solvent, 163 parts by weight of a bisphenol E epoxy resin (R-1710 available from Printec Corporation). To the solution were added 0.5 part by weight of p-methoxyphenol, serving as a polymerization inhibitor, 0.5 part by weight of triethylamine, serving as a reaction catalyst, and 40 parts by weight of methacrylic acid. While air was supplied, the mixture was stirred under reflux at 90°C for five hours to perform the reaction.
After the reaction was complete, the reaction mixture was purified through a column and was washed with ultrapure water, and the solvent was removed. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Partially Methacrylic-Modified Epoxy Resin (I), in which 50% of the epoxy groups were methacrylated.
Partially Methacrylic-Modified Epoxy Resin (I) had a weight average molecular weight Mw of 436 (as measured by GPC), a hydrogen-bonding functional group value of $4.6 \times 10^{-3}$ mol/g, and a carbon-carbon double bond content of $2.3 \times 10^{-3}$ mol/g.

Synthesis Example J: Synthesis of Urethane-Modified Methacrylic Epoxy Resin (J)

A mixture was prepared from 1,100 parts by weight of trimethylolpropane, 1.6 parts by weight of 3,5-dibutyl-4-hydroxytoluene, serving as a polymerization inhibitor, 0.08 part by weight of dibutyltin dilaurate, serving as a reaction catalyst, and 6,080 parts by weight of diphenylmethane diisocyanate. The mixture was stirred under reflux at 60°C for two hours to perform the reaction. To the mixture were added 235 parts by weight of 2-hydroxyethyl methacrylate and 910 parts by weight of glycidol. While air was supplied, the mixture was stirred under reflux at 90°C for two hours to perform the reaction.
After the reaction was complete, the reaction mixture was purified through a column and was washed with ultrapure water, and the solvent was removed. A hundred parts by weight of the resulting resin was filtered through a column filled with 30 parts by weight of a natural combination of quartz and kaolin (Sillitin V 85 available from Hoffmann Mineral GmbH) to allow it to adsorb ionic impurities from the reaction product. The solvent was removed to obtain Urethane-Modified Methacrylic Epoxy Resin (J).
Urethane-Modified Methacrylic Epoxy Resin (J) had a weight average molecular weight Mw of 4,188 (as measured by GPC), a hydrogen-bonding functional group value of $2.9 \times 10^{-3}$ mol/g, and a carbon-carbon double bond content of $2.2 \times 10^{-4}$ mol/g.

Preparation of Sealant

Sealant (1)

In 160 parts by weight of Modified Epoxy Resin (A), 100 parts by weight of an o-cresol novolac epoxy resin (EOCN-1020-20 available from Nippon Kayaku Co., Ltd.) was dissolved by heating to obtain a homogeneous solution. After cooling, to the solution were added 60 parts by weight of a hydrazide curing agent (Amicure VDH-J available from Ajinomoto Fine-Techno Co., Inc.), serving as a latent thermal curing agent, 4 parts by weight of an imidazole curing agent (Curezol 2E4MZ-A available from Shikoku Chemicals Corporation), serving as a latent thermal curing agent, 72 parts by weight of spherical silica (Admafine AO-802 available from Admatechs Co., Ltd.), serving as a filler, and 4 parts

by weight of a silane coupling agent (γ-glycidoxypropyltrimethoxysilane, KBM-403 available from Shin-Etsu Chemical Co., Ltd.), serving as an additive. The mixture was stirred in a planetary stirrer, was milled on a ceramic three-roll mill, and was degassed and stirred in a planetary stirrer to obtain Sealant (1). The properties of Sealant (1) thus obtained are as follows:

Hydrogen-bonding functional group value (mol/g): $2.1 \times 10^{-4}$
Resistivity of sealant before curing (Ω·cm): $4.8 \times 10^{6}$
Volume resistivity of sealant after curing (Ω·cm): $1.2 \times 10^{13}$

Sealant (2)

A mixture was prepared from 100 parts by weight of a solid o-cresol novolac epoxy resin (EOCN-1020-75 available from Nippon Kayaku Co., Ltd., epoxy equivalent weight: 215 g/eq), 433 parts by weight of PO-modified trisphenol triacrylate (molecular weight: 802, carbon-carbon double bond content: 0.0037 mol/g), and 217 parts by weight of Acrylic-Modified Epoxy Resin (B). The mixture was dissolved by heating. To the solution were added 42 parts by weight of a hydrazide curing agent (Amicure VDH available from Ajinomoto Fine-Techno Co., Inc.), serving as a latent thermal curing agent, 167 parts by weight of spherical silica (Seahostar S-30 available from Nippon Shokubai Co., Ltd.), serving as a filler, and 42 parts by weight of alkyl methacrylate copolymer particles (F-325 available from Zeon Corporation). The mixture was stirred in a planetary stirrer, was milled on a ceramic three-roll mill, and was degassed and stirred in a planetary stirrer. To the mixture was added 8.3 parts by weight of a thermal radical polymerization initiator (Luperox 575 available from Arkema Yoshitomi Ltd., 10-hour half-life temperature: 75°C). The mixture was degassed and stirred in a planetary stirrer to obtain Sealant (2). The properties of Sealant (2) thus obtained are as follows:

Epoxy-to-(meth)acrylic equivalent ratio: 31:69
Hydrogen-bonding functional group value (mol/g): $7.4 \times 10^{-4}$
Carbon-carbon double bond content (mol/g): $2.9 \times 10^{-3}$
Resistivity of sealant before curing (Ω·cm): $7.7 \times 10^{8}$
Volume resistivity of sealant after curing (Ω·cm): $1.5 \times 10^{13}$

Sealant (3)

In 700 parts by weight of Monoacrylate-Modified Epoxy Resin (C), 100 parts by weight of an o-cresol novolac epoxy resin (EOCN-1020-55 available from Nippon Kayaku Co., Ltd.) was dissolved by heating at 100°C for one hour to obtain a homogeneous solution. After cooling, to the solution were added 800 parts by weight of Diacrylate-Modified Epoxy Resin (D), 0.2 part of p-benzoquinone (available from Seiko Chemical Co., Ltd.), 300 parts by weight of spherical silica (Admafine A-802 available from Admatechs Co., Ltd.), serving as an inorganic filler, 60 parts by weight of a thermal latent epoxy curing agent (Amicure VDH-J available from available from Ajinomoto Fine-Techno Co., Inc.), and 20 parts by weight of a silane coupling agent (γ-glycidoxypropyltrimethoxysilane, KBM-403 available from Shin-Etsu Chemical Co., Ltd.), serving as an additive. The mixture was stirred in a planetary stirrer, was milled on a ceramic three-roll mill, and was degassed and stirred in a planetary stirrer. To the mixture was added 20 parts by weight of a thermal radical polymerization initiator (V-601 available from Wako Pure Chemical Industries, Ltd., dimethyl 2,2'-azobis(isobutyrate), 10-hour half-life temperature: 66°C). The mixture was degassed and stirred in a planetary stirrer to obtain 10 parts by weight of Sealant (3). The properties of Sealant (3) thus obtained are as follows:

Epoxy-to-(meth)acrylic equivalent ratio: 31:69
Hydrogen-bonding functional group value (mol/g): $3.2 \times 10^{-3}$
Carbon-carbon double bond content (mol/g): $3.2 \times 10^{-3}$
Resistivity of sealant before curing (Ω·cm): $4.9 \times 10^{9}$
Volume resistivity of sealant after curing (Ω·cm): $2.3 \times 10^{13}$

Sealant (4)

A mixture was prepared from 70 parts by weight of a bisphenol A epoxy resin (Epikote 828EL available from JER, epoxy equivalent weight: 190 g/eq), 10 parts by weight of a thermal latent epoxy curing agent (Amicure VDH available from Ajinomoto Fine-Techno Co., Inc.), 3 parts by weight of an imidazole curing agent (2-hydroxymethylimidazole), 30 parts by weight of Acrylic-Modified Epoxy Resin (B), 15 parts by weight of silicon dioxide (S-100 available from Nippon Shokubai Co., Ltd.), 20 parts by weight of polymer particles (F325 available from Zeon Kasei Co., Ltd., primary particle size: 0.5 μm), and 0.5 part by weight of a silane coupling agent (y-glycidoxypropyltrimethoxysilane,

KBM-403 available from Shin-Etsu Chemical Co., Ltd.). The mixture was stirred in a planetary stirrer, was milled on a ceramic three-roll mill, and was degassed and stirred in a planetary stirrer to obtain Sealant (4). The properties of Sealant (4) thus obtained are as follows:

Epoxy-to-(meth)acrylic equivalent ratio: 88:12
Hydrogen-bonding functional group value (mol/g): $7.7 \times 10^{-4}$
Carbon-carbon double bond content (mol/g): $7.7 \times 10^{-4}$
Resistivity of sealant before curing (Ω·cm): $8.6 \times 10^{7}$
Volume resistivity of sealant after curing (Ω·cm): $1.3 \times 10^{13}$

Sealant (5)

A mixture was prepared from 25 parts by weight of a diacrylate-modified bisphenol A epoxy resin (Epoxy Ester 3002A available from Kyoeisha Chemical Co., Ltd., molecular weight: 600), 70 parts by weight of Acrylic-Modified Epoxy Resin (B), 5 parts by weight of a solid o-cresol novolac epoxy resin (EOCN-1020-75 available from Nippon Kayaku Co., Ltd., epoxy equivalent weight: 215 g/eq), 5 parts by weight of a latent epoxy curing agent (Amicure VDH available from Ajinomoto Fine-Techno Co., Inc., melting point: 120°C), and 20 parts by weight of spherical silica (Seahostar S-30 available from Nippon Shokubai Co., Ltd.). The mixture was stirred in a planetary stirrer, was milled on a ceramic three-roll mill, and was degassed and stirred in a planetary stirrer. To the mixture was added 1 part by weight of a thermal radical polymerization initiator (Luperox 575 available from Arkema Yoshitomi Ltd., 10-hour half-life temperature: 75°C). The mixture was degassed and stirred in a planetary stirrer to obtain Sealant (5). The properties of Sealant (5) thus obtained are as follows:

Epoxy-to-(meth)acrylic equivalent ratio: 43:57
Hydrogen-bonding functional group value (mol/g): $2.6 \times 10^{-3}$
Carbon-carbon double bond content (mol/g): $2.6 \times 10^{-3}$
Resistivity of sealant before curing (Ω·cm): $3.1 \times 10^{9}$
Volume resistivity of sealant after curing (Ω·cm): $2.1 \times 10^{13}$

Sealant (6)

A mixture was prepared from 15 parts by weight of a solid o-cresol novolac epoxy resin (EOCN-1020-75 available from Nippon Kayaku Co., Ltd., epoxy equivalent weight: 215 g/eq) and 45 parts by weight of a diacrylate-modified bisphenol A epoxy resin (Epoxy Ester 3002A available from Kyoeisha Chemical Co., Ltd. molecular weight: 600). The mixture was dissolved by heating at 100°C for one hour to obtain a homogeneous solution. After cooling, to the solution were added 20 parts by weight of Acrylic-Modified Epoxy Resin (B), 0.5 part by weight of a radical chain transfer agent (Karenz MT NR-1 available from Showa Denko K.K., 1,3,5-tris(3-mercaptobutyloxyethyl)-1,3,5-triazine-2,4,6(1H,3H,5H)-trione), 15 parts by weight of spherical silica (Seahostar S-30 available from Nippon Shokubai Co., Ltd.), 3 parts by weight of a latent epoxy curing agent (Amicure VDH available from Ajinomoto Fine-Techno Co., Inc., melting point: 120°C), and 1 part by weight of a silane coupling agent (γ-glycidoxypropyltrimethoxysilane, KBM-403 available from Shin-Etsu Chemical Co., Ltd.), serving as an additive. The mixture was stirred in a planetary stirrer, was milled on a ceramic three-roll mill, and was degassed and stirred in a planetary stirrer. To the mixture was added 0.5 part by weight of a thermal radical polymerization initiator (V-601 available from Wako Pure Chemical Industries, Ltd., dimethyl 2,2'-azobis(isobutyrate), 10-hour half-life temperature: 66°C). The mixture was vacuum-degassed and stirred in a planetary stirrer to obtain Sealant (6). The properties of Sealant (6) thus obtained are as follows:

Epoxy-to-(meth)acrylic equivalent ratio: 37:63
Hydrogen-bonding functional group value (mol/g): $2.51 \times 10^{-3}$
Carbon-carbon double bond content (mol/g): $2.51 \times 10^{-3}$
Resistivity of sealant before curing (Ω·cm): $1.3 \times 10^{9}$
Volume resistivity of sealant after curing (Ω·cm): $1.9 \times 10^{13}$

Sealant (7)

A mixture was prepared from 20 parts by weight of Diacrylate-Modified Epoxy Resin (E), 25 parts by weight of Diacrylate-Modified Epoxy Resin (F), 25 parts by weight of Diacrylate-Modified Epoxy Resin (G), 25 parts by weight of Partially Acrylic-Modified Epoxy Resin (H), 5 parts by weight of a solid o-cresol novolac epoxy resin (available from Nippon Kayaku Co., Ltd., EOCN-1020-75, epoxy equivalent weight: 215 g/eq), 25 parts by weight of spherical silica

(Seahostar S-30 available from Nippon Shokubai Co., Ltd.), 8 parts by weight of a latent epoxy curing agent (Amicure VDH available from Ajinomoto Fine-Techno Co., Inc.), and 2 parts by weight of alkyl methacrylate copolymer particles (F-325 available from Zeon Corporation). The mixture was stirred in a planetary stirrer, was milled on a ceramic three-roll mill, and was degassed and stirred in a planetary stirrer. To the mixture was added 1 part by weight of a thermal radical polymerization initiator (V-65 available from Wako Pure Chemical Industries, Ltd., 2,2'-azobis(2,4-dimethylvaleronitrile), 10-hour half-life temperature: 51°C). The mixture was vacuum-degassed and stirred in a planetary stirrer to obtain Sealant (7). The properties of Sealant (7) thus obtained are as follows:

Epoxy-to-(meth)acrylic equivalent ratio: 19:81
Carbon-carbon double bond content (mol/g): $3.01 \times 10^{-3}$
Hydrogen-bonding functional group value (mol/g): $3.01 \times 10^{-3}$
Resistivity of sealant before curing (Ω·cm): $3.5 \times 10^{9}$
Volume resistivity of sealant after curing (Ω·cm): $2.2 \times 10^{13}$

Sealant (8)

A mixture was prepared from 50 parts by weight of Methacrylic-Modified Bisphenol E Epoxy Resin (I), 50 parts by weight of Urethane-Modified Methacrylic Epoxy Resin (J), 35 parts by weight of spherical silica (SO-C1 available from Admatechs Co., Ltd.), 8 parts by weight of a latent epoxy curing agent (Amicure VDH available from Ajinomoto Fine-Techno Co., Inc.), 1.5 parts by weight of a silane coupling agent (γ-acryloxypropyltrimethoxysilane, KBM5103 available from Shin-Etsu Chemical Co., Ltd.), and alkyl methacrylate copolymer particles (F-325 available from Zeon Corporation). The mixture was stirred in a planetary stirrer, was milled on a ceramic three-roll mill, and was degassed and stirred in a planetary stirrer. To the mixture was added 0.5 part by weight of a thermal radical polymerization initiator (V-65 available from Wako Pure Chemical Industries, Ltd., 10-hour half-life temperature: 51°C). The mixture was vacuum-degassed and stirred in a planetary stirrer to obtain Sealant (8). The properties of Sealant (8) thus obtained are as follows:

Epoxy-to-(meth)acrylic equivalent ratio: 60:40
Carbon-carbon double bond content (mol/g): $1.26 \times 10^{-3}$
Hydrogen-bonding functional group value (mol/g): $3.75 \times 10^{-3}$
Resistivity of sealant before curing (Ω·cm): $1.2 \times 10^{9}$
Volume resistivity of sealant after curing (Ω·cm): $1.8 \times 10^{13}$

Comparative Sealant (C1)

A curable resin composition was prepared from 35 parts by weight of urethane acrylate (AH-600 available from Kyoeisha Chemical Co., Ltd.), 15 parts by weight of 2-hydroxybutyl acrylate, 50 parts by weight of isobornyl acrylate, and 0.5 part by weight of a thermal radical polymerization initiator (V-65 available from Wako Pure Chemical Industries, Ltd., 10-hour half-life temperature: 51°C). The curable resin composition was stirred in a planetary stirrer and was uniformly milled on a ceramic three-roll mill to obtain Comparative Sealant (C1), which was photocurable. The properties of Comparative Sealant (C1) thus obtained are as follows:

Hydrogen-bonding functional group value: $2.2 \times 10^{-5}$
Resistivity of sealant before curing (Ω·cm): $5.0 \times 10^{6}$
Volume resistivity of sealant after curing (Ω·cm): $2.3 \times 10^{13}$

Comparative Sealant (C2)

A curable resin composition was prepared from 50 parts by weight of a bisphenol A epoxy resin (jER828US available from Mitsubishi Chemical Corporation) and 25 parts by weight of a hydrazide curing agent (NDH available from Japan Hydrazine Co., Ltd.). The curable resin composition was stirred in a planetary stirrer and was uniformly milled on a ceramic three-roll mill to obtain Comparative Sealant (C2). The properties of Comparative Sealant (C2) thus obtained are as follows:

Hydrogen-bonding functional group value: $2.7 \times 10^{-7}$
Resistivity of sealant before curing (Ω·cm): $5.0 \times 10^{10}$
Volume resistivity of sealant after curing (Ω·cm): $3.0 \times 10^{13}$

Examples 1 to 8

Transparent electrodes were formed on first and second substrates. A black matrix (BM) was formed on the second substrate. Vertical alignment layers (SE-5300) were formed on the opposing surfaces of the two substrates and were subjected to an alignment process. One of Sealants (1) to (8) was loaded into a syringe for dispensing and was degassed. The sealant was applied to the alignment layer on the first substrate using a dispenser to form a rectangular frame pattern. Small droplets of Liquid Crystal Composition 1 shown in the following table were dispensed over the entire area within the frame pattern of the uncured sealant on the first substrate, immediately followed by laminating the second substrate in a vacuum of 5 Pa using a vacuum lamination system. The drawing conditions and the gap between the substrates were controlled so that, after the vacuum was released, the pressed sealant had a line width of about 1.2 mm and overlapped the BM by 0.3 mm. The laminate was immediately heated in a constant-temperature unit at 150°C for 90 minutes to cure the sealant. In this way, VA liquid crystal display devices of Examples 1 to 5 were fabricated ($d_{gap}$ = 3.5 μm). The resulting liquid crystal display devices were tested for VHR and were evaluated for alignment unevenness and image-sticking. The results are shown in the following tables.

[Table 1]

| Liquid Crystal Composition 1 | |
|---|---|
| $T_{NI}$ / °C | 81.0 |
| $\Delta n$ | 0.103 |
| $\Delta\varepsilon$ | -2.9 |
| $\eta$ / mPa·s | 20.3 |
| $\gamma_1$ / mPa·s | 112 |
| $\gamma_1 / \Delta n^2 \times 10^{-2}$ | 105 |
| 3-Cy-Cy-2 | 24% |
| 3-Cy-Cy-4 | 10% |
| 3-Cy-Cy-5 | 5% |
| 3-Cy-Ph-O1 | 2% |
| 3-Cy-Ph5-O2 | 13% |
| 2-Cy-Ph-Ph5-O2 | 9% |
| 3-Cy-Ph-Ph5-O2 | 9% |
| 3-Cy-Cy-Ph5-O3 | 5% |
| 4-Cy-Cy-Ph5-O2 | 6% |
| 5-Cy-Cy-Ph5-O2 | 5% |
| 3-Ph-Ph5-Ph-2 | 6% |
| 4-Ph-Ph5-Ph-2 | 6% |

[Table 2]

| | Example 1 | Example 2 | Example 3 | Example 4 | Example 5 |
|---|---|---|---|---|---|
| Liquid crystal composition | Liquid Crystal Composition1 | Liquid Crystal Composition1 | Liquid Crystal Composition1 | Liquid Crystal Composition1 | Liquid Crystal Composition1 |
| Sealant | Sealant (1) | Sealant (2) | Sealant (3) | Sealant (4) | Sealant (5) |
| VHR | 99.0 | 99.2 | 99.5 | 99.1 | 99.4 |
| Alignment unevenness | B | A | A | B | A |
| Image-sticking | B | B | A | A | A |

[Table 3]

| | Example 6 | Example 7 | Example 8 |
|---|---|---|---|
| Liquid crystal composition | Liquid Crystal Composition1 | Liquid Crystal Composition1 | Liquid Crystal Composition1 |
| Sealant | Sealant (6) | Sealant (7) | Sealant (8) |
| VHR | 99.3 | 99.5 | 99.3 |
| Alignment unevenness | A | A | A |
| Image-sticking | B | A | B |

Liquid Crystal Composition 1 was found to have a liquid crystal phase temperature limit of 81.0°C, which is practical for television applications, a large absolute value of dielectric anisotropy, a low viscosity, and a suitable Δn.

The liquid crystal display devices of Examples 1 to 8 had high VHRs and exhibited no or only slight and acceptable alignment unevenness and image-sticking.

Examples 9 to 24

Liquid crystal display devices of Examples 9 to 24 were fabricated using Sealants (1) to (8) as in Example 1 except that Liquid Crystal Compositions 2 and 3 shown in the following tables were sandwiched therein. The resulting liquid crystal display devices were tested for VHR and were evaluated for alignment unevenness and image-sticking. The results are shown in the following tables.

[Table 4]

Liquid Crystal Composition 2

| | |
|---|---|
| $T_{NI}$ / °C | 76.0 |
| Δn | 0.103 |
| Δε | -2.9 |
| η / mPa·s | 19.8 |
| $\gamma_1$ / mPa·s | 110 |
| $\gamma_1 / \Delta n^2 \times 10^{-2}$ | 103 |
| 3-Cy-Cy-2 | 24% |
| 3-Cy-Cy-4 | 10% |
| 3-Cy-Ph-O1 | 7% |
| 3-Cy-Ph5-O2 | 14% |
| 2-Cy-Ph-Ph5-O2 | 7% |
| 3-Cy-Ph-Ph5-O2 | 9% |
| 3-Cy-Cy-Ph5-O3 | 5% |
| 4-Cy-Cy-Ph5-O2 | 7% |
| 5-Cy-Cy-Ph5-O2 | 5% |
| 3-Ph-Ph5-Ph-2 | 6% |
| 4-Ph-Ph5-Ph-2 | 6% |

Liquid Crystal Composition 3

| | |
|---|---|
| $T_{NI}$ / °C | 84.8 |
| Δn | 0.103 |
| Δε | -2.9 |
| η / mPa·s | 21.4 |
| $\gamma_1$ / mPa·s | 119 |
| $\gamma_1 / \Delta n^2 \times 10^{-2}$ | 112 |
| 3-Cy-Cy-2 | 24% |
| 3-Cy-Cy-4 | 11% |
| 3-Cy-Ph5-O2 | 12% |
| 2-Cy-Ph-Ph5-O2 | 5% |
| 3-Cy-Ph-Ph5-O2 | 6% |
| 3-Cy-Cy-Ph5-O3 | 8% |
| 4-Cy-Cy-Ph5-O2 | 8% |
| 5-Cy-Cy-Ph5-O2 | 8% |
| 3-Ph-Ph5-Ph-2 | 6% |
| 4-Ph-Ph5-Ph-2 | 6% |
| 5-Ph-Ph-1 | 3% |
| 3-Cy-Cy-Ph-1 | 3% |

[Table 5]

| | Example 9 | Example 10 | Example 11 | Example 12 | Example 13 |
|---|---|---|---|---|---|
| Liquid crystal composition | Liquid Crystal Composition 2 | Liquid Crystal Composition 2 | Liquid Crystal Composition 2 | Liquid Crystal Composition 2 | Liquid Crystal Composition 2 |
| Sealant | Sealant (1) | Sealant (2) | Sealant (3) | Sealant (4) | Sealant (5) |
| VHR | 99.1 | 99.3 | 99.6 | 99.2 | 99.5 |
| Alignment unevenness | B | A | A | B | A |
| Image-sticking | B | B | A | B | A |

[Table 6]

| | Example 14 | Example 15 | Example 16 |
|---|---|---|---|
| Liquid crystal composition | Liquid Crystal Composition 2 | Liquid Crystal Composition 2 | Liquid Crystal Composition 2 |
| Sealant | Sealant (6) | Sealant (7) | Sealant (8) |
| VHR | 99.5 | 99.6 | 99.4 |
| Alignment unevenness | B | A | B |
| Image-sticking | A | A | A |

[Table 7]

| | Example 17 | Example 18 | Example 19 | Example 20 | Example 21 |
|---|---|---|---|---|---|
| Liquid crystal composition | Liquid Crystal Composition 3 | Liquid Crystal Composition 3 | Liquid Crystal Composition 3 | Liquid Crystal Composition 3 | Liquid Crystal Composition 3 |
| Sealant | Sealant (1) | Sealant (2) | Sealant (3) | Sealant (4) | Sealant (5) |
| VHR | 99.0 | 99.2 | 99.6 | 99.1 | 99.4 |
| Alignment unevenness | B | A | A | B | A |
| Image-sticking | B | B | A | B | B |

[Table 8]

| | Example 22 | Example 23 | Example 24 |
|---|---|---|---|
| Liquid crystal composition | Liquid Crystal Composition 3 | Liquid Crystal Composition 3 | Liquid Crystal Composition 3 |
| Sealant | Sealant (6) | Sealant (7) | Sealant (8) |
| VHR | 99.4 | 99.5 | 99.3 |
| Alignment unevenness | A | A | B |
| Image-sticking | A | A | A |

Liquid Crystal Compositions 2 and 3 were found to have. practical liquid crystal phase temperature limits for television applications, large absolute values of dielectric anisotropy, low viscosities, and suitable $\Delta n$.

The liquid crystal display devices of Examples 9 to 24 had high VHRs and exhibited no or only slight and acceptable alignment unevenness and image-sticking.

Examples 25 to 48

Liquid crystal display devices of Examples 25 to 48 were fabricated using Sealants (1) to (8) as in Example 1 except that Liquid Crystal Compositions 4 to 6 shown in the following tables were sandwiched therein. The resulting liquid crystal display devices were tested for VHR and were evaluated for alignment unevenness and image-sticking. The results are shown in the following tables.

[Table 9]

Liquid Crystal Composition 4

| | |
|---|---|
| $T_{NI}$ / °C | 74.9 |
| Δn | 0.102 |
| Δε | -2.9 |
| η / mPa·s | 21.1 |
| $γ_1$ / mPa·s | 116 |
| $γ_1 / Δn^2 × 10^{-2}$ | 111 |
| 3-Cy-Cy-2 | 22% |
| 3-Cy-Cy-4 | 11% |
| 3-Cy-Ph5-O2 | 7% |
| 3-Cy-Ph5-O4 | 8% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 7% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 8% |
| 3-Cy-Cy-Ph-1 | 2% |

Liquid Crystal Composition 5

| | |
|---|---|
| $T_{NI}$ / °C | 80.2 |
| Δn | 0.105 |
| Δε | -2.9 |
| η / mPa·s | 22.7 |
| $γ_1$ / mPa·s | 124 |
| $γ_1 / Δn^2 × 10^{-2}$ | 112 |
| 3-Cy-Cy-2 | 20% |
| 3-Cy-Cy-4 | 10% |
| 3-Cy-Ph5-O2 | 7% |
| 3-Cy-Ph5-O4 | 7% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 8% |
| 3-Cy-Cy-Ph-1 | 5% |

Liquid Crystal Composition 6

| | |
|---|---|
| $T_{NI}$ / °C | 85.7 |
| Δn | 0.104 |
| Δε | -3.0 |
| η / mPa·s | 22.9 |
| $γ_1$ / mPa·s | 126 |
| $γ_1 / Δn^2 × 10^{-2}$ | 116 |
| 3-Cy-Cy-2 | 20% |
| 3-Cy-Cy-4 | 10% |
| 3-Cy-Ph5-O2 | 7% |
| 3-Cy-Ph5-O4 | 7% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 5% |
| 3-Cy-Cy-Ph-1 | 8% |

[Table 10]

| | Example 25 | Example 26 | Example 27 | Example 28 | Example 29 |
|---|---|---|---|---|---|
| Liquid crystal composition | Liquid Crystal Composition 4 | Liquid Crystal Composition 4 | Liquid Crystal Composition 4 | Liquid Crystal Composition 4 | Liquid Crystal Composition 4 |
| Sealant | Sealant (1) | Sealant (2) | Sealant (3) | Sealant (4) | Sealant (5) |
| VHR | 99.1 | 99.2 | 99.5 | 99.1 | 99.3 |
| Alignment unevenness | B | B | A | B | A |
| Image-sticking | B | A | A | B | A |

[Table 11]

| | Example 30 | Example 31 | Example 32 |
|---|---|---|---|
| Liquid crystal composition | Liquid Crystal Composition 4 | Liquid Crystal Composition 4 | Liquid Crystal Composition 4 |
| Sealant | Sealant (6) | Sealant (7) | Sealant (8) |
| VHR | 99.3 | 99.4 | 99.2 |
| Alignment unevenness | A | A | B |
| Image-sticking | B | A | A |

[Table 12]

| | Example 33 | Example 34 | Example 35 | Example 36 | Example 37 |
|---|---|---|---|---|---|
| Liquid crystal composition | Liquid Crystal Composition 5 | Liquid Crystal Composition 5 | Liquid Crystal Composition 5 | Liquid Crystal Composition 5 | Liquid Crystal Composition 5 |
| Sealant | Sealant (1) | Sealant (2) | Sealant (3) | Sealant (4) | Sealant (5) |
| VHR | 98.9 | 99.1 | 99.4 | 99.0 | 99.3 |
| Alignment unevenness | B | B | A | B | A |
| Image-sticking | B | A | A | B | A |

[Table 13]

| | Example 38 | Example 39 | Example 40 |
|---|---|---|---|
| Liquid crystal composition | Liquid Crystal Composition 5 | Liquid Crystal Composition 5 | Liquid Crystal Composition 5 |
| Sealant | Sealant (6) | Sealant (7) | Sealant (8) |
| VHR | 99.2 | 99.3 | 99.1 |
| Alignment unevenness | A | A | A |
| Image-sticking | B | A | B |

[Table 14]

| | Example 41 | Example 42 | Example 43 | Example 44 | Example 45 |
|---|---|---|---|---|---|
| Liquid crystal composition | Liquid Crystal Composition 6 | Liquid Crystal Composition 6 | Liquid Crystal Composition 6 | Liquid Crystal Composition 6 | Liquid Crystal Composition 6 |
| Sealant | Sealant (1) | Sealant (2) | Sealant (3) | Sealant (4) | Sealant (5) |
| VHR | 99.0 | 99.2 | 99.6 | 99.1 | 99.4 |
| Alignment unevenness | B | B | A | A | A |
| Image-sticking | B | A | A | B | A |

[Table 15]

| | Example 46 | Example 47 | Example 48 |
|---|---|---|---|
| Liquid crystal composition | Liquid Crystal Composition 6 | Liquid Crystal Composition 6 | Liquid Crystal Composition 6 |
| Sealant | Sealant (6) | Sealant (7) | Sealant (8) |
| VHR | 99.3 | 99.5 | 99.3 |
| Alignment unevenness | A | A | A |
| Image-sticking | A | A | B |

Liquid Crystal Compositions 4 to 6 were found to have practical liquid crystal phase temperature limits for television applications, large absolute values of dielectric anisotropy, low viscosities, and suitable Δn.

The liquid crystal display devices of Examples 25 to 48 had high VHRs and exhibited no or only slight and acceptable alignment unevenness and image-sticking.

Examples 49 to 72

Liquid crystal display devices of Examples 49 to 72 were fabricated using Sealants (1) to (8) as in Example 1 except that Liquid Crystal Compositions 7 to 9 shown in the following tables were sandwiched therein. The resulting liquid crystal display devices were tested for VHR and were evaluated for alignment unevenness and image-sticking. The results are shown in the following tables.

[Table 16]

Liquid Crystal Composition 7

| | |
|---|---|
| $T_{NI}$ / °C | 75.1 |
| Δn | 0.103 |
| Δε | -2.6 |
| η / mPa·s | 20.5 |
| $\gamma_1$ / mPa·s | 117 |
| $\gamma_1 / \Delta n^2 \times 10^{-2}$ | 110 |
| 3-Cy-Cy-2 | 15% |
| 3-Cy-Cy-4 | 12% |
| 3-Cy-Cy-5 | 7% |
| 3-Cy-Ph-O1 | 12% |
| 3-Cy-Ph5-O2 | 6% |
| 3-Cy-Ph5-O4 | 7% |
| 2-Cy-Ph-Ph5-O2 | 11% |
| 3-Cy-Ph-Ph5-O2 | 12% |
| 3-Cy-Cy-Ph5-O3 | 3% |
| 4-Cy-Cy-Ph5-O2 | 4% |
| 5-Cy-Cy-Ph5-O2 | 3% |
| 3-Ph-Ph5-Ph-2 | 4% |
| 4-Ph-Ph5-Ph-2 | 4% |

Liquid Crystal Composition 8

| | |
|---|---|
| $T_{NI}$ / °C | 80.4 |
| Δn | 0.103 |
| Δε | -2.6 |
| η / mPa·s | 21.6 |
| $\gamma_1$ / mPa·s | 125 |
| $\gamma_1 / \Delta n^2 \times 10^{-2}$ | 117 |
| 3-Cy-Cy-2 | 15% |
| 3-Cy-Cy-4 | 12% |
| 3-Cy-Cy-5 | 7% |
| 3-Cy-Ph-O1 | 12% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 4% |
| 4-Cy-Cy-Ph5-O2 | 6% |
| 5-Cy-Cy-Ph5-O2 | 4% |
| 3-Ph-Ph5-Ph-2 | 4% |
| 4-Ph-Ph5-Ph-2 | 4% |

Liquid Crystal Composition 9

| | |
|---|---|
| $T_{NI}$ / °C | 85.1 |
| Δn | 0.103 |
| Δε | -2.6 |
| η / mPa·s | 22.7 |
| $\gamma_1$ / mPa·s | 130 |
| $\gamma_1 / \Delta n^2 \times 10^{-2}$ | 122 |
| 3-Cy-Cy-2 | 10% |
| 3-Cy-Cy-4 | 15% |
| 3-Cy-Cy-5 | 12% |
| 3-Cy-Ph-O1 | 9% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 4% |
| 4-Cy-Cy-Ph5-O2 | 6% |
| 5-Cy-Cy-Ph5-O2 | 4% |
| 3-Ph-Ph5-Ph-2 | 4% |
| 4-Ph-Ph5-Ph-2 | 4% |

[Table 17]

| | Example 49 | Example 50 | Example 51 | Example 52 | Example 53 |
|---|---|---|---|---|---|
| Liquid crystal composition | Liquid Crystal Composition 7 | Liquid Crystal Composition 7 | Liquid Crystal Composition 7 | Liquid Crystal Composition 7 | Liquid Crystal Composition 7 |
| Sealant | Sealant (1) | Sealant (2) | Sealant (3) | Sealant (4) | Sealant (5) |
| VHR | 99.2 | 99.4 | 99.7 | 99.3 | 99.6 |
| Alignment unevenness | B | B | A | B | A |
| Image-sticking | B | A | A | A | A |

[Table 18]

| | Example 54 | Example 55 | Example 56 |
|---|---|---|---|
| Liquid crystal composition | Liquid Crystal Composition 7 | Liquid Crystal Composition 7 | Liquid Crystal Composition 7 |
| Sealant | Sealant (6) | Sealant (7) | Sealant (8) |
| VHR | 99.5 | 99.6 | 99.4 |
| Alignment unevenness | A | A | B |
| Image-sticking | A | A | A |

[Table 19]

| | Example 57 | Example 58 | Example 59 | Example 60 | Example 61 |
|---|---|---|---|---|---|
| Liquid crystal composition | Liquid Crystal Composition 8 | Liquid Crystal Composition 8 | Liquid Crystal Composition 8 | Liquid Crystal Composition 8 | Liquid Crystal Composition 8 |
| Sealant | Sealant (1) | Sealant (2) | Sealant (3) | Sealant (4) | Sealant (5) |
| VHR | 99.1 | 99.2 | 99.5 | 99.1 | 99.4 |
| Alignment unevenness | B | A | A | B | A |
| Image-sticking | B | B | A | B | A |

[Table 20]

| | Example 62 | Example 63 | Example 64 |
|---|---|---|---|
| Liquid crystal composition | Liquid Crystal Composition 8 | Liquid Crystal Composition 8 | Liquid Crystal Composition 8 |
| Sealant | Sealant (6) | Sealant (7) | Sealant (8) |
| VHR | 99.4 | 99.5 | 99.3 |
| Alignment unevenness | A | A | A |
| Image-sticking | A | A | B |

[Table 21]

| | Example 65 | Example 66 | Example 67 | Example 68 | Example 69 |
|---|---|---|---|---|---|
| Liquid crystal composition | Liquid Crystal Composition 9 | Liquid Crystal Composition 9 | Liquid Crystal Composition 9 | Liquid Crystal Composition 9 | Liquid Crystal Composition 9 |
| Sealant | Sealant (1) | Sealant (2) | Sealant (3) | Sealant (4) | Sealant (5) |
| VHR | 99.0 | 99.1 | 99.5 | 99.0 | 99.4 |
| Alignment unevenness | B | B | A | B | A |
| Image-sticking | B | B | A | B | B |

[Table 22]

| | Example 70 | Example 71 | Example 72 |
|---|---|---|---|
| Liquid crystal composition | Liquid Crystal Composition 9 | Liquid Crystal Composition 9 | Liquid Crystal Composition 9 |
| Sealant | Sealant (6) | Sealant (7) | Sealant (8) |
| VHR | 99.3 | 99.4 | 99.3 |
| Alignment unevenness | A | A | B |
| Image-sticking | B | A | A |

Liquid Crystal Compositions 7 to 9 were found to have practical liquid crystal phase temperature limits for television applications, large absolute values of dielectric anisotropy, low viscosities, and suitable $\Delta n$.

The liquid crystal display devices of Examples 49 to 72 had high VHRs and exhibited no or only slight and acceptable alignment unevenness and image-sticking.

Examples 73 to 96

Liquid crystal display devices of Examples 73 to 96 were fabricated using Sealants (1) to (8) as in Example 1 except that Liquid Crystal Compositions 10 to 12 shown in the following tables were sandwiched therein. The resulting liquid crystal display devices were tested for VHR and were evaluated for alignment unevenness and image-sticking. The results are shown in the following tables.

[Table 23]

Liquid Crystal Composition 10

| | |
|---|---|
| $T_{NI}$ / °C | 76.7 |
| Δn | 0.109 |
| Δε | -3.0 |
| η / mPa·s | 22.4 |
| $\gamma_1$ / mPa·s | 131 |
| $\gamma_1 / \Delta n^2 \times 10^{-2}$ | 110 |
| 3-Cy-Cy-2 | 24% |
| 3-Cy-Cy-4 | 6% |
| 3-Cy-Ph-O1 | 5% |
| 3-Cy-Ph5-O4 | 6% |
| 3-Ph-Ph5-O2 | 6% |
| 2-Cy-Ph-Ph5-O2 | 8% |
| 3-Cy-Ph-Ph5-O2 | 8% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 6% |

Liquid Crystal Composition 11

| | |
|---|---|
| $T_{NI}$ / °C | 80.3 |
| Δn | 0.105 |
| Δε | -3.1 |
| η / mPa·s | 21.8 |
| $\gamma_1$ / mPa·s | 126 |
| $\gamma_1 / \Delta n^2 \times 10^{-2}$ | 114 |
| 3-Cy-Cy-2 | 24% |
| 3-Cy-Cy-4 | 10% |
| 3-Cy-Ph-O1 | 4% |
| 3-Cy-Ph5-O4 | 6% |
| 3-Ph-Ph5-O2 | 6% |
| 2-Cy-Ph-Ph5-O2 | 8% |
| 3-Cy-Ph-Ph5-O2 | 8% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 3% |

Liquid Crystal Composition 12

| | |
|---|---|
| $T_{NI}$ / °C | 85.8 |
| Δn | 0.104 |
| Δε | -3.2 |
| η / mPa·s | 22.0 |
| $\gamma_1$ / mPa·s | 128 |
| $\gamma_1 / \Delta n^2 \times 10^{-2}$ | 119 |
| 3-Cy-Cy-2 | 24% |
| 3-Cy-Cy-4 | 10% |
| 3-Cy-Ph-O1 | 4% |
| 3-Cy-Ph5-O4 | 6% |
| 3-Ph-Ph5-O2 | 6% |
| 2-Cy-Ph-Ph5-O2 | 8% |
| 3-Cy-Ph-Ph5-O2 | 8% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 3-Cy-Cy-Ph-1 | 3% |

[Table 24]

| | Example 73 | Example 74 | Example 75 | Example 76 | Example 77 |
|---|---|---|---|---|---|
| Liquid crystal composition | Liquid Crystal Composition 10 | Liquid Crystal Composition 10 | Liquid Crystal Composition 10 | Liquid Crystal Composition 10 | Liquid Crystal Composition 10 |
| Sealant | Sealant (1) | Sealant (2) | Sealant (3) | Sealant (4) | Sealant (5) |
| VHR | 99.2 | 99.3 | 99.6 | 99.3 | 99.5 |
| Alignment unevenness | B | B | A | A | A |
| Image-sticking | B | A | A | B | A |

[Table 25]

| | Example 78 | Example 79 | Example 80 |
|---|---|---|---|
| Liquid crystal composition | Liquid Crystal Composition 10 | Liquid Crystal Composition 10 | Liquid Crystal Composition 10 |
| Sealant | Sealant (6) | Sealant (7) | Sealant (8) |
| VHR | 99.4 | 99.6 | 99.4 |
| Alignment unevenness | A | A | B |
| Image-sticking | A | A | A |

[Table 26]

| | Example 81 | Example 82 | Example 83 | Example 84 | Example 85 |
|---|---|---|---|---|---|
| Liquid crystal composition | Liquid Crystal Composition 11 | Liquid Crystal Composition 11 | Liquid Crystal Composition 11 | Liquid Crystal Composition 11 | Liquid Crystal Composition 11 |
| Sealant | Sealant (1) | Sealant (2) | Sealant (3) | Sealant (4) | Sealant (5) |
| VHR | 99.3 | 99.3 | 99.6 | 99.2 | 99.5 |
| Alignment unevenness | B | A | A | B | A |
| Image-sticking | A | B | A | B | A |

[Table 27]

| | Example 86 | Example 87 | Example 88 |
|---|---|---|---|
| Liquid crystal composition | Liquid Crystal Composition 11 | Liquid Crystal Composition 11 | Liquid Crystal Composition 11 |
| Sealant | Sealant (6) | Sealant (7) | Sealant (8) |
| VHR | 99.4 | 99.5 | 99.4 |
| Alignment unevenness | A | A | A |
| Image-sticking | B | A | B |

[Table 28]

| | Example 89 | Example 90 | Example 91 | Example 92 | Example 93 |
|---|---|---|---|---|---|
| Liquid crystal composition | Liquid Crystal Composition 12 | Liquid Crystal Composition 12 | Liquid Crystal Composition 12 | Liquid Crystal Composition 12 | Liquid Crystal Composition 12 |
| Sealant | Sealant (1) | Sealant (2) | Sealant (3) | Sealant (4) | Sealant (5) |
| VHR | 99.3 | 99.4 | 99.7 | 99.4 | 99.6 |
| Alignment unevenness | B | A | A | A | A |
| Image-sticking | B | B | A | B | A |

[Table 29]

| | Example 94 | Example 95 | Example 96 |
|---|---|---|---|
| Liquid crystal composition | Liquid Crystal Composition 12 | Liquid Crystal Composition 12 | Liquid Crystal Composition 12 |
| Sealant | Sealant (6) | Sealant (7) | Sealant (8) |
| VHR | 99.5 | 99.6 | 99.5 |
| Alignment unevenness | A | A | A |
| Image-sticking | A | A | B |

Liquid Crystal Compositions 10 to 12 were found to have practical liquid crystal phase temperature limits for television applications, large absolute values of dielectric anisotropy, low viscosities, and suitable Δn.

The liquid crystal display devices of Examples 73 to 96 had high VHRs and exhibited no or only slight and acceptable alignment unevenness and image-sticking.

Examples 97 to 120

Liquid crystal display devices of Examples 97 to 120 were fabricated using Sealants (1) to (8) as in Example 1 except that Liquid Crystal Compositions 13 to 15 shown in the following tables were sandwiched therein. The resulting liquid crystal display devices were tested for VHR and were evaluated for alignment unevenness and image-sticking. The results are shown in the following tables.

[Table 30]

Liquid Crystal Composition 13

| | |
|---|---|
| $T_{NI}$ / °C | 71.9 |
| Δn | 0.116 |
| Δε | -3.6 |
| η / mPa·s | 21.2 |
| $\gamma_1$ / mPa·s | 123 |
| $\gamma_1 / \Delta n^2 \times 10^{-2}$ | 92 |
| 3-Cy-Cy-2 | 24% |
| 3-Cy-Ph-O1 | 7% |
| 2-Cy-Ph5-O2 | 6% |
| 3-Cy-Ph5-O4 | 6% |
| 3-Ph-Ph5-O2 | 5% |
| 5-Ph-Ph5-O2 | 5% |
| 2-Cy-Ph-Ph5-O2 | 7% |
| 3-Cy-Ph-Ph5-O2 | 9% |
| 3-Cy-Cy-Ph5-O3 | 5% |
| 4-Cy-Cy-Ph5-O2 | 5% |
| 5-Cy-Cy-Ph5-O2 | 4% |
| 3-Ph-Ph5-Ph-2 | 5% |
| 4-Ph-Ph5-Ph-2 | 6% |
| 3-Cy-Cy-Ph-1 | 6% |

Liquid Crystal Composition 14

| | |
|---|---|
| $T_{NI}$ / °C | 78.8 |
| Δn | 0.113 |
| Δε | -3.5 |
| η / mPa·s | 21.1 |
| $\gamma_1$ / mPa·s | 122 |
| $\gamma_1 / \Delta n^2 \times 10^{-2}$ | 95 |
| 3-Cy-Cy-2 | 23% |
| 3-Cy-Cy-4 | 5% |
| 3-Cy-Ph-O1 | 3% |
| 2-Cy-Ph5-O2 | 5% |
| 3-Cy-Ph5-O4 | 5% |
| 3-Ph-Ph5-O2 | 5% |
| 5-Ph-Ph5-O2 | 5% |
| 2-Cy-Ph-Ph5-O2 | 7% |
| 3-Cy-Ph-Ph5-O2 | 7% |
| 3-Cy-Cy-Ph5-O3 | 5% |
| 4-Cy-Cy-Ph5-O2 | 6% |
| 5-Cy-Cy-Ph5-O2 | 5% |
| 3-Ph-Ph5-Ph-2 | 5% |
| 4-Ph-Ph5-Ph-2 | 6% |
| 3-Cy-Cy-Ph-1 | 8% |

Liquid Crystal Composition 15

| | |
|---|---|
| $T_{NI}$ / °C | 73.8 |
| Δn | 0.113 |
| Δε | -3.9 |
| η / mPa·s | 21.8 |
| $\gamma_1$ / mPa·s | 123 |
| $\gamma_1 / \Delta n^2 \times 10^{-2}$ | 97 |
| 3-Cy-Cy-2 | 16% |
| 3-Cy-Cy-4 | 9% |
| 3-Cy-Ph-O1 | 6% |
| 2-Cy-Ph5-O2 | 6% |
| 3-Cy-Ph5-O4 | 6% |
| 3-Ph-Ph5-O2 | 6% |
| 5-Ph-Ph5-O2 | 6% |
| 2-Cy-Ph-Ph5-O2 | 5% |
| 3-Cy-Ph-Ph5-O2 | 7% |
| 3-Cy-Cy-Ph5-O3 | 5% |
| 4-Cy-Cy-Ph5-O2 | 6% |
| 5-Cy-Cy-Ph5-O2 | 6% |
| 3-Ph-Ph5-Ph-2 | 5% |
| 4-Ph-Ph5-Ph-2 | 5% |
| 3-Cy-Cy-Ph-1 | 6% |

[Table 31]

| | Example 97 | Example 98 | Example 99 | Example 100 | Example 101 |
|---|---|---|---|---|---|
| Liquid crystal composition | Liquid Crystal Composition 13 | Liquid Crystal Composition 13 | Liquid Crystal Composition 13 | Liquid Crystal Composition 13 | Liquid Crystal Composition 13 |
| Sealant | Sealant (1) | Sealant (2) | Sealant (3) | Sealant (4) | Sealant (5) |
| VHR | 99.1 | 99.2 | 99.6 | 99.1 | 99.4 |
| Alignment unevenness | B | B | A | A | B |
| Image-sticking | B | A | A | B | A |

[Table 32]

| | Example 102 | Example 103 | Example 104 |
|---|---|---|---|
| Liquid crystal composition | Liquid Crystal Composition 13 | Liquid Crystal Composition 13 | Liquid Crystal Composition 13 |
| Sealant | Sealant (6) | Sealant (7) | Sealant (8) |
| VHR | 99.4 | 99.6 | 99.3 |
| Alignment unevenness | B | A | A |
| Image-sticking | A | A | B |

[Table 33]

| | Example 105 | Example 106 | Example 107 | Example 108 | Example 109 |
|---|---|---|---|---|---|
| Liquid crystal composition | Liquid Crystal Composition 14 | Liquid Crystal Composition 14 | Liquid Crystal Composition 14 | Liquid Crystal Composition 14 | Liquid Crystal Composition 14 |
| Sealant | Sealant (1) | Sealant (2) | Sealant (3) | Sealant (4) | Sealant (5) |
| VHR | 99.2 | 99.3 | 99.5 | 99.2 | 99.4 |
| Alignment unevenness | B | A | A | B | A |
| Image-sticking | B | B | A | B | A |

[Table 34]

| | Example 110 | Example 111 | Example 112 |
|---|---|---|---|
| Liquid crystal composition | Liquid Crystal Composition 14 | Liquid Crystal Composition 14 | Liquid Crystal Composition 14 |
| Sealant | Sealant (6) | Sealant (7) | Sealant (8) |
| VHR | 99.4 | 99.5 | 99.3 |
| Alignment unevenness | A | A | A |
| Image-sticking | A | A | B |

[Table 35]

| | Example 113 | Example 114 | Example 115 | Example 116 | Example 117 |
|---|---|---|---|---|---|
| Liquid crystal composition | Liquid Crystal Composition 15 | Liquid Crystal Composition 15 | Liquid Crystal Composition 15 | Liquid Crystal Composition 15 | Liquid Crystal Composition 15 |
| Sealant | Sealant (1) | Sealant (2) | Sealant (3) | Sealant (4) | Sealant (5) |
| VHR | 99.0 | 99.1 | 99.5 | 99.0 | 99.4 |
| Alignment unevenness | B | B | A | A | A |
| Image-sticking | B | B | A | B | A |

[Table 36]

| | Example 118 | Example 119 | Example 120 |
|---|---|---|---|
| Liquid crystal composition | Liquid Crystal Composition 15 | Liquid Crystal Composition 15 | Liquid Crystal Composition 15 |
| Sealant | Sealant (6) | Sealant (7) | Sealant (8) |
| VHR | 99.3 | 99.5 | 99.3 |
| Alignment unevenness | A | A | A |
| Image-sticking | A | A | B |

Liquid Crystal Compositions 13 to 15 were found to have practical liquid crystal phase temperature limits for television applications, large absolute values of dielectric anisotropy, low viscosities, and suitable Δn.

The liquid crystal display devices of Examples 97 to 120 had high VHRs and exhibited no or only slight and acceptable alignment unevenness and image-sticking.

Examples 121 to 144

Liquid crystal display devices of Examples 121 to 144 were fabricated using Sealants (1) to (8) as in Example 1 except that Liquid Crystal Compositions 16 to 18 shown in the following tables were sandwiched therein. The resulting liquid crystal display devices were tested for VHR and were evaluated for alignment unevenness and image-sticking. The results are shown in the following tables.

[Table 37]

Liquid Crystal Composition 16

| | |
|---|---|
| $T_{NI}$ / °C | 75.9 |
| Δn | 0.112 |
| Δε | -2.8 |
| η / mPa·s | 19.8 |
| $\gamma_1$ / mPa·s | 121 |
| $\gamma_1 / \Delta n^2 \times 10^{-2}$ | 96 |
| 3-Cy-Cy-2 | 19% |
| 3-Cy-Cy-4 | 12% |
| 3-Cy-Cy-5 | 5% |
| 3-Cy-Ph-O1 | 5% |
| 2-Cy-Ph5-O2 | 4% |
| 3-Cy-Ph5-O4 | 4% |
| 3-Ph-Ph5-O2 | 3% |
| 5-Ph-Ph5-O2 | 4% |
| 2-Cy-Ph-Ph5-O2 | 6% |
| 3-Cy-Ph-Ph5-O2 | 6% |
| 3-Cy-Cy-Ph5-O3 | 5% |
| 4-Cy-Cy-Ph5-O2 | 5% |
| 5-Cy-Cy-Ph5-O2 | 5% |
| 3-Ph-Ph5-Ph-2 | 8% |
| 4-Ph-Ph5-Ph-2 | 9% |

Liquid Crystal Composition 17

| | |
|---|---|
| $T_{NI}$ / °C | 82.3 |
| Δn | 0.111 |
| Δε | -2.7 |
| η / mPa·s | 19.2 |
| $\gamma_1$ / mPa·s | 114 |
| $\gamma_1 / \Delta n^2 \times 10^{-2}$ | 94 |
| 3-Cy-Cy-2 | 21% |
| 3-Cy-Cy-4 | 12% |
| 3-Cy-Cy-5 | 5% |
| 2-Cy-Ph5-O2 | 4% |
| 3-Cy-Ph5-O4 | 4% |
| 3-Ph-Ph5-O2 | 3% |
| 5-Ph-Ph5-O2 | 4% |
| 2-Cy-Ph-Ph5-O2 | 6% |
| 3-Cy-Ph-Ph5-O2 | 6% |
| 3-Cy-Cy-Ph5-O3 | 5% |
| 4-Cy-Cy-Ph5-O2 | 5% |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 6% |

Liquid Crystal Composition 18

| | |
|---|---|
| $T_{NI}$ / °C | 85.7 |
| Δn | 0.112 |
| Δε | -2.8 |
| η / mPa·s | 20.1 |
| $\gamma_1$ / mPa·s | 119 |
| $\gamma_1 / \Delta n^2 \times 10^{-2}$ | 95 |
| 3-Cy-Cy-2 | 19% |
| 3-Cy-Cy-4 | 12% |
| 3-Cy-Cy-5 | 4% |
| 2-Cy-Ph5-O2 | 4% |
| 3-Cy-Ph5-O4 | 4% |
| 3-Ph-Ph5-O2 | 3% |
| 5-Ph-Ph5-O2 | 4% |
| 2-Cy-Ph-Ph5-O2 | 6% |
| 3-Cy-Ph-Ph5-O2 | 6% |
| 3-Cy-Cy-Ph5-O3 | 5% |
| 4-Cy-Cy-Ph5-O2 | 5% |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 9% |

[Table 38]

| | Example 121 | Example 122 | Example 123 | Example 124 | Example 125 |
|---|---|---|---|---|---|
| Liquid crystal composition | Liquid Crystal Composition 16 | Liquid Crystal Composition 16 | Liquid Crystal Composition 16 | Liquid Crystal Composition 16 | Liquid Crystal Composition 16 |
| Sealant | Sealant (1) | Sealant (2) | Sealant (3) | Sealant (4) | Sealant (5) |
| VHR | 99.1 | 99.3 | 99.5 | 99.2 | 99.4 |
| Alignment unevenness | B | A | A | B | A |
| Image-sticking | B | B | A | A | A |

[Table 39]

| | Example 126 | Example 127 | Example 128 |
|---|---|---|---|
| Liquid crystal composition | Liquid Crystal Composition 16 | Liquid Crystal Composition 16 | Liquid Crystal Composition 16 |
| Sealant | Sealant (6) | Sealant (7) | Sealant (8) |
| VHR | 99.3 | 99.4 | 99.3 |
| Alignment unevenness | B | A | A |
| Image-sticking | A | A | B |

[Table 40]

| | Example 129 | Example 130 | Example 131 | Example 132 | Example 133 |
|---|---|---|---|---|---|
| Liquid crystal composition | Liquid Crystal Composition 17 | Liquid Crystal Composition 17 | Liquid Crystal Composition 17 | Liquid Crystal Composition 17 | Liquid Crystal Composition 17 |
| Sealant | Sealant (1) | Sealant (2) | Sealant (3) | Sealant (4) | Sealant (5) |
| VHR | 99.0 | 99.2 | 99.4 | 99.1 | 99.3 |
| Alignment unevenness | B | A | A | A | A |
| Image-sticking | B | B | A | B | B |

[Table 41]

| | Example 134 | Example 135 | Example 136 |
|---|---|---|---|
| Liquid crystal composition | Liquid Crystal Composition 17 | Liquid Crystal Composition 17 | Liquid Crystal Composition 17 |
| Sealant | Sealant (6) | Sealant (7) | Sealant (8) |
| VHR | 99.3 | 99.4 | 99.2 |
| Alignment unevenness | A | A | B |
| Image-sticking | A | A | A |

[Table 42]

| | Example 137 | Example 138 | Example 139 | Example 140 | Example 141 |
|---|---|---|---|---|---|
| Liquid crystal composition | Liquid Crystal Composition 18 | Liquid Crystal Composition 18 | Liquid Crystal Composition 18 | Liquid Crystal Composition 18 | Liquid Crystal Composition 18 |
| Sealant | Sealant (1) | Sealant (2) | Sealant (3) | Sealant (4) | Sealant (5) |
| VHR | 99.1 | 99.2 | 99.5 | 99.1 | 99.3 |
| Alignment unevenness | A | B | A | A | A |
| Image-sticking | B | A | A | B | B |

[Table 43]

| | Example 142 | Example 143 | Example 144 |
|---|---|---|---|
| Liquid crystal composition | Liquid Crystal Composition 18 | Liquid Crystal Composition 18 | Liquid Crystal Composition 18 |
| Sealant | Sealant (6) | Sealant (7) | Sealant (8) |
| VHR | 99.3 | 99.4 | 99.2 |
| Alignment unevenness | A | A | A |
| Image-sticking | A | A | B |

Liquid Crystal Compositions 16 to 18 were found to have practical liquid crystal phase temperature limits for television applications, large absolute values of dielectric anisotropy, low viscosities, and suitable $\Delta n$.

The liquid crystal display devices of Examples 121 to 144 had high VHRs and exhibited no or only slight and acceptable alignment unevenness and image-sticking.

Examples 145 to 168

Liquid crystal display devices of Examples 145 to 168 were fabricated using Sealants (1) to (8) as in Example 1 except that Liquid Crystal Compositions 19 to 21 shown in the following tables were sandwiched therein. The resulting liquid crystal display devices were tested for VHR and were evaluated for alignment unevenness and image-sticking. The results are shown in the following tables.

[Table 44]

Liquid Crystal Composition 19

| | |
|---|---|
| $T_{NI}$ / °C | 77.1 |
| Δn | 0.104 |
| Δε | -3.5 |
| η / mPa·s | 25.1 |
| $\gamma_1$ / mPa·s | 141 |
| $\gamma_1 / \Delta n^2 \times 10^{-2}$ | 131 |
| 3-Cy-Cy-2 | 22% |
| 3-Cy-Ph-O1 | 14% |
| 2-Cy-Ph5-O2 | 7% |
| 3-Cy-Ph5-O4 | 8% |
| 2-Cy-Ph-Ph5-O2 | 7% |
| 3-Cy-Ph-Ph5-O2 | 9% |
| 3-Cy-Cy-Ph5-O3 | 8% |
| 4-Cy-Cy-Ph5-O2 | 8% |
| 5-Cy-Cy-Ph5-O2 | 8% |
| 3-Ph-Ph5-Ph-2 | 5% |
| 4-Ph-Ph5-Ph-2 | 4% |

Liquid Crystal Composition 20

| | |
|---|---|
| $T_{NI}$ / °C | 82.7 |
| Δn | 0.107 |
| Δε | -3.0 |
| η / mPa·s | 24.2 |
| $\gamma_1$ / mPa·s | 141 |
| $\gamma_1 / \Delta n^2 \times 10^{-2}$ | 123 |
| 3-Cy-Cy-2 | 24% |
| 3-Cy-Cy-4 | 5% |
| 3-Cy-Ph-O1 | 6% |
| 2-Cy-Ph5-O2 | 5% |
| 3-Cy-Ph5-O4 | 5% |
| 2-Cy-Ph-Ph5-O2 | 7% |
| 3-Cy-Ph-Ph5-O2 | 9% |
| 3-Cy-Cy-Ph5-O3 | 8% |
| 4-Cy-Cy-Ph5-O2 | 8% |
| 5-Cy-Cy-Ph5-O2 | 8% |
| 3-Ph-Ph5-Ph-2 | 5% |
| 4-Ph-Ph5-Ph-2 | 5% |
| 5-Ph-Ph-1 | 5% |

Liquid Crystal Composition 21

| | |
|---|---|
| $T_{NI}$ / °C | 86.4 |
| Δn | 0.106 |
| Δε | -3.0 |
| η / mPa·s | 24.4 |
| $\gamma_1$ / mPa·s | 142 |
| $\gamma_1 / \Delta n^2 \times 10^{-2}$ | 126 |
| 3-Cy-Cy-2 | 24% |
| 3-Cy-Cy-4 | 5% |
| 3-Cy-Ph-O1 | 6% |
| 2-Cy-Ph5-O2 | 5% |
| 3-Cy-Ph5-O4 | 5% |
| 2-Cy-Ph-Ph5-O2 | 7% |
| 3-Cy-Ph-Ph5-O2 | 9% |
| 3-Cy-Cy-Ph5-O3 | 8% |
| 4-Cy-Cy-Ph5-O2 | 8% |
| 5-Cy-Cy-Ph5-O2 | 8% |
| 3-Ph-Ph5-Ph-2 | 5% |
| 4-Ph-Ph5-Ph-2 | 5% |
| 5-Ph-Ph-1 | 3% |
| 3-Cy-Cy-Ph-1 | 2% |

[Table 45]

| | Example 145 | Example 146 | Example 147 | Example 148 | Example 149 |
|---|---|---|---|---|---|
| Liquid crystal composition | Liquid Crystal Composition 19 | Liquid Crystal Composition 19 | Liquid Crystal Composition 19 | Liquid Crystal Composition 19 | Liquid Crystal Composition 19 |
| Sealant | Sealant (1) | Sealant (2) | Sealant (3) | Sealant (4) | Sealant (5) |
| VHR | 99.2 | 99.3 | 99.6 | 99.3 | 99.5 |
| Alignment unevenness | B | A | A | A | A |
| Image-sticking | B | B | A | B | A |

[Table 46]

| | Example 150 | Example 151 | Example 152 |
|---|---|---|---|
| Liquid crystal composition | Liquid Crystal Composition 19 | Liquid Crystal Composition 19 | Liquid Crystal Composition 19 |
| Sealant | Sealant (6) | Sealant (7) | Sealant (8) |
| VHR | 99.4 | 99.5 | 99.4 |
| Alignment unevenness | A | A | A |
| Image-sticking | B | A | B |

[Table 47]

| | Example 153 | Example 154 | Example 155 | Example 156 | Example 157 |
|---|---|---|---|---|---|
| Liquid crystal composition | Liquid Crystal Composition 20 | Liquid Crystal Composition 20 | Liquid Crystal Composition 20 | Liquid Crystal Composition 20 | Liquid Crystal Composition 20 |
| Sealant | Sealant (1) | Sealant (2) | Sealant (3) | Sealant (4) | Sealant (5) |
| VHR | 99.3 | 99.4 | 99.7 | 99.4 | 99.6 |
| Alignment unevenness | B | B | A | A | A |
| Image-sticking | B | A | A | B | A |

[Table 48]

| | Example 158 | Example 159 | Example 160 |
|---|---|---|---|
| Liquid crystal composition | Liquid Crystal Composition 20 | Liquid Crystal Composition 20 | Liquid Crystal Composition 20 |
| Sealant | Sealant (6) | Sealant (7) | Sealant (8) |
| VHR | 99.5 | 99.6 | 99.5 |
| Alignment unevenness | A | A | B |
| Image-sticking | A | A | A |

[Table 49]

| | Example 161 | Example 162 | Example 163 | Example 164 | Example 165 |
|---|---|---|---|---|---|
| Liquid crystal composition | Liquid Crystal Composition 21 | Liquid Crystal Composition 21 | Liquid Crystal Composition 21 | Liquid Crystal Composition 21 | Liquid Crystal Composition 21 |
| Sealant | Sealant (1) | Sealant (2) | Sealant (3) | Sealant (4) | Sealant (5) |
| VHR | 99.0 | 99.1 | 99.4 | 99.1 | 99.3 |
| Alignment unevenness | A | A | A | B | A |
| Image-sticking | B | B | A | B | A |

[Table 50]

| | Example 166 | Example 167 | Example 168 |
|---|---|---|---|
| Liquid crystal composition | Liquid Crystal Composition 21 | Liquid Crystal Composition 21 | Liquid Crystal Composition 21 |
| Sealant | Sealant (6) | Sealant (7) | Sealant (8) |
| VHR | 99.3 | 99.4 | 99.2 |
| Alignment unevenness | B | A | B |
| Image-sticking | A | A | A |

Liquid Crystal Compositions 19 to 21 were found to have practical liquid crystal phase temperature limits for television applications, large absolute values of dielectric anisotropy, low viscosities, and suitable $\Delta n$.

The liquid crystal display devices of Examples 145 to 168 had high VHRs and exhibited no or only slight and acceptable alignment unevenness and image-sticking.

Examples 169 to 192

Liquid crystal display devices of Examples 169 to 192 were fabricated using Sealants (1) to (8) as in Example 1 except that Liquid Crystal Compositions 22 to 24 shown in the following tables were sandwiched therein. The resulting liquid crystal display devices were tested for VHR and were evaluated for alignment unevenness and image-sticking. The results are shown in the following tables.

[Table 51]

Liquid Crystal Composition 22

| | |
|---|---|
| $T_{NI}$ / °C | 75.5 |
| $\Delta n$ | 0.102 |
| $\Delta\varepsilon$ | -2.8 |
| $\eta$ / mPa·s | 22.2 |
| $\gamma_1$ / mPa·s | 121 |
| $\gamma_1 / \Delta n^2 \times 10^{-2}$ | 117 |
| 3-Cy-Cy-2 | 14% |
| 3-Cy-Cy-4 | 12% |
| 3-Cy-Cy-5 | 5% |
| 3-Cy-Ph-O1 | 7% |
| 2-Cy-Ph5-O2 | 7% |
| 3-Cy-Ph5-O4 | 7% |
| 2-Cy-Ph-Ph5-O2 | 8% |
| 3-Cy-Ph-Ph5-O2 | 8% |
| 3-Cy-Cy-Ph5-O3 | 6% |
| 4-Cy-Cy-Ph5-O2 | 7% |
| 5-Cy-Cy-Ph5-O2 | 6% |
| 3-Ph-Ph5-Ph-2 | 3% |
| 4-Ph-Ph5-Ph-2 | 3% |
| 5-Ph-Ph-1 | 6% |
| 3-Cy-Cy-Ph-1 | 1% |

Liquid Crystal Composition 23

| | |
|---|---|
| $T_{NI}$ / °C | 80.3 |
| $\Delta n$ | 0.101 |
| $\Delta\varepsilon$ | -2.9 |
| $\eta$ / mPa·s | 22.0 |
| $\gamma_1$ / mPa·s | 118 |
| $\gamma_1 / \Delta n^2 \times 10^{-2}$ | 117 |
| 3-Cy-Cy-2 | 17% |
| 3-Cy-Cy-4 | 12% |
| 3-Cy-Cy-5 | 5% |
| 3-Cy-Ph-O1 | 6% |
| 2-Cy-Ph5-O2 | 12% |
| 2-Cy-Ph-Ph5-O2 | 9% |
| 3-Cy-Ph-Ph5-O2 | 9% |
| 3-Cy-Cy-Ph5-O3 | 6% |
| 4-Cy-Cy-Ph5-O2 | 8% |
| 5-Cy-Cy-Ph5-O2 | 6% |
| 3-Ph-Ph5-Ph-2 | 3% |
| 4-Ph-Ph5-Ph-2 | 3% |
| 5-Ph-Ph-1 | 4% |

Liquid Crystal Composition 24

| | |
|---|---|
| $T_{NI}$ / °C | 85.0 |
| $\Delta n$ | 0.102 |
| $\Delta\varepsilon$ | -3.0 |
| $\eta$ / mPa·s | 22.7 |
| $\gamma_1$ / mPa·s | 122 |
| $\gamma_1 / \Delta n^2 \times 10^{-2}$ | 118 |
| 3-Cy-Cy-2 | 16% |
| 3-Cy-Cy-4 | 12% |
| 3-Cy-Cy-5 | 5% |
| 3-Cy-Ph-O1 | 5% |
| 2-Cy-Ph5-O2 | 12% |
| 2-Cy-Ph-Ph5-O2 | 9% |
| 3-Cy-Ph-Ph5-O2 | 9% |
| 3-Cy-Cy-Ph5-O3 | 6% |
| 4-Cy-Cy-Ph5-O2 | 8% |
| 5-Cy-Cy-Ph5-O2 | 6% |
| 3-Ph-Ph5-Ph-2 | 3% |
| 4-Ph-Ph5-Ph-2 | 3% |
| 5-Ph-Ph-1 | 3% |
| 3-Cy-Cy-Ph-1 | 3% |

[Table 52]

| | Example 169 | Example 170 | Example 171 | Example 172 | Example 173 |
|---|---|---|---|---|---|
| Liquid crystal composition | Liquid Crystal Composition 22 | Liquid Crystal Composition 22 | Liquid Crystal Composition 22 | Liquid Crystal Composition 22 | Liquid Crystal Composition 22 |
| Sealant | Sealant (1) | Sealant (2) | Sealant (3) | Sealant (4) | Sealant (5) |
| VHR | 99.0 | 99.2 | 99.5 | 99.2 | 99.4 |
| Alignment unevenness | B | A | A | A | A |
| Image-sticking | B | B | A | B | B |

[Table 53]

| | Example 174 | Example 175 | Example 176 |
|---|---|---|---|
| Liquid crystal composition | Liquid Crystal Composition 22 | Liquid Crystal Composition 22 | Liquid Crystal Composition 22 |
| Sealant | Sealant (6) | Sealant (7) | Sealant (8) |
| VHR | 99.3 | 99.5 | 99.3 |
| Alignment unevenness | A | A | A |
| Image-sticking | B | A | A |

[Table 54]

| | Example 177 | Example 178 | Example 179 | Example 180 | Example 181 |
|---|---|---|---|---|---|
| Liquid crystal composition | Liquid Crystal Composition 23 | Liquid Crystal Composition 23 | Liquid Crystal Composition 23 | Liquid Crystal Composition 23 | Liquid Crystal Composition 23 |
| Sealant | Sealant (1) | Sealant (2) | Sealant (3) | Sealant (4) | Sealant (5) |
| VHR | 99.1 | 99.2 | 99.5 | 99.1 | 99.4 |
| Alignment unevenness | A | B | A | B | A |
| Image-sticking | B | A | A | B | A |

[Table 55]

| | Example 182 | Example 183 | Example 184 |
|---|---|---|---|
| Liquid crystal composition | Liquid Crystal Composition 23 | Liquid Crystal Composition 23 | Liquid Crystal Composition 23 |
| Sealant | Sealant (6) | Sealant (7) | Sealant (8) |
| VHR | 99.3 | 99.5 | 99.3 |
| Alignment unevenness | A | A | A |
| Image-sticking | B | A | B |

[Table 56]

| | Example 185 | Example 186 | Example 187 | Example 188 | Example 189 |
|---|---|---|---|---|---|
| Liquid crystal composition | Liquid Crystal Composition 24 | Liquid Crystal Composition 24 | Liquid Crystal Composition 24 | Liquid Crystal Composition 24 | Liquid Crystal Composition 24 |
| Sealant | Sealant (1) | Sealant (2) | Sealant (3) | Sealant (4) | Sealant (5) |
| VHR | 99.3 | 99.4 | 99.7 | 99.3 | 99.6 |
| Alignment unevenness | B | B | A | B | A |
| Image-sticking | B | A | A | A | A |

[Table 57]

| | Example 190 | Example 191 | Example 192 |
|---|---|---|---|
| Liquid crystal composition | Liquid Crystal Composition 24 | Liquid Crystal Composition 24 | Liquid Crystal Composition 24 |
| Sealant | Sealant (6) | Sealant (7) | Sealant (8) |
| VHR | 99.5 | 99.7 | 99.5 |
| Alignment unevenness | A | A | B |
| Image-sticking | A | A | A |

Liquid Crystal Compositions 22 to 24 were found to have practical liquid crystal phase temperature limits for television applications, large absolute values of dielectric anisotropy, low viscosities, and suitable Δn.

The liquid crystal display devices of Examples 169 to 192 had high VHRs and exhibited no or only slight and acceptable alignment unevenness and image-sticking.

Examples 193 to 216

Liquid crystal display devices of Examples 193 to 216 were fabricated using Sealants (1) to (8) as in Example 1 except that Liquid Crystal Compositions 25 to 27 shown in the following tables were sandwiched therein. The resulting liquid crystal display devices were tested for VHR and were evaluated for alignment unevenness and image-sticking. The results are shown in the following tables.

[Table 58]

Liquid Crystal Composition 25

| | |
|---|---|
| $T_{NI}$ / °C | 75.6 |
| Δn | 0.104 |
| Δε | -2.8 |
| η / mPa·s | 20.2 |
| $\gamma_1$ / mPa·s | 117 |
| $\gamma_1 / \Delta n^2 \times 10^{-2}$ | 107 |
| 3-Cy-Cy-2 | 25% |
| 3-Cy-Cy-4 | 10% |
| 3-Cy-Ph-O1 | 4% |
| 2-Cy-Ph5-O2 | 7% |
| 3-Cy-Ph5-O4 | 8% |
| 2-Cy-Ph-Ph5-O2 | 5% |
| 3-Cy-Ph-Ph5-O2 | 6% |
| 3-Cy-Cy-Ph5-O3 | 6% |
| 4-Cy-Cy-Ph5-O2 | 7% |
| 5-Cy-Cy-Ph5-O2 | 6% |
| 3-Ph-Ph5-Ph-2 | 8% |
| 4-Ph-Ph5-Ph-2 | 8% |

Liquid Crystal Composition 26

| | |
|---|---|
| $T_{NI}$ / °C | 81.1 |
| Δn | 0.105 |
| Δε | -2.8 |
| η / mPa·s | 20.8 |
| $\gamma_1$ / mPa·s | 119 |
| $\gamma_1 / \Delta n^2 \times 10^{-2}$ | 107 |
| 3-Cy-Cy-2 | 25% |
| 3-Cy-Cy-4 | 10% |
| 3-Cy-Ph-O1 | 4% |
| 2-Cy-Ph5-O2 | 12% |
| 2-Cy-Ph-Ph5-O2 | 5% |
| 3-Cy-Ph-Ph5-O2 | 6% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 8% |
| 4-Ph-Ph5-Ph-2 | 8% |

Liquid Crystal Composition 27

| | |
|---|---|
| $T_{NI}$ / °C | 85.7 |
| Δn | 0.105 |
| Δε | -2.9 |
| η / mPa·s | 21.0 |
| $\gamma_1$ / mPa·s | 92 |
| $\gamma_1 / \Delta n^2 \times 10^{-2}$ | 82 |
| 3-Cy-Cy-2 | 25% |
| 3-Cy-Cy-4 | 12% |
| 2-Cy-Ph5-O2 | 12% |
| 2-Cy-Ph-Ph5-O2 | 5% |
| 3-Cy-Ph-Ph5-O2 | 6% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 8% |
| 4-Ph-Ph5-Ph-2 | 8% |
| 3-Cy-Cy-Ph-1 | 2% |

[Table 59]

| | Example 193 | Example 194 | Example 195 | Example 196 | Example 197 |
|---|---|---|---|---|---|
| Liquid crystal composition | Liquid Crystal Composition 25 | Liquid Crystal Composition 25 | Liquid Crystal Composition 25 | Liquid Crystal Composition 25 | Liquid Crystal Composition 25 |
| Sealant | Sealant (1) | Sealant (2) | Sealant (3) | Sealant (4) | Sealant (5) |
| VHR | 99.4 | 99.5 | 99.8 | 99.5 | 99.6 |
| Alignment unevenness | A | A | A | B | A |
| Image-sticking | B | B | A | B | B |

[Table 60]

| | Example 198 | Example 199 | Example 200 |
|---|---|---|---|
| Liquid crystal composition | Liquid Crystal Composition 25 | Liquid Crystal Composition 25 | Liquid Crystal Composition 25 |
| Sealant | Sealant (6) | Sealant (7) | Sealant (8) |
| VHR | 99.6 | 99.7 | 99.5 |
| Alignment unevenness | A | A | B |
| Image-sticking | B | A | A |

[Table 61]

| | Example 201 | Example 202 | Example 203 | Example 204 | Example 205 |
|---|---|---|---|---|---|
| Liquid crystal composition | Liquid Crystal Composition 26 | Liquid Crystal Composition 26 | Liquid Crystal Composition 26 | Liquid Crystal Composition 26 | Liquid Crystal Composition 26 |
| Sealant | Sealant (1) | Sealant (2) | Sealant (3) | Sealant (4) | Sealant (5) |
| VHR | 99.2 | 99.4 | 99.6 | 99.3 | 99.5 |
| Alignment unevenness | B | B | A | A | A |
| Image-sticking | B | A | A | B | A |

[Table 62]

| | Example 206 | Example 207 | Example 208 |
|---|---|---|---|
| Liquid crystal composition | Liquid Crystal Composition 26 | Liquid Crystal Composition 26 | Liquid Crystal Composition 26 |
| Sealant | Sealant (6) | Sealant (7) | Sealant (8) |
| VHR | 99.5 | 99.6 | 99.4 |
| Alignment unevenness | A | A | B |
| Image-sticking | A | A | A |

[Table 63]

| | Example 209 | Example 210 | Example 211 | Example 212 | Example 213 |
|---|---|---|---|---|---|
| Liquid crystal composition | Liquid Crystal Composition 27 | Liquid Crystal Composition 27 | Liquid Crystal Composition 27 | Liquid Crystal Composition 27 | Liquid Crystal Composition 27 |
| Sealant | Sealant (1) | Sealant (2) | Sealant (3) | Sealant (4) | Sealant (5) |
| VHR | 99.1 | 99.2 | 99.5 | 99.1 | 99.4 |
| Alignment unevenness | A | A | A | B | A |
| Image-sticking | B | B | A | B | A |

[Table 64]

| | Example 214 | Example 215 | Example 216 |
|---|---|---|---|
| Liquid crystal composition | Liquid Crystal Composition 27 | Liquid Crystal Composition 27 | Liquid Crystal Composition 27 |
| Sealant | Sealant (6) | Sealant (7) | Sealant (8) |
| VHR | 99.3 | 99.4 | 99.3 |
| Alignment unevenness | B | A | A |
| Image-sticking | A | A | A |

Liquid Crystal Compositions 25 to 27 were found to have practical liquid crystal phase temperature limits for television applications, large absolute values of dielectric anisotropy, low viscosities, and suitable $\Delta n$.

The liquid crystal display devices of Examples 193 to 216 had high VHRs and exhibited no or only slight and acceptable alignment unevenness and image-sticking.

Examples 217 to 224

Liquid Crystal Composition 1 was mixed with 0.3% by mass of 4-{2-[4-(2-acryloyloxyethyl)phenoxycarbonyl]ethyl}biphenyl-4'-yl 2-methylacrylate to obtain Liquid Crystal Composition 28. Liquid Crystal Composition 28 was sandwiched and sealed using one of Sealants (1) to (8) as in Example 1. The liquid crystal composition was polymerized by exposure to UV radiation for 600 seconds (3.0 J/cm$^2$) with a drive voltage being applied across the electrodes. In this way, PSVA liquid crystal display devices of Examples 217 to 224 were fabricated. The resulting liquid crystal display devices were tested for VHR and were evaluated for alignment unevenness and image-sticking. The results are shown in the following tables.

[Table 65]

| | Example 217 | Example 218 | Example 219 | Example 220 | Example 221 |
|---|---|---|---|---|---|
| Liquid crystal composition | Liquid Crystal Composition 28 | Liquid Crystal Composition 28 | Liquid Crystal Composition 28 | Liquid Crystal Composition 28 | Liquid Crystal Composition 28 |
| Sealant | Sealant (1) | Sealant (2) | Sealant (3) | Sealant (4) | Sealant (5) |
| VHR | 99.0 | 99.2 | 99.4 | 99.1 | 99.4 |
| Alignment unevenness | B | A | A | A | B |
| Image-sticking | B | B | A | B | A |

[Table 66]

| | Example 222 | Example 223 | Example 224 |
|---|---|---|---|
| Liquid crystal composition | Liquid Crystal Composition 28 | Liquid Crystal Composition 28 | Liquid Crystal Composition 28 |
| Sealant | Sealant (6) | Sealant (7) | Sealant (8) |
| VHR | 99.3 | 99.4 | 99.2 |
| Alignment unevenness | A | A | B |
| Image-sticking | A | A | B |

The liquid crystal display devices of Examples 217 to 224 had high VHRs and exhibited no or only slight and acceptable alignment unevenness and image-sticking.

Examples 225 to 232

Liquid Crystal Composition 13 was mixed with 0.3% by mass of biphenyl-4,4'-diyl bismethacrylate to obtain Liquid Crystal Composition 29. Liquid Crystal Composition 29 was sandwiched and sealed using one of Sealants (1) to (8) as in Example 1. The liquid crystal composition was polymerized by exposure to UV radiation for 600 seconds (3.0 J/cm$^2$) with a drive voltage being applied across the electrodes. In this way, PSVA liquid crystal display devices of Examples 225 to 232 were fabricated. The resulting liquid crystal display devices were tested for VHR and were evaluated for alignment unevenness and image-sticking. The results are shown in the following tables.

[Table 67]

| | Example 225 | Example 226 | Example 227 | Example 228 | Example 229 |
|---|---|---|---|---|---|
| Liquid crystal composition | Liquid Crystal Composition 29 | Liquid Crystal Composition 29 | Liquid Crystal Composition 29 | Liquid Crystal Composition 29 | Liquid Crystal Composition 29 |
| Sealant | Sealant (1) | Sealant (2) | Sealant (3) | Sealant (4) | Sealant (5) |
| VHR | 99.1 | 99.2 | 99.5 | 99.2 | 99.5 |
| Alignment unevenness | A | A | A | A | A |
| Image-sticking | B | B | A | B | A |

[Table 68]

| | Example 230 | Example 231 | Example 232 |
|---|---|---|---|
| Liquid crystal composition | Liquid Crystal Composition 29 | Liquid Crystal Composition 29 | Liquid Crystal Composition 29 |
| Sealant | Sealant (6) | Sealant (7) | Sealant (8) |
| VHR | 99.4 | 99.5 | 99.3 |
| Alignment unevenness | B | A | B |
| Image-sticking | A | A | A |

The liquid crystal display devices of Examples 225 to 232 had high VHRs and exhibited no or only slight and acceptable alignment unevenness and image-sticking.

Examples 233 to 240

Liquid Crystal Composition 19 was mixed with 0.3% by mass of 3-fluorobiphenyl-4,4'-diyl bismethacrylate to obtain Liquid Crystal Composition 30. Liquid Crystal Composition 30 was sandwiched and sealed using one of Sealants (1) to (8) as in Example 1. The liquid crystal composition was polymerized by exposure to UV radiation for 600 seconds (3.0 J/$cm^2$) with a drive voltage being applied across the electrodes. In this way, PSVA liquid crystal display devices of Examples 233 to 240 were fabricated. The resulting liquid crystal display devices were tested for VHR and were evaluated for alignment unevenness and image-sticking. The results are shown in the following tables.

[Table 69]

| | Example 233 | Example 234 | Example 235 | Example 236 | Example 237 |
|---|---|---|---|---|---|
| Liquid crystal composition | Liquid Crystal Composition 30 | Liquid Crystal Composition 30 | Liquid Crystal Composition 30 | Liquid Crystal Composition 30 | Liquid Crystal Composition 30 |
| Sealant | Sealant (1) | Sealant (2) | Sealant (3) | Sealant (4) | Sealant (5) |
| VHR | 99.2 | 99.3 | 99.6 | 99.3 | 99.5 |
| Alignment unevenness | B | A | A | A | A |
| Image-sticking | B | B | A | B | A |

[Table 70]

| | Example 238 | Example 239 | Example 240 |
|---|---|---|---|
| Liquid crystal composition | Liquid Crystal Composition 30 | Liquid Crystal Composition 30 | Liquid Crystal Composition 30 |
| Sealant | Sealant (6) | Sealant (7) | Sealant (8) |
| VHR | 99.4 | 99.6 | 99.4 |
| Alignment unevenness | A | A | A |
| Image-sticking | A | A | B |

The liquid crystal display devices of Examples 233 to 240 had high VHRs and exhibited no or only slight and acceptable alignment unevenness and image-sticking.

Examples 241 to 264

Liquid crystal display devices of Examples 241 to 264 were fabricated using Sealants (1) to (8) as in Example 1 except that Liquid Crystal Compositions 31 to 33 shown in the following tables were sandwiched therein. The resulting liquid crystal display devices were tested for VHR and were evaluated for alignment unevenness and image-sticking. The results are shown in the following tables.

[Table 71]

Liquid Crystal Composition 31

| | |
|---|---|
| TNI / °C | 75.5 |
| Δn | 0.103 |
| Δε | -3.1 |
| η / mPa·s | 15.8 |
| γ1 / mPa·s | 113 |
| γ1 / Δn2 × 10-2 | 113 |
| 3-Cy-Cy-2 | 13% |
| 3-Cy-Cy-V1 | 12% |
| 3-Cy-Cy-4 | 5% |
| 3-Ph-Ph-1 | 3% |
| 5-Ph-Ph-1 | 12% |
| 3-Cy-Cy-Ph-1 | 3% |
| V-Cy-Ph-Ph-3 | 6% |
| 3-Cy-1O-Ph5-O2 | 11% |
| 2-Cy-Cy-1O-Ph5-O2 | 12% |
| 3-Cy-Cy-1O-Ph5-O2 | 12% |
| 4-Cy-Cy-1O-Ph5-O2 | 2% |
| V-Cy-Cy-1O-Ph5-O2 | 3% |
| 1V-Cy-Cy-1O-Ph5-O2 | 6% |

Liquid Crystal Composition 32

| | |
|---|---|
| TNI / °C | 75.4 |
| Δn | 0.109 |
| Δε | -3.1 |
| η / mPa·s | 14.9 |
| γ1 / mPa·s | 110 |
| γ1 / Δn2 × 10-2 | 92 |
| 2-Cy-Cy-V1 | 20% |
| 3-Cy-Cy-V1 | 13% |
| 3-Ph-Ph-1 | 10% |
| 5-Ph-Ph-1 | 5% |
| 3-Cy-Ph-Ph-2 | 6% |
| 1V-Cy-1O-Ph5-O2 | 8% |
| 2-Cy-Cy-1O-Ph5-O2 | 10% |
| 3-Cy-Cy-1O-Ph5-O2 | 10% |
| V-Cy-Cy-1O-Ph5-O2 | 10% |
| 1V-Cy-Cy-1O-Ph5-O2 | 4% |
| 3-Ph-Ph5-Ph-2 | 4% |

Liquid Crystal Composition 33

| | |
|---|---|
| TNI / °C | 83.1 |
| Δn | 0.114 |
| Δε | -2.9 |
| η / mPa·s | 14.8 |
| γ1 / mPa·s | 92 |
| γ1 / Δn2 × 10-2 | 71 |
| V2-Ph-Ph-1 | 5% |
| 3-Cy-Cy-V | 39% |
| 3-Cy-1O-Ph5-O2 | 5% |
| 2-Cy-Cy-1O-Ph5-O2 | 11% |
| 3-Cy-Cy-1O-Ph5-O1 | 11% |
| 3-Cy-Cy-1O-Ph5-O2 | 6% |
| 2-Cy-Ph-Ph5-O2 | 6% |
| 3-Ph-Ph5-Ph-1 | 8% |
| 3-Ph-Ph5-Ph-2 | 9% |

[Table 72]

| | Example 241 | Example 242 | Example 243 | Example 244 | Example 245 |
|---|---|---|---|---|---|
| Liquid crystal composition | Liquid Crystal Composition 31 | Liquid Crystal Composition 31 | Liquid Crystal Composition 31 | Liquid Crystal Composition 31 | Liquid Crystal Composition 31 |
| Sealant | Sealant (1) | Sealant (2) | Sealant (3) | Sealant (4) | Sealant (5) |
| VHR | 99.1 | 99.2 | 99.6 | 99.1 | 99.5 |
| Alignment unevenness | A | A | A | B | A |
| Image-sticking | B | B | A | B | A |

[Table 73]

| | Example 246 | Example 247 | Example 248 |
|---|---|---|---|
| Liquid crystal composition | Liquid Crystal Composition 31 | Liquid Crystal Composition 31 | Liquid Crystal Composition 31 |
| Sealant | Sealant (6) | Sealant (7) | Sealant (8) |
| VHR | 99.4 | 99.6 | 99.3 |
| Alignment unevenness | A | A | A |
| Image-sticking | A | A | B |

[Table 74]

| | Example 249 | Example 250 | Example 251 | Example 252 | Example 253 |
|---|---|---|---|---|---|
| Liquid crystal composition | Liquid Crystal Composition 32 | Liquid Crystal Composition 32 | Liquid Crystal Composition 32 | Liquid Crystal Composition 32 | Liquid Crystal Composition 32 |
| Sealant | Sealant (1) | Sealant (2) | Sealant (3) | Sealant (4) | Sealant (5) |
| VHR | 99.2 | 99.2 | 99.5 | 99.2 | 99.4 |
| Alignment unevenness | A | B | A | A | A |
| Image-sticking | B | B | A | B | B |

[Table 75]

| | Example 254 | Example 255 | Example 256 |
|---|---|---|---|
| Liquid crystal composition | Liquid Crystal Composition 32 | Liquid Crystal Composition 32 | Liquid Crystal Composition 32 |
| Sealant | Sealant (6) | Sealant (7) | Sealant (8) |
| VHR | 99.3 | 99.5 | 99.3 |
| Alignment unevenness | A | A | B |
| Image-sticking | B | A | A |

[Table 76]

| | Example 257 | Example 258 | Example 259 | Example 260 | Example 261 |
|---|---|---|---|---|---|
| Liquid crystal composition | Liquid Crystal Composition 33 | Liquid Crystal Composition 33 | Liquid Crystal Composition 33 | Liquid Crystal Composition 33 | Liquid Crystal Composition 33 |
| Sealant | Sealant (1) | Sealant (2) | Sealant (3) | Sealant (4) | Sealant (5) |
| VHR | 98.9 | 99.1 | 99.4 | 99.0 | 99.3 |
| Alignment unevenness | B | B | A | B | A |
| Image-sticking | B | B | A | A | B |

[Table 77]

| | Example 262 | Example 263 | Example 264 |
|---|---|---|---|
| Liquid crystal composition | Liquid Crystal Composition 33 | Liquid Crystal Composition 33 | Liquid Crystal Composition 33 |
| Sealant | Sealant (6) | Sealant (7) | Sealant (8) |
| VHR | 99.2 | 99.3 | 99.2 |
| Alignment unevenness | A | A | A |
| Image-sticking | B | B | B |

The liquid crystal display devices of Examples 241 to 264 had high VHRs and exhibited no or only slight and acceptable alignment unevenness and image-sticking.

Examples 265 to 280

Liquid crystal display devices of Examples 265 to 280 were fabricated as in Example 1 except that the liquid crystal composition and polymerizable liquid crystal composition shown in the following tables were used. The resulting liquid crystal display devices were tested for VHR and were evaluated for alignment unevenness and image-sticking. The results are shown in the following tables.

[Table 78]

Liquid Crystal Composition 34

| | |
|---|---|
| TNI / °C | 76.3 |
| Δn | 0.106 |
| Δε | -3.0 |
| η / mPa·s | 16.6 |
| γ1 / mPa·s | 106 |
| γ1 / Δn2 × 10-2 | 95 |
| 3-Cy-Cy-2 | 17% |
| 3-Cy-Ph-Ph-2 | 12% |
| 3-Cy-1O-Ph5-O1 | 11% |
| 3-Cy-1O-Ph5-O2 | 17% |
| 3-Nd-Ph5-Ph-2 | 4% |
| 3-Cy-Cy-V | 5% |
| 3-Cy-Cy-V1 | 10% |
| V-Cy-Ph-Ph-3 | 12% |
| V-Cy-Cy-1O-Ph5-O3 | 12% |

Liquid Crystal Composition 35

| | |
|---|---|
| TNI / °C | 76.6 |
| Δn | 0.109 |
| Δε | -3.2 |
| η / mPa·s | 13.9 |
| γ1 / mPa·s | 95 |
| γ1 / Δn2 × 10-2 | 80 |
| 1V-Cy-1O-Ph5-O2 | 12% |
| 1V-Cy-Cy-1O-Ph5-O2 | 12% |
| 3-Cy-1O-Ph5-O2 | 2% |
| 2-Cy-Cy-1O-Ph5-O2 | 5% |
| 3-Cy-Cy-1O-Ph5-O2 | 4% |
| 3-Cy-Ph-Ph5-O2 | 4% |
| 3-Cy-Cy-V | 38% |
| 3-Cy-Cy-V1 | 3% |
| 3-Ph-Ph-1 | 3% |
| V2-Ph-Ph5-Ph-2V | 12% |
| 1V2-Ph-Ph5-Ph2-V1 | 5% |

[Table 79]

| | Example 265 | Example 266 | Example 267 | Example 268 | Example 269 |
|---|---|---|---|---|---|
| Liquid crystal composition | Liquid Crystal Composition 34 | Liquid Crystal Composition 34 | Liquid Crystal Composition 34 | Liquid Crystal Composition 34 | Liquid Crystal Composition 34 |
| Sealant | Sealant (1) | Sealant (2) | Sealant (3) | Sealant (4) | Sealant (5) |
| VHR | 99.1 | 99.2 | 99.5 | 99.2 | 99.4 |
| Alignment unevenness | B | A | A | B | A |
| Image-sticking | B | B | A | B | A |

[Table 80]

| | Example 270 | Example 271 | Example 272 |
|---|---|---|---|
| Liquid crystal composition | Liquid Crystal Composition 34 | Liquid Crystal Composition 34 | Liquid Crystal Composition 34 |

(continued)

| | Example 270 | Example 271 | Example 272 |
|---|---|---|---|
| Sealant | Sealant (6) | Sealant (7) | Sealant (8) |
| VHR | 99.3 | 99.5 | 99.3 |
| Alignment unevenness | B | A | B |
| Image-sticking | A | A | A |

[Table 81]

| | Example 273 | Example 274 | Example 275 | Example 276 | Example 277 |
|---|---|---|---|---|---|
| Liquid crystal composition | Liquid Crystal Composition 35 | Liquid Crystal Composition 35 | Liquid Crystal Composition 35 | Liquid Crystal Composition 35 | Liquid Crystal Composition 35 |
| Sealant | Sealant (1) | Sealant (2) | Sealant (3) | Sealant (4) | Sealant (5) |
| VHR | 99.0 | 99.1 | 99.4 | 99.1 | 99.4 |
| Alignment unevenness | B | A | A | B | A |
| Image-sticking | B | B | A | B | A |

[Table 82]

| | Example 278 | Example 279 | Example 280 |
|---|---|---|---|
| Liquid crystal composition | Liquid Crystal Composition 35 | Liquid Crystal Composition 35 | Liquid Crystal Composition 35 |
| Sealant | Sealant (6) | Sealant (7) | Sealant (8) |
| VHR | 99.3 | 99.4 | 99.2 |
| Alignment unevenness | A | A | A |
| Image-sticking | B | A | B |

The liquid crystal display devices of Examples 265 to 280 had high VHRs and exhibited no or only slight and acceptable alignment unevenness and image-sticking.

Comparative Examples 1 to 15

VA liquid crystal display devices of Comparative Examples 1 to 15 were fabricated as in Example 1 except that Liquid Crystal Composition 1 was replaced with Comparative Liquid Crystal Compositions 1 to 3 shown in the following tables. The resulting liquid crystal display devices were tested for VHR and were evaluated for alignment unevenness and image-sticking. The results are shown in the following tables.

[Table 83]

Comparative Liquid Crystal Composition 1

| | |
|---|---|
| 3-Cy-Cy-2 | 4% |
| 3-Cy-Cy-4 | 4% |
| 3-Cy-Ph5-O2 | 7% |
| 3-Cy-Ph5-O4 | 8% |
| 2-Cy-Ph-Ph5-O2 | 4% |
| 3-Cy-Ph-Ph5-O2 | 5% |
| 3-Cy-Cy-Ph5-O3 | 8% |
| 4-Cy-Cy-Ph5-O2 | 10% |
| 5-Cy-Cy-Ph5-O2 | 8% |
| 3-Ph-Ph5-Ph-2 | 4% |
| 4-Ph-Ph5-Ph-2 | 4% |
| 5-Ph-Ph-1 | 25% |
| 3-Cy-Cy-Ph-1 | 9% |

Comparative Liquid Crystal Composition 2

| | |
|---|---|
| 3-Cy-Cy-2 | 4% |
| 3-Cy-Cy-4 | 4% |
| 3-Cy-Ph5-O2 | 7% |
| 3-Cy-Ph5-O4 | 8% |
| 2-Cy-Ph-Ph5-O2 | 5% |
| 3-Cy-Ph-Ph5-O2 | 6% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 22% |
| 3-Cy-Cy-Ph-1 | 13% |

Comparative Liquid Crystal Composition 3

| | |
|---|---|
| 3-Cy-Cy-2 | 4% |
| 3-Cy-Cy-4 | 4% |
| 3-Cy-Ph5-O2 | 7% |
| 3-Cy-Ph5-O4 | 8% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 7% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 19% |
| 3-Cy-Cy-Ph-1 | 16% |

[Table 84]

| | Comparative Example 1 | Comparative Example 2 | Comparative Example 3 | Comparative Example 4 | Comparative Example 5 |
|---|---|---|---|---|---|
| Liquid crystal composition | Comparative Liquid Crystal Composition 1 | Comparative Liquid Crystal Composition 1 | Comparative Liquid Crystal Composition 1 | Comparative Liquid Crystal Composition 1 | Comparative Liquid Crystal Composition 1 |
| Sealant | Sealant (1) | Sealant (2) | Sealant (3) | Sealant (4) | Sealant (5) |
| VHR | 97.3 | 97.5 | 98.0 | 97.4 | 97.8 |
| Alignment unevenness | D | D | C | D | C |
| Image-sticking | D | D | C | D | D |

[Table 85]

| | Comparative Example 6 | Comparative Example 7 | Comparative Example 8 |
|---|---|---|---|
| Liquid crystal composition | Comparative Liquid Crystal Composition 1 | Comparative Liquid Crystal Composition 1 | Comparative Liquid Crystal Composition 1 |
| Sealant | Sealant (6) | Sealant (7) | Sealant (8) |
| VHR | 97.7 | 97.8 | 97.5 |
| Alignment unevenness | C | C | C |
| Image-sticking | D | C | D |

[Table 86]

| | Comparative Example 9 | Comparative Example 10 | Comparative Example 11 | Comparative Example 12 | Comparative Example 13 |
|---|---|---|---|---|---|
| Liquid crystal composition | Comparative Liquid Crystal Composition 2 | Comparative Liquid Crystal Composition 2 | Comparative Liquid Crystal Composition 2 | Comparative Liquid Crystal Composition 2 | Comparative Liquid Crystal Composition 2 |
| Sealant | Sealant (1) | Sealant (2) | Sealant (3) | Sealant (4) | Sealant (5) |
| VHR | 97.4 | 97.5 | 98.1 | 97.5 | 97.9 |
| Alignment unevenness | D | D | C | D | D |
| Image-sticking | D | D | C | D | C |

[Table 87]

| | Comparative Example 14 | Comparative Example 15 | Comparative Example 16 |
|---|---|---|---|
| Liquid crystal composition | Comparative Liquid Crystal Composition 2 | Comparative Liquid Crystal Composition 2 | Comparative Liquid Crystal Composition 2 |
| Sealant | Sealant (6) | Sealant (7) | Sealant (8) |
| VHR | 97.7 | 98.0 | 97.6 |
| Alignment unevenness | D | C | D |
| Image-sticking | D | D | D |

[Table 88]

| | Comparative Example 17 | Comparative Example 18 | Comparative Example 19 | Comparative Example 20 | Comparative Example 21 |
|---|---|---|---|---|---|
| Liquid crystal composition | Comparative Liquid Crystal Composition 3 | Comparative Liquid Crystal Composition 3 | Comparative Liquid Crystal Composition 3 | Comparative Liquid Crystal Composition 3 | Comparative Liquid Crystal Composition 3 |
| Sealant | Sealant (1) | Sealant (2) | Sealant (3) | Sealant (4) | Sealant (5) |
| VHR | 97.2 | 97.5 | 98.1 | 97.3 | 97.9 |
| Alignment unevenness | D | C | C | D | C |
| Image-sticking | D | D | C | D | D |

[Table 89]

| | Comparative Example 22 | Comparative Example 23 | Comparative Example 24 |
|---|---|---|---|
| Liquid crystal composition | Comparative Liquid Crystal Composition 3 | Comparative Liquid Crystal Composition 3 | Comparative Liquid Crystal Composition 3 |
| Sealant | Sealant (6) | Sealant (7) | Sealant (8) |
| VHR | 97.8 | 98.0 | 97.6 |

(continued)

| | Comparative Example 22 | Comparative Example 23 | Comparative Example 24 |
|---|---|---|---|
| Alignment unevenness | C | C | D |
| Image-sticking | D | C | D |

The liquid crystal display devices of Comparative Examples 1 to 24 had lower VHRs than those according to the present invention and exhibited unacceptable alignment unevenness and image-sticking.

Comparative Examples 25 to 48

VA liquid crystal display devices of Comparative Examples 25 to 48 were fabricated as in Comparative Example 1 except that Comparative Liquid Crystal Composition 1 was replaced with Comparative Liquid Crystal Compositions 4 to 6 shown in the following tables. The resulting liquid crystal display devices were tested for VHR and were evaluated for alignment unevenness and image-sticking. The results are shown in the following tables.

[Table 90]

Comparative Liquid Crystal Composition 4

| | |
|---|---|
| $T_{NI}$ / °C | 73.6 |
| Δn | 0.099 |
| Δε | -2.15 |
| η / mPa·s | 17.7 |
| $\gamma_1$ / mPa·s | 104 |
| $\gamma_1 / \Delta n^2 \times 10^{-2}$ | 106 |
| 3-Cy-Cy-2 | 20% |
| 3-Cy-Cy-4 | 12% |
| 3-Cy-Cy-5 | 7% |
| 3-Cy-Ph-O1 | 12% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 4% |
| 4-Ph-Ph5-Ph-2 | 4% |

Comparative Liquid Crystal Composition 5

| | |
|---|---|
| $T_{NI}$ / °C | 80.9 |
| Δn | 0.094 |
| Δε | -2.16 |
| η / mPa·s | 17.0 |
| $\gamma_1$ / mPa·s | 97 |
| $\gamma_1 / \Delta n^2 \times 10^{-2}$ | 109 |
| 3-Cy-Cy-2 | 24% |
| 3-Cy-Cy-4 | 12% |
| 3-Cy-Cy-5 | 15% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 4% |
| 4-Ph-Ph5-Ph-2 | 4% |

Comparative Liquid Crystal Composition 6

| | |
|---|---|
| $T_{NI}$ / °C | 84.7 |
| Δn | 0.085 |
| Δε | -2.13 |
| η / mPa·s | 17.5 |
| $\gamma_1$ / mPa·s | 98 |
| $\gamma_1 / \Delta n^2 \times 10^{-2}$ | 136 |
| 3-Cy-Cy-2 | 21% |
| 3-Cy-Cy-4 | 15% |
| 3-Cy-Cy-5 | 15% |
| 3-Cy-Ph5-O2 | 5% |
| 3-Cy-Ph5-O4 | 5% |
| 2-Cy-Ph-Ph5-O2 | 4% |
| 3-Cy-Ph-Ph5-O2 | 5% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 4% |
| 4-Ph-Ph5-Ph-2 | 4% |

[Table 91]

| | Comparative Example 25 | Comparative Example 26 | Comparative Example 27 | Comparative Example 28 | Comparative Example 29 |
|---|---|---|---|---|---|
| Liquid crystal composition | Comparative Liquid Crystal Composition 4 | Comparative Liquid Crystal Composition 4 | Comparative Liquid Crystal Composition 4 | Comparative Liquid Crystal Composition 4 | Comparative Liquid Crystal Composition 4 |
| Sealant | Sealant (1) | Sealant (2) | Sealant (3) | Sealant (4) | Sealant (5) |
| VHR | 97.1 | 97.2 | 98.0 | 97.1 | 97.7 |
| Alignment unevenness | D | D | C | D | C |
| Image-sticking | D | D | C | C | D |

[Table 92]

| | Comparative Example 30 | Comparative Example 31 | Comparative Example 32 |
|---|---|---|---|
| Liquid crystal composition | Comparative Liquid Crystal Composition 4 | Comparative Liquid Crystal Composition 4 | Comparative Liquid Crystal Composition 4 |
| Sealant | Sealant (6) | Sealant (7) | Sealant (8) |
| VHR | 97.6 | 97.8 | 97.4 |
| Alignment unevenness | C | C | D |
| Image-sticking | D | D | C |

[Table 93]

| | Comparative Example 33 | Comparative Example 34 | Comparative Example 35 | Comparative Example 36 | Comparative Example 37 |
|---|---|---|---|---|---|
| Liquid crystal composition | Comparative Liquid Crystal Composition 5 | Comparative Liquid Crystal Composition 5 | Comparative Liquid Crystal Composition 5 | Comparative Liquid Crystal Composition 5 | Comparative Liquid Crystal Composition 5 |
| Sealant | Sealant (1) | Sealant (2) | Sealant (3) | Sealant (4) | Sealant (5) |
| VHR | 97.2 | 97.3 | 98.1 | 97.3 | 97.8 |
| Alignment unevenness | D | C | C | D | C |
| Image-sticking | D | D | C | D | D |

[Table 94]

| | Comparative Example 38 | Comparative Example 30 | Comparative Example 40 |
|---|---|---|---|
| Liquid crystal composition | Comparative Liquid Crystal Composition 5 | Comparative Liquid Crystal Composition 5 | Comparative Liquid Crystal Composition 5 |
| Sealant | Sealant (6) | Sealant (7) | Sealant (8) |
| VHR | 97.7 | 98.0 | 97.5 |

(continued)

| | Comparative Example 38 | Comparative Example 30 | Comparative Example 40 |
|---|---|---|---|
| Alignment unevenness | C | C | C |
| Image-sticking | D | C | D |

[Table 95]

| | Comparative Example 41 | Comparative Example 42 | Comparative Example 43 | Comparative Example 44 | Comparative Example 45 |
|---|---|---|---|---|---|
| Liquid crystal composition | Comparative Liquid Crystal Composition 6 | Comparative Liquid Crystal Composition 6 | Comparative Liquid Crystal Composition 6 | Comparative Liquid Crystal Composition 6 | Comparative Liquid Crystal Composition 6 |
| Sealant | Sealant (1) | Sealant (2) | Sealant (3) | Sealant (4) | Sealant (5) |
| VHR | 97.1 | 97.2 | 97.9 | 97.1 | 97.6 |
| Alignment unevenness | D | D | C | D | C |
| Image-sticking | D | D | C | D | C |

[Table 96]

| | Comparative Example 46 | Comparative Example 47 | Comparative Example 48 |
|---|---|---|---|
| Liquid crystal composition | Comparative Liquid Crystal Composition 6 | Comparative Liquid Crystal Composition 6 | Comparative Liquid Crystal Composition 6 |
| Sealant | Sealant (6) | Sealant (7) | Sealant (8) |
| VHR | 97.5 | 97.8 | 97.3 |
| Alignment unevenness | C | C | C |
| Image-sticking | D | C | D |

The liquid crystal display devices of Comparative Examples 25 to 48 had lower VHRs than those according to the present invention and exhibited unacceptable alignment unevenness and image-sticking.

Comparative Examples 49 to 72

VA liquid crystal display devices of Comparative Examples 49 to 72 were fabricated as in Comparative Example 1 except that Comparative Liquid Crystal Composition 1 was replaced with Comparative Liquid Crystal Compositions 7 to 9 shown in the following tables. The resulting liquid crystal display devices were tested for VHR and were evaluated for alignment unevenness and image-sticking. The results are shown in the following tables.

[Table 97]

Comparative Liquid Crystal Composition 7

| | |
|---|---|
| 3-Cy-Cy-2 | 28% |
| 3-Cy-Cy-4 | 10% |
| 3-Cy-Ph-O1 | 7% |
| 2-Cy-Ph5-O2 | 2% |
| 3-Cy-Ph5-O4 | 2% |
| 2-Cy-Ph-Ph5-O2 | 5% |
| 3-Cy-Ph-Ph5-O2 | 5% |
| 3-Cy-Cy-Ph5-O3 | 5% |
| 4-Cy-Cy-Ph5-O2 | 5% |
| 5-Cy-Cy-Ph5-O2 | 5% |
| 3-Ph-Ph5-Ph-2 | 2% |
| 4-Ph-Ph5-Ph-2 | 2% |
| 5-Ph-Ph-1 | 22% |

Comparative Liquid Crystal Composition 8

| | |
|---|---|
| 3-Cy-Cy-2 | 25% |
| 3-Cy-Cy-4 | 9% |
| 3-Cy-Ph-O1 | 6% |
| 2-Cy-Ph5-O2 | 2% |
| 3-Cy-Ph5-O4 | 2% |
| 2-Cy-Ph-Ph5-O2 | 5% |
| 3-Cy-Ph-Ph5-O2 | 5% |
| 3-Cy-Cy-Ph5-O3 | 5% |
| 4-Cy-Cy-Ph5-O2 | 5% |
| 5-Cy-Cy-Ph5-O2 | 5% |
| 3-Ph-Ph5-Ph-2 | 2% |
| 4-Ph-Ph5-Ph-2 | 2% |
| 5-Ph-Ph-1 | 19% |
| 3-Cy-Cy-Ph-1 | 8% |

Comparative Liquid Crystal Composition 9

| | |
|---|---|
| 3-Cy-Cy-2 | 28% |
| 3-Cy-Cy-4 | 8% |
| 3-Cy-Ph-O1 | 7% |
| 2-Cy-Ph5-O2 | 2% |
| 3-Cy-Ph5-O4 | 2% |
| 2-Cy-Ph-Ph5-O2 | 5% |
| 3-Cy-Ph-Ph5-O2 | 5% |
| 3-Cy-Cy-Ph5-O3 | 5% |
| 4-Cy-Cy-Ph5-O2 | 5% |
| 5-Cy-Cy-Ph5-O2 | 5% |
| 3-Ph-Ph5-Ph-2 | 2% |
| 4-Ph-Ph5-Ph-2 | 2% |
| 5-Ph-Ph-1 | 15% |
| 3-Cy-Cy-Ph-1 | 9% |

[Table 98]

| | Comparative Example 49 | Comparative Example 50 | Comparative Example 51 | Comparative Example 52 | Comparative Example 53 |
|---|---|---|---|---|---|
| Liquid crystal composition | Comparative Liquid Crystal Composition 7 | Comparative Liquid Crystal Composition 7 | Comparative Liquid Crystal Composition 7 | Comparative Liquid Crystal Composition 7 | Comparative Liquid Crystal Composition 7 |
| Sealant | Sealant (1) | Sealant (2) | Sealant (3) | Sealant (4) | Sealant (5) |
| VHR | 97.0 | 97.1 | 97.7 | 97.0 | 97.5 |
| Alignment unevenness | D | D | C | C | C |
| Image-sticking | D | D | C | D | C |

[Table 99]

| | Comparative Example 54 | Comparative Example 55 | Comparative Example 56 |
|---|---|---|---|
| Liquid crystal composition | Comparative Liquid Crystal Composition 7 | Comparative Liquid Crystal Composition 7 | Comparative Liquid Crystal Composition 7 |
| Sealant | Sealant (6) | Sealant (7) | Sealant (8) |
| VHR | 97.4 | 97.8 | 97.2 |
| Alignment unevenness | D | C | C |
| Image-sticking | D | C | D |

[Table 100]

| | Comparative Example 57 | Comparative Example 58 | Comparative Example 59 | Comparative Example 60 | Comparative Example 61 |
|---|---|---|---|---|---|
| Liquid crystal composition | Comparative Liquid Crystal Composition 8 | Comparative Liquid Crystal Composition 8 | Comparative Liquid Crystal Composition 8 | Comparative Liquid Crystal Composition 8 | Comparative Liquid Crystal Composition 8 |
| Sealant | Sealant (1) | Sealant (2) | Sealant (3) | Sealant (4) | Sealant (5) |
| VHR | 97.2 | 97.4 | 98.0 | 97.3 | 97.7 |
| Alignment unevenness | D | D | C | D | C |
| Image-sticking | D | D | C | D | D |

[Table 101]

| | Comparative Example 62 | Comparative Example 63 | Comparative Example 64 |
|---|---|---|---|
| Liquid crystal composition | Comparative Liquid Crystal Composition 8 | Comparative Liquid Crystal Composition 8 | Comparative Liquid Crystal Composition 8 |
| Sealant | Sealant (6) | Sealant (7) | Sealant (8) |
| VHR | 97.7 | 97.9 | 97.5 |
| Alignment unevenness | D | C | D |
| Image-sticking | C | D | C |

[Table 102]

| | Comparative Example 65 | Comparative Example 66 | Comparative Example 67 | Comparative Example 68 | Comparative Example 69 |
|---|---|---|---|---|---|
| Liquid crystal composition | Comparative Liquid Crystal Composition 9 | Comparative Liquid Crystal Composition 9 | Comparative Liquid Crystal Composition 9 | Comparative Liquid Crystal Composition 9 | Comparative Liquid Crystal Composition 9 |
| Sealant | Sealant (1) | Sealant (2) | Sealant (3) | Sealant (4) | Sealant (5) |
| VHR | 97.3 | 97.4 | 98.1 | 97.4 | 97.8 |
| Alignment unevenness | D | D | C | D | C |
| Image-sticking | D | D | C | D | C |

[Table 103]

| | Comparative Example 70 | Comparative Example 71 | Comparative Example 72 |
|---|---|---|---|
| Liquid crystal composition | Comparative Liquid Crystal Composition 9 | Comparative Liquid Crystal Composition 9 | Comparative Liquid Crystal Composition 9 |
| Sealant | Sealant (6) | Sealant (7) | Sealant (8) |
| VHR | 97.6 | 97.9 | 97.5 |

(continued)

| | Comparative Example 70 | Comparative Example 71 | Comparative Example 72 |
|---|---|---|---|
| Alignment unevenness | C | C | C |
| Image-sticking | D | D | D |

The liquid crystal display devices of Comparative Examples 49 to 72 had lower VHRs than those according to the present invention and exhibited unacceptable alignment unevenness and image-sticking.

Comparative Examples 73 to 88

VA liquid crystal display devices of Comparative Examples 73 to 88 were fabricated as in Comparative Example 1 except that Comparative Liquid Crystal Composition 1 was replaced with Comparative Liquid Crystal Compositions 10 and 11 shown in the following tables. The resulting liquid crystal display devices were tested for VHR and were evaluated for alignment unevenness and image-sticking. The results are shown in the following tables.

[Table 104]

Comparative Liquid Crystal Composition 10

| | |
|---|---|
| 3-Cy-Cy-2 | 10% |
| 3-Cy-Cy-4 | 3% |
| 3-Cy-Cy-5 | 2% |
| 3-Cy-Ph-O1 | 2% |
| 2-Cy-Ph5-O2 | 16% |
| 3-Cy-Ph5-O4 | 16% |
| 2-Cy-Ph-Ph5-O2 | 12% |
| 3-Cy-Ph-Ph5-O2 | 11% |
| 3-Cy-Cy-Ph5-O3 | 9% |
| 4-Cy-Cy-Ph5-O2 | 9% |
| 5-Cy-Cy-Ph5-O2 | 9% |
| 3-Cy-Cy-Ph-1 | 1% |

Comparative Liquid Crystal Composition 11

| | |
|---|---|
| 3-Cy-Cy-4 | 11% |
| 3-Cy-Cy-5 | 5% |
| 2-Cy-Ph5-O2 | 16% |
| 3-Cy-Ph5-O4 | 16% |
| 2-Cy-Ph-Ph5-O2 | 12% |
| 3-Cy-Ph-Ph5-O2 | 12% |
| 3-Cy-Cy-Ph5-O3 | 9% |
| 4-Cy-Cy-Ph5-O2 | 9% |
| 5-Cy-Cy-Ph5-O2 | 8% |
| 3-Cy-Cy-Ph-1 | 2% |

[Table 105]

| | Comparative Example 73 | Comparative Example 74 | Comparative Example 75 | Comparative Example 76 | Comparative Example 77 |
|---|---|---|---|---|---|
| Liquid crystal composition | Comparative Liquid Crystal Composition 10 | Comparative Liquid Crystal Composition 10 | Comparative Liquid Crystal Composition 10 | Comparative Liquid Crystal Composition 10 | Comparative Liquid Crystal Composition 10 |
| Sealant | Sealant (1) | Sealant (2) | Sealant (3) | Sealant (4) | Sealant (5) |
| VHR | 97.2 | 97.3 | 98.0 | 97.3 | 97.8 |
| Alignment unevenness | C | D | C | D | C |
| Image-sticking | D | D | C | D | C |

[Table 106]

| | Comparative Example 78 | Comparative Example 79 | Comparative Example 80 |
|---|---|---|---|
| Liquid crystal composition | Comparative Liquid Crystal Composition 10 | Comparative Liquid Crystal Composition 10 | Comparative Liquid Crystal Composition 10 |
| Sealant | Sealant (6) | Sealant (7) | Sealant (8) |
| VHR | 97.6 | 97.7 | 97.5 |
| Alignment unevenness | D | C | D |
| Image-sticking | C | C | C |

[Table 107]

| | Comparative Example 81 | Comparative Example 82 | Comparative Example 83 | Comparative Example 84 | Comparative Example 85 |
|---|---|---|---|---|---|
| Liquid crystal composition | Comparative Liquid Crystal Composition 11 | Comparative Liquid Crystal Composition 11 | Comparative Liquid Crystal Composition 11 | Comparative Liquid Crystal Composition 11 | Comparative Liquid Crystal Composition 11 |
| Sealant | Sealant (1) | Sealant (2) | Sealant (3) | Sealant (4) | Sealant (5) |
| VHR | 97.0 | 97.2 | 97.9 | 97.1 | 97.6 |
| Alignment unevenness | D | D | C | D | C |
| Image-sticking | D | D | C | C | C |

[Table 108]

| | Comparative Example 86 | Comparative Example 87 | Comparative Example 88 |
|---|---|---|---|
| Liquid crystal composition | Comparative Liquid Crystal Composition 11 | Comparative Liquid Crystal Composition 11 | Comparative Liquid Crystal Composition 11 |
| Sealant | Sealant (6) | Sealant (7) | Sealant (8) |
| VHR | 97.5 | 97.7 | 97.4 |
| Alignment unevenness | C | C | C |
| Image-sticking | D | D | D |

The liquid crystal display devices of Comparative Examples 73 to 88 had lower VHRs than those according to the present invention and exhibited unacceptable alignment unevenness and image-sticking.

Comparative Examples 89 to 112

VA liquid crystal display devices of Comparative Examples 89 to 112 were fabricated as in Comparative Example 1 except that Comparative Liquid Crystal Composition 1 was replaced with Comparative Liquid Crystal Compositions 12 to 14 shown in the following tables. The resulting liquid crystal display devices were tested for VHR and were evaluated for alignment unevenness and image-sticking. The results are shown in the following tables.

[Table 109]

Comparative Liquid Crystal Composition 12

| | |
|---|---|
| 3-Cy-Cy-2 | 25% |
| 3-Cy-Cy-4 | 12% |
| 3-Cy-Cy-5 | 7% |
| 3-Cy-Ph-O1 | 11% |
| 2-Cy-Ph5-O2 | 5% |
| 3-Cy-Ph5-O4 | 5% |
| 2-Cy-Ph-Ph5-O2 | 4% |
| 3-Cy-Ph-Ph5-O2 | 4% |
| 3-Cy-Cy-Ph5-O3 | 2% |
| 4-Cy-Cy-Ph5-O2 | 2% |
| 5-Cy-Cy-Ph5-O2 | 2% |
| 3-Ph-Ph5-Ph-2 | 5% |
| 4-Ph-Ph5-Ph-2 | 5% |
| 3-Cy-Cy-Ph-1 | 11% |

Comparative Liquid Crystal Composition 13

| | |
|---|---|
| 3-Cy-Cy-2 | 27% |
| 3-Cy-Cy-4 | 12% |
| 3-Cy-Cy-5 | 6% |
| 3-Cy-Ph-O1 | 9% |
| 2-Cy-Ph5-O2 | 5% |
| 3-Cy-Ph5-O4 | 5% |
| 2-Cy-Ph-Ph5-O2 | 4% |
| 3-Cy-Ph-Ph5-O2 | 3% |
| 3-Cy-Cy-Ph5-O3 | 3% |
| 4-Cy-Cy-Ph5-O2 | 2% |
| 5-Cy-Cy-Ph5-O2 | 2% |
| 3-Ph-Ph5-Ph-2 | 6% |
| 4-Ph-Ph5-Ph-2 | 4% |
| 3-Cy-Cy-Ph-1 | 12% |

Comparative Liquid Crystal Composition 14

| | |
|---|---|
| 3-Cy-Cy-2 | 30% |
| 3-Cy-Cy-4 | 12% |
| 3-Cy-Cy-5 | 9% |
| 2-Cy-Ph5-O2 | 4% |
| 3-Cy-Ph5-O4 | 4% |
| 2-Cy-Ph-Ph5-O2 | 5% |
| 3-Cy-Ph-Ph5-O2 | 5% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 3% |
| 4-Ph-Ph5-Ph-2 | 3% |
| 3-Cy-Cy-Ph-1 | 16% |

[Table 110]

| | Comparative Example 89 | Comparative Example 90 | Comparative Example 91 | Comparative Example 92 | Comparative Example 93 |
|---|---|---|---|---|---|
| Liquid crystal composition | Comparative Liquid Crystal Composition 12 | Comparative Liquid Crystal Composition 12 | Comparative Liquid Crystal Composition 12 | Comparative Liquid Crystal Composition 12 | Comparative Liquid Crystal Composition 12 |
| Sealant | Sealant (1) | Sealant (2) | Sealant (3) | Sealant (4) | Sealant (5) |
| VHR | 96.9 | 97.1 | 97.8 | 97.0 | 97.5 |
| Alignment unevenness | D | C | C | D | D |
| Image-sticking | D | D | C | D | C |

[Table 111]

| | Comparative Example 94 | Comparative Example 95 | Comparative Example 96 |
|---|---|---|---|
| Liquid crystal composition | Comparative Liquid Crystal Composition 12 | Comparative Liquid Crystal Composition 12 | Comparative Liquid Crystal Composition 12 |
| Sealant | Sealant (6) | Sealant (7) | Sealant (8) |
| VHR | 97.3 | 97.6 | 97.3 |
| Alignment unevenness | C | C | D |
| Image-sticking | C | C | C |

[Table 112]

| | Comparative Example 97 | Comparative Example 98 | Comparative Example 99 | Comparative Example 100 | Comparative Example 101 |
|---|---|---|---|---|---|
| Liquid crystal composition | Comparative Liquid Crystal Composition 13 | Comparative Liquid Crystal Composition 13 | Comparative Liquid Crystal Composition 13 | Comparative Liquid Crystal Composition 13 | Comparative Liquid Crystal Composition 13 |
| Sealant | Sealant (1) | Sealant (2) | Sealant (3) | Sealant (4) | Sealant (5) |
| VHR | 97.2 | 97.3 | 97.9 | 97.2 | 97.7 |
| Alignment unevenness | D | D | D | C | D |
| Image-sticking | D | D | C | D | C |

[Table 113]

| | Comparative Example 102 | Comparative Example 103 | Comparative Example 104 |
|---|---|---|---|
| Liquid crystal composition | Comparative Liquid Crystal Composition 13 | Comparative Liquid Crystal Composition 13 | Comparative Liquid Crystal Composition 13 |
| Sealant | Sealant (6) | Sealant (7) | Sealant (8) |
| VHR | 97.6 | 97.9 | 97.4 |
| Alignment unevenness | C | C | C |
| Image-sticking | C | C | C |

[Table 114]

| | Comparative Example 105 | Comparative Example 106 | Comparative Example 107 | Comparative Example 108 | Comparative Example 109 |
|---|---|---|---|---|---|
| Liquid crystal composition | Comparative Liquid Crystal Composition 14 | Comparative Liquid Crystal Composition 14 | Comparative Liquid Crystal Composition 14 | Comparative Liquid Crystal Composition 14 | Comparative Liquid Crystal Composition 14 |
| Sealant | Sealant (1) | Sealant (2) | Sealant (3) | Sealant (4) | Sealant (5) |
| VHR | 97.0 | 97.2 | 98.0 | 97.1 | 97.7 |
| Alignment unevenness | D | C | C | D | C |
| Image-sticking | D | D | C | D | D |

[Table 115]

| | Comparative Example 110 | Comparative Example 111 | Comparative Example 112 |
|---|---|---|---|
| Liquid crystal composition | Comparative Liquid Crystal Composition 14 | Comparative Liquid Crystal Composition 14 | Comparative Liquid Crystal Composition 14 |
| Sealant | Sealant (6) | Sealant (7) | Sealant (8) |
| VHR | 97.7 | 97.9 | 97.4 |

(continued)

| | Comparative Example 110 | Comparative Example 111 | Comparative Example 112 |
|---|---|---|---|
| Alignment unevenness | C | C | D |
| Image-sticking | D | C | D |

The liquid crystal display devices of Comparative Examples 89 to 112 had lower VHRs than those according to the present invention and exhibited unacceptable alignment unevenness and image-sticking.

Comparative Examples 113 to 120

VA liquid crystal display devices of Comparative Examples 113 to 120 were fabricated as in Comparative Example 1 except that Comparative Liquid Crystal Composition 1 was replaced with Comparative Liquid Crystal Composition 15 shown in the following table. The resulting liquid crystal display devices were tested for VHR and were evaluated for alignment unevenness and image-sticking. The results are shown in the following tables.

[Table 116]

| Comparative Liquid Crystal Composition 15 | |
|---|---|
| 3-Cy-Cy-2 | 14% |
| 3-Cy-Ph-O1 | 4% |
| 2-Cy-Ph5-O2 | 3% |
| 2-Cy-Ph-Ph5-O2 | 13% |
| 3-Cy-Ph-Ph5-O2 | 13% |
| 3-Cy-Cy-Ph5-O3 | 12% |
| 4-Cy-Cy-Ph5-O2 | 12% |
| 5-Cy-Cy-Ph5-O2 | 12% |
| 3-Ph-Ph5-Ph-2 | 8% |
| 4-Ph-Ph5-Ph-2 | 8% |
| 5-Ph-Ph-1 | 1% |

[Table 117]

| | Comparative Example 113 | Comparative Example 114 | Comparative Example 115 | Comparative Example 116 | Comparative Example 117 |
|---|---|---|---|---|---|
| Liquid crystal composition | Comparative Liquid Crystal Composition 15 | Comparative Liquid Crystal Composition 15 | Comparative Liquid Crystal Composition 15 | Comparative Liquid Crystal Composition 15 | Comparative Liquid Crystal Composition 15 |
| Sealant | Sealant (1) | Sealant (2) | Sealant (3) | Sealant (4) | Sealant (5) |
| VHR | 97.3 | 97.4 | 97.9 | 97.3 | 97.7 |
| Alignment unevenness | D | C | C | D | C |
| Image-sticking | D | D | D | D | C |

[Table 118]

| | Comparative Example 118 | Comparative Example 119 | Comparative Example 120 |
|---|---|---|---|
| Liquid crystal composition | Comparative Liquid Crystal Composition 15 | Comparative Liquid Crystal Composition 15 | Comparative Liquid Crystal Composition 15 |
| Sealant | Sealant (6) | Sealant (7) | Sealant (8) |
| VHR | 97.5 | 97.7 | 97.6 |
| Alignment unevenness | D | C | D |
| Image-sticking | C | C | D |

The liquid crystal display devices of Comparative Examples 113 to 120 had lower VHRs than those according to the present invention and exhibited unacceptable alignment unevenness and image-sticking.

Comparative Examples 121 to 136

Liquid crystal display devices of Comparative Examples 121 to 136 were fabricated as in Examples 1, 6, 36, 61, 66, 91, 96, and 126 except that the sealant was replaced with Comparative Sealants (C1) and (C2). The resulting liquid crystal display devices were tested for VHR and were evaluated for alignment unevenness and image-sticking. The results are shown in the following tables.

[Table 119]

| | Comparative Example 121 | Comparative Example 122 | Comparative Example 123 | Comparative Example 124 |
|---|---|---|---|---|
| Liquid crystal composition | Liquid Crystal Composition 1 | Liquid Crystal Composition 2 | Liquid Crystal Composition 8 | Liquid Crystal Composition 13 |
| Sealant | Comparative Sealant (C1) | Comparative Sealant (C1) | Comparative Sealant (C1) | Comparative Sealant (C1) |
| VHR | 98.0 | 97.9 | 97.5 | 97.5 |
| Alignment unevenness | C | C | D | D |
| Image-sticking | D | D | D | D |

[Table 120]

| | Comparative Example 125 | Comparative Example 126 | Comparative Example 127 | Comparative Example 128 |
|---|---|---|---|---|
| Liquid crystal composition | Liquid Crystal Composition 14 | Liquid Crystal Composition 19 | Liquid Crystal Composition 20 | Liquid Crystal Composition 26 |
| Sealant | Comparative Sealant (C1) | Comparative Sealant (C1) | Comparative Sealant (C1) | Comparative Sealant (C1) |
| VHR | 97.6 | 97.7 | 97.6 | 97.4 |
| Alignment unevenness | D | D | D | D |
| Image-sticking | D | D | D | D |

[Table 121]

| | Comparative Example 129 | Comparative Example 130 | Comparative Example 131 | Comparative Example 132 |
|---|---|---|---|---|
| Liquid crystal composition | Liquid Crystal Composition 1 | Liquid Crystal Composition 2 | Liquid Crystal Composition 8 | Liquid Crystal Composition 13 |
| Sealant | Comparative Sealant (C2) | Comparative Sealant (C2) | Comparative Sealant (C2) | Comparative Sealant (C2) |
| VHR | 97.5 | 97.6 | 97.2 | 97.3 |
| Alignment unevenness | D | C | D | D |
| Image-sticking | D | D | D | D |

[Table 122]

| | Comparative Example 133 | Comparative Example 134 | Comparative Example 135 | Comparative Example 136 |
|---|---|---|---|---|
| Liquid crystal composition | Liquid Crystal Composition 14 | Liquid Crystal Composition 19 | Liquid Crystal Composition 20 | Liquid Crystal Composition 26 |
| Sealant | Comparative Sealant (C2) | Comparative Sealant (C2) | Comparative Sealant (C2) | Comparative Sealant (C2) |
| VHR | 97.4 | 97.4 | 97.4 | 97.2 |
| Alignment unevenness | D | D | D | D |
| Image-sticking | D | D | D | D |

The liquid crystal display devices of Comparative Examples 121 to 136 had lower VHRs than those according to the present invention and exhibited unacceptable alignment unevenness and image-sticking.

## Claims

1. A liquid crystal display device comprising a first substrate, a second substrate, a liquid crystal layer comprising a liquid crystal composition between the first and second substrates, and a cured product of a thermally curable resin composition joining together the first and second substrates,
the liquid crystal composition comprising:

10% to 50% by weight of a compound represented by general formula (I):

[Chem. 1]

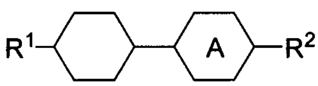

(I)

(wherein $R^1$ and $R^2$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; and A is 1,4-phenylene or trans-1,4-cyclohexylene); and
35% to 80% by weight of a compound represented by general formula (II):

[Chem. 2]

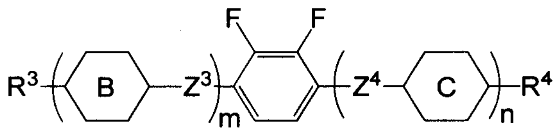

( II )

(wherein $R^3$ and $R^4$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^3$ and $Z^4$ are each independently a single bond, -CH=CH-, -C≡C-,$-CH_2CH_2-$, $-(CH_2)_4-$, -COO-, -OCO-, $-OCH_2-$, $-CH_2O-$, $-OCF_2-$, or $-CF_2O-$; B and C are each independently optionally fluorinated 1,4-phenylene or trans-1,4-cyclohexylene; and m and n are each independently an integer of 0 to 4, wherein m + n = 1 to 4),
the curable resin composition comprising a compound containing at least one epoxy group per molecule and having a weight average molecular weight of 300 to 10,000, wherein the curable resin composition has a hydrogen-bonding functional group value of $1 \times 10^{-4}$ to $5 \times 10^{-2}$ mol/g.

2. The liquid crystal display device according to Claim 1, wherein the curable resin composition further comprises a thermal curing agent.

3. The liquid crystal display device according to Claim 1 or 2, wherein the curable resin composition further comprises a silane coupling agent.

4. The liquid crystal display device according to any one of Claims 1 to 3, wherein the curable resin composition further comprises a filler.

5. The liquid crystal display device according to any one of Claims 1 to 4, wherein the curable resin composition further comprises resin particles.

6. The liquid crystal display device according to any one of Claims 1 to 5, wherein the compound containing at least one epoxy group per molecule and having a weight average molecular weight of 300 to 10,000 further contains at least one ethylenically unsaturated bond per molecule.

7. The liquid crystal display device according to Claim 6, wherein the compound containing at least one epoxy group per molecule and having a weight average molecular weight of 300 to 10,000 contains at least one (meth)acrylic group per molecule.

8. The liquid crystal display device according to Claim 7, wherein the compound containing at least one (meth)acrylic group and at least one epoxy group per molecule is a (meth)acrylic-modified epoxy resin and/or a urethane-modified (meth)acrylic epoxy resin.

9. The liquid crystal display device according to any one of Claims 1 to 8, wherein the curable resin composition further comprises a compound containing an ethylenically unsaturated bond.

10. The liquid crystal display device according to Claim 9, wherein the curable resin composition comprises a compound containing a (meth)acryloyloxy group.

11. The liquid crystal display device according to any one of Claims 6 to 10, wherein the curable resin composition has a carbon-carbon double bond content of $1 \times 10^{-3}$ to $5 \times 10^{-3}$ mol/g.

12. The liquid crystal display device according to Claim 7, 8, or 10, wherein the curable resin composition has an epoxy-to-(meth)acrylic equivalent ratio of 15:85 to 95:5.

13. The liquid crystal display device according to any one of Claims 1 to 12, wherein the liquid crystal composition further comprises a compound represented by general formula (III):

[Chem. 3]

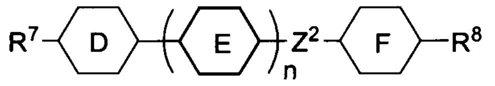 (III)

(wherein $R^7$ and $R^8$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; D, E, and F are each independently optionally fluorinated 1,4-phenylene or trans-1,4-cyclohexylene; $Z^2$ is a single bond, $-OCH_2-$, -OCO-, $-CH_2O-$, or -COO-; and n is 0, 1, or 2, with the proviso that compounds represented by general formulas (I), (II-1), and (II-2) are excluded).

**14.** The liquid crystal display device according to any one of Claims 1 to 13, wherein the liquid crystal composition comprises at least one compound represented by general formula (I) wherein A is trans-1,4-cyclohexylene and at least one compound represented by general formula (I) wherein A is 1,4-phenylene.

**15.** The liquid crystal display device according to any one of Claims 1 to 14, wherein the liquid crystal composition comprises a compound represented by general formula (II-1) and/or a compound represented by general formula (II-2):

[Chem. 4]

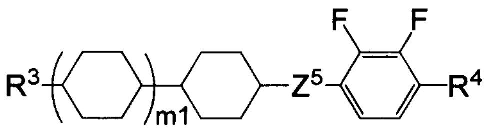 (II-1)

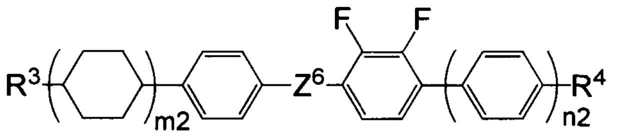 (II-2)

(wherein $R^3$ and $R^4$ are each independently an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^5$ and $Z^6$ are each independently a single bond, -CH=CH-, -C≡C-,$-CH_2CH_2-$, $-(CH_2)_4-$, -COO-, -OCO-, $-OCH_2-$, $-CH_2O-$, $-OCF_2-$, or $-CF_2O-$; and m1, m2, and n2 are each independently 0 or 1).

**16.** The liquid crystal display device according to any one of Claims 1 to 15, wherein the liquid crystal composition has a rotational viscosity of 150 or less, a refractive index anisotropy of 0.08 to 0.13, and a Z of 13,000 or less, wherein Z is represented by the following equation:

[Math. 1]

$$Z = \gamma 1 / \Delta n^2$$

wherein $\gamma 1$ is the rotational viscosity, and $\Delta n$ is the refractive index anisotropy.

**17.** The liquid crystal display device according to any one of Claims 1 to 16, wherein the liquid crystal composition has an upper nematic liquid crystal phase temperature limit of 60°C to 120°C, a lower nematic liquid crystal phase temperature limit of -20°C or lower, and a difference between the upper and lower nematic liquid crystal phase temperature limits of 100 to 150.

**18.** The liquid crystal display device according to any one of Claims 1 to 19, wherein the liquid crystal composition has a resistivity of $10^{12}$ Ω·m or more.

**19.** The liquid crystal display device according to any one of Claims 1 to 18, wherein the liquid crystal layer comprises a polymer of the liquid crystal composition, the liquid crystal composition further comprising a polymerizable compound represented by general formula (V) :

[Chem. 5]

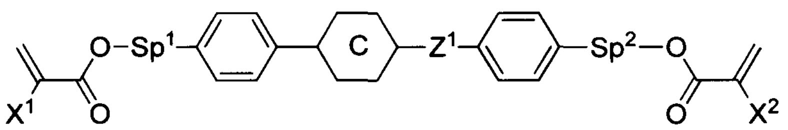

(V)

(wherein $X^1$ and $X^2$ are each independently hydrogen or methyl; $Sp^1$ and $Sp^2$ are each independently a single bond, an alkylene group of 1 to 8 carbon atoms, or $-O-(CH_2)_s-$ (wherein s is an integer of 2 to 7, and the oxygen atom is attached to the aromatic ring); $Z^1$ is $-OCH_2-$, $-CH_2O-$, -COO-, -OCO-, $-CF_2O-$, $-OCF_2-$, $-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$ (wherein $Y^1$ and $Y^2$ are each independently fluorine or hydrogen), -C≡C-, or a single bond; C is 1,4-phenylene, trans-1,4-cyclohexylene, or a single bond; and any hydrogen atom in any 1,4-phenylene group in the formula is optionally replaced with fluorine).

**20.** The liquid crystal display device according to Claim 19, wherein C and $Z^1$ in general formula (V) are single bonds.

**Patentansprüche**

**1.** Flüssigkristallanzeigevorrichtung, umfassend ein erstes Substrat, ein zweites Substrat, eine Flüssigkristallschicht, umfassend eine Flüssigkristallzusammensetzung, zwischen dem ersten und zweiten Substrat und ein gehärtetes Produkt aus einer wärmehärtbaren Harzzusammensetzung, die das erste und das zweite Substrat verbindet, wobei die Flüssigkristallzusammensetzung umfasst:

10 Gew.-% bis 50 Gew.-% einer Verbindung der allgemeinen Formel (I):

[Chem. 1]

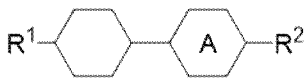

( I )

(wobei gilt: $R^1$ und $R^2$ sind jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen; und A ist 1,4-Phenylen oder Trans-1,4-cyclohexylen); und
35 Gew.-% bis 80 Gew.-% einer Verbindung der allgemeinen Formel (II):

[Chem. 2]

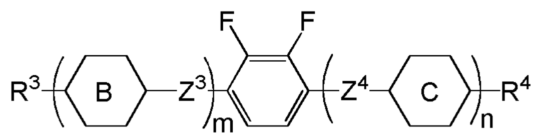

( II )

(wobei gilt: $R^3$ und $R^4$ sind jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen; $Z^3$ und $Z^4$ sind jeweils unabhängig eine Einfachbindung, -CH=CH-,

-C≡C-,-$CH_2CH_2$-, -$(CH_2)_4$-, -COO-, -OCO-, -$OCH_2$-, -$CH_2O$-, -$OCF_2$- oder -$CF_2O$-; B und C sind jeweils unabhängig optional fluoriertes 1,4-Phenylen oder trans-1,4-Cyclohexylen; und m und n sind jeweils unabhängig eine ganze Zahl von 0 bis 4, wobei gilt: m + n = 1 bis 4),
wobei die härtbare Harzzusammensetzung eine Verbindung umfasst, die mindestens eine Epoxygruppe pro Molekül enthält und ein gewichtsmittleres Molekulargewicht von 300 bis 10.000 aufweist, wobei die härtbare Harzzusammensetzung einen Wert von Wasserstoffbrückenbindungen eingehenden funktionellen Gruppen von $1 \times 10^{-4}$ bis $5 \times 10^{-2}$ mol/g aufweist.

**2.** Flüssigkristallanzeigevorrichtung nach Anspruch 1, wobei die härtbare Harzzusammensetzung des Weiteren ein wärmehärtendes Mittel umfasst.

**3.** Flüssigkristallanzeigevorrichtung nach Anspruch 1 oder 2, wobei die härtbare Harzzusammensetzung des Weiteren ein Silankupplungsmittel umfasst.

**4.** Flüssigkristallanzeigevorrichtung nach einem der Ansprüche 1 bis 3, wobei die härtbare Harzzusammensetzung des Weiteren einen Füllstoff umfasst.

**5.** Flüssigkristallanzeigevorrichtung nach einem der Ansprüche 1 bis 4, wobei die härtbare Harzzusammensetzung des Weiteren Harzteilchen umfasst.

**6.** Flüssigkristallanzeigevorrichtung nach einem der Ansprüche 1 bis 5, wobei die Verbindung, die mindestens eine Epoxygruppe pro Molekül enthält und ein gewichtsmittleres Molekulargewicht von 300 bis 10.000 aufweist, des Weiteren mindestens eine ethylenisch ungesättigte Bindung pro Molekül enthält.

**7.** Flüssigkristallanzeigevorrichtung nach Anspruch 6, wobei die Verbindung, die mindestens eine Epoxygruppe pro Molekül enthält und ein gewichtsmittleres Molekulargewicht von 300 bis 10.000 aufweist, mindestens eine (Meth)acrylgruppe pro Molekül enthält.

**8.** Flüssigkristallanzeigevorrichtung nach Anspruch 7, wobei die Verbindung, die mindestens eine (Meth)acrylgruppe und mindestens eine Epoxygruppe pro Molekül enthält, ein Meth(acryl)-modifiziertes Epoxyharz und/oder ein Urethanmodifiziertes Meth(acryl)epoxyharz ist.

**9.** Flüssigkristallanzeigevorrichtung nach einem der Ansprüche 1 bis 8, wobei die härtbare Harzzusammensetzung des Weiteren eine Verbindung umfasst, die eine ethylenisch ungesättigte Bindung enthält.

**10.** Flüssigkristallanzeigevorrichtung nach Anspruch 9, wobei die härtbare Harzzusammensetzung eine Verbindung umfasst, die eine (Meth)acryloyloxygruppe enthält.

**11.** Flüssigkristallanzeigevorrichtung nach einem der Ansprüche 6 bis 10, wobei die härtbare Harzzusammensetzung einen Gehalt an Kohlenstoff-Kohlenstoff-Doppelbindungen von $1 \times 10^{-3}$ bis $5 \times 10^{-3}$ mol/g aufweist.

**12.** Flüssigkristallanzeigevorrichtung nach Anspruch 7, 8 oder 10, wobei die härtbare Harzzusammensetzung ein Verhältnis von Epoxy-zu-(Meth)acryl-Äquivalenten von 15:85 bis 95:5 aufweist.

**13.** Flüssigkristallanzeigevorrichtung nach einem der Ansprüche 1 bis 12, wobei die Flüssigkristallzusammensetzung des Weiteren eine Verbindung der allgemeinen Formel (III) umfasst:

[Chem. 3]

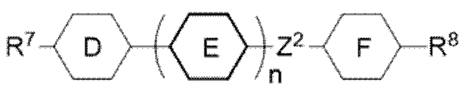
(III)

(wobei gilt: $R^7$ und $R^8$ sind jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen; D, E und F sind jeweils unabhängig optional fluoriertes 1,4-Phenylen oder Trans-1,4-cyclohexylen; $Z^2$ ist eine Einfachbindung, -$OCH_2$-, -OCO-, -$CH_2O$- oder -COO-; und n ist 0, 1 oder 2, mit der Maßgabe,

dass Verbindungen der allgemeinen Formeln (I), (II-1) und (II-2) ausgenommen sind).

**14.** Flüssigkristallanzeigevorrichtung nach einem der Ansprüche 1 bis 13, wobei die Flüssigkristallzusammensetzung mindestens eine Verbindung der allgemeinen Formel (I), worin A trans-1,4-Cylohexylen ist, und mindestens eine Verbindung der allgemeinen Formel (I), worin A 1,4-Phenylen ist, umfasst.

**15.** Flüssigkristallanzeigevorrichtung nach einem der Ansprüche 1 bis 14, wobei die Flüssigkristallzusammensetzung eine Verbindung der allgemeinen Formel (II-1) und/oder eine Verbindung der allgemeinen Formel (II-2) umfasst:

[Chem. 4]

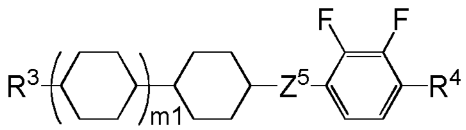
(II-1)

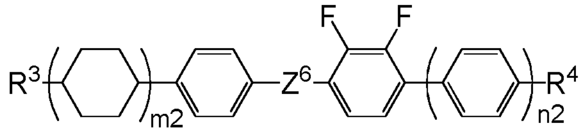
(II-2)

(wobei gilt: $R^3$ und $R^4$ sind jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen; $Z^5$ und $Z^6$ sind jeweils unabhängig eine Einfachbindung, -CH=CH-, -C≡C-, $-CH_2CH_2-$, $-(CH_2)_4-$, -COO-, -OCO-, $-OCH_2-$, $-CH_2O-$, $-OCF_2-$ oder $-CF_2O-$; und m1, m2 und n2 sind jeweils unabhängig 0 oder 1).

**16.** Flüssigkristallanzeigevorrichtung nach einem der Ansprüche 1 bis 15, wobei die Flüssigkristallzusammensetzung eine Rotationsviskosität von 150 oder weniger, eine Brechungsindex-Anisotropie von 0,08 bis 0,13 und einen Z-Wert von 13.000 oder weniger aufweist, wobei Z ausgedrückt wird durch die folgende Gleichung:

[Math. 1]

$$Z = \gamma 1 / \Delta n^2$$

wobei gilt: $\gamma 1$ ist die Rotationsviskosität und $\Delta n$ ist die Brechungsindex-Anisotropie.

**17.** Flüssigkristallanzeigevorrichtung nach einem der Ansprüche 1 bis 16, wobei die Flüssigkristallzusammensetzung eine obere nematische Flüssigkristallphasentemperaturgrenze von 60°C bis 120°C, eine untere nematische Flüssigkristallphasentemperaturgrenze von -20°C oder weniger und eine Differenz zwischen der oberen und der unteren nematischen Flüssigkristallphasentemperaturgrenze von 100 bis 150 aufweist.

**18.** Flüssigkristallanzeigevorrichtung nach einem der Ansprüche 1 bis 19, wobei die Flüssigkristallzusammensetzung einen spezifischen Widerstand von $10^{12}$ Ω·m oder mehr aufweist.

**19.** Flüssigkristallanzeigevorrichtung nach einem der Ansprüche 1 bis 18, wobei die Flüssigkristallschicht ein Polymer der Flüssigkristallzusammensetzung umfasst, wobei die Flüssigkristallzusammensetzung des Weiteren eine polymerisierbare Verbindung der allgemeinen Formel (V) umfasst:

[Chem. 5]

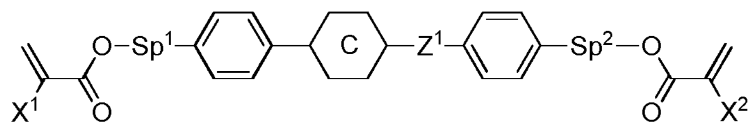

(V)

(wobei gilt: $X^1$ und $X^2$ sind jeweils unabhängig Wasserstoff oder Methyl; $Sp^1$ und $Sp^2$ sind jeweils unabhängig eine Einfachbindung, eine Alkylengruppe mit 1 bis 8 Kohlenstoffatomen oder $-O-(CH_2)_s-$ (wobei gilt: s ist eine ganze Zahl von 2 bis 7 und das Sauerstoffatom ist an den aromatischen Ring gebunden); $Z^1$ ist $-OCH_2-$, $-CH_2O-$, -COO-, -OCO-, $-CF_2O-$, $-OCF_2-$, $-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$ (wobei gilt: $Y^1$ und $Y^2$ sind jeweils unabhängig Fluor oder Wasserstoff), -C≡C- oder eine Einfachbindung; C ist 1,4-Phenylen, trans-1,4-Cyclohexylen oder eine Einfachbindung; und jedes Wasserstoffatom in jeder 1,4-Phenylengruppe in der Formel ist optional ersetzt durch Fluor).

**20.** Flüssigkristallanzeigevorrichtung nach Anspruch 19, wobei C und $Z^1$ in der allgemeinen Formel (V) Einfachbindungen sind.

**Revendications**

**1.** Dispositif d'affichage à cristaux liquides comprenant un premier substrat, un second substrat, une couche de cristaux liquides comprenant une composition de cristaux liquides entre les premier et second substrats, et un produit durci d'une composition de résine thermiquement durcissable joignant ensemble les premier et second substrats,
la composition de cristaux liquides comprenant :

10 % à 50 % en poids d'un composé représenté par la formule générale (I) :

[Produit chimique 1]

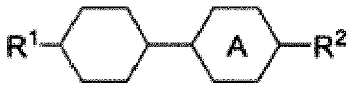

(I)

(dans laquelle $R^1$ et $R^2$ sont chacun indépendamment un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; et A est un 1,4-phénylène ou un trans-1,4-cyclohexylène) ; et
35 % à 80 % en poids d'un composé représenté par la formule générale (II) :

[Produit chimique 2]

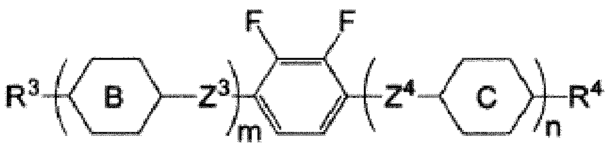

(II)

(dans laquelle $R^3$ et $R^4$ sont chacun indépendamment un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; $Z^3$ et $Z^4$ sont chacun indépendamment une liaison simple, -CH=CH-, -C≡C-, $-CH_2CH_2-$, $-(CH_2)_4-$, -COO-, -OCO-,$-OCH_2-$, $-CH_2O-$, $-OCF_2-$, ou $-CF_2O-$ ; B et C sont chacun indépendamment un 1,4-phénylène ou trans-1,4-cyclohexylène facultativement fluoré ; et m et n sont chacun indépendamment un nombre entier allant de 0 à 4, dans lequel m + n = 1 à 4),
la composition de résine durcissable comprenant un composé contenant au moins un groupe époxy par molécule et présentant un poids moléculaire moyen en poids de 300 à 10 000, dans lequel la composition de résine durcissable présente une valeur de groupe fonctionnel se liant à un hydrogène de $1 \times 10^{-4}$ à $5 \times 10^{-2}$ mol/g.

2. Dispositif d'affichage à cristaux liquides selon la revendication 1, dans lequel la composition de résine durcissable comprend en outre un agent de durcissement thermique.

3. Dispositif d'affichage à cristaux liquides selon la revendication 1 ou 2, dans lequel la composition de résine durcissable comprend en outre un agent de couplage à base de silane.

4. Dispositif d'affichage à cristaux liquides selon l'une quelconque des revendications 1 à 3, dans lequel la composition de résine durcissable comprend en outre une charge.

5. Dispositif d'affichage à cristaux liquides selon l'une quelconque des revendications 1 à 4, dans lequel la composition de résine durcissable comprend en outre des particules de résine.

6. Dispositif d'affichage à cristaux liquides selon l'une quelconque des revendications 1 à 5, dans lequel le composé contenant au moins un groupe époxy par molécule et présentant un poids moléculaire moyen en poids de 300 à 10 000 contient en outre au moins une liaison à insaturation éthylénique par molécule.

7. Dispositif d'affichage à cristaux liquides selon la revendication 6, dans lequel le composé contenant au moins un groupe époxy par molécule et présentant un poids moléculaire moyen en poids de 300 à 10 000 contient au moins un groupe (méth)acrylique par molécule.

8. Dispositif d'affichage à cristaux liquides selon la revendication 7, dans lequel le composé contenant au moins un groupe (méth)acrylique et au moins un groupe époxy par molécule est une résine époxy à modification (méth)acrylique et/ou une résine époxy (méth)acrylique à modification uréthane.

9. Dispositif d'affichage à cristaux liquides selon l'une quelconque des revendications 1 à 8, dans lequel la composition de résine durcissable comprend en outre un composé contenant une liaison à insaturation éthylénique.

10. Dispositif d'affichage à cristaux liquides selon la revendication 9, dans lequel la composition de résine durcissable comprend un composé contenant un groupe (méth)acryloyloxy.

11. Dispositif d'affichage à cristaux liquides selon l'une quelconque des revendications 6 à 10, dans lequel la composition de résine durcissable présente une teneur en liaison double carbone-carbone de $1 \times 10^{-3}$ à $5 \times 10^{-3}$ mol/g.

12. Dispositif d'affichage à cristaux liquides selon la revendication 7, 8, ou 10, dans lequel la composition de résine durcissable présente un rapport équivalent époxy sur (méth)acrylique de 15 : 85 à 95 : 5.

13. Dispositif d'affichage à cristaux liquides selon l'une quelconque des revendications 1 à 12, dans lequel la composition de cristaux liquides comprend en outre un composé représenté par la formule générale (III) :

[Produit chimique 3]

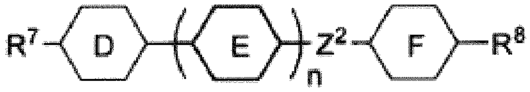

(III)

(dans laquelle $R^7$ et $R^8$ sont chacun indépendamment un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; D, E, et F sont chacun indépendamment un 1,4-phénylène ou trans-1,4-cyclohexylène facultativement fluoré ; $Z^2$ est une liaison simple, $-OCH_2-$, -OCO-, $-CH_2O-$, ou -COO- ; et n est 0, 1, ou 2, à condition que les composés représentés par les formules générales (I), (II-1), et (II-2) soient exclus.

14. Dispositif d'affichage à cristaux liquides selon l'une quelconque des revendications 1 à 13, dans lequel la composition de cristaux liquides comprend au moins un composé représenté par la formule générale (I) dans laquelle A est un trans-1,4-cyclohexylène et au moins un composé représenté par la formule générale (I) dans laquelle A est un 1,4-phénylène.

15. Dispositif d'affichage à cristaux liquides selon l'une quelconque des revendications 1 à 14, dans lequel la composition

de cristaux liquides comprend un composé représenté par la formule générale (11-1) et/ou un composé représenté par la formule générale (II-2) :

[Produit chimique 4]

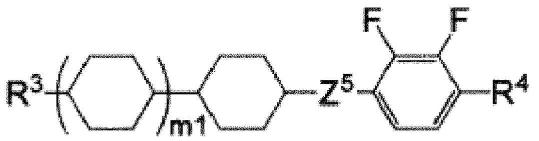

(II-1)

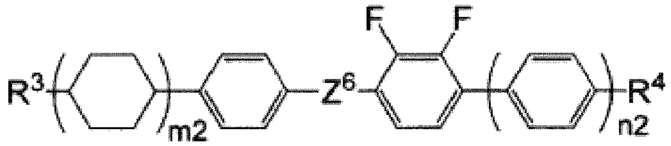

(II-2)

(dans lesquelles $R^3$ et $R^4$ sont chacun indépendamment un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; $Z^5$ et $Z^6$ sont chacun indépendamment une liaison simple, -CH=CH-, -C≡C-, $-CH_2CH_2-$, $-(CH_2)_4-$, -COO-, -OCO-,$-OCH_2-$, $-CH_2O-$, $-OCF_2-$, ou $-CF_2O-$; et m1, m2, et n2 sont chacun indépendamment 0 ou 1).

**16.** Dispositif d'affichage à cristaux liquides selon l'une quelconque des revendications 1 à 15, dans lequel la composition de cristaux liquides présente une viscosité de rotation de 150 ou moins, une anisotropie d'indice de réfraction de 0,08 à 0,13, et un Z de 13 000 ou moins, dans lequel Z est représenté par l'équation suivante :

[Math. 1]

$$Z = \gamma 1 / \Delta n^2$$

dans laquelle $\gamma 1$ est la viscosité de rotation, et $\Delta n$ est l'anisotropie d'indice de réfraction.

**17.** Dispositif d'affichage à cristaux liquides selon l'une quelconque des revendications 1 à 16, dans lequel la composition de cristaux liquides présente une limite de température supérieure de phase nématique de cristaux liquides de 60 °C à 120°C, une limite de température inférieure de phase nématique de cristaux liquides de -20 °C ou moins, et une différence entre les limites de température de phase nématique de cristaux liquides supérieure et inférieure de 100 à 150.

**18.** Dispositif d'affichage à cristaux liquides selon l'une quelconque des revendications 1 à 19, dans lequel la composition de cristaux liquides présente une résistivité de $10^{12}$ Ω.m ou plus.

**19.** Dispositif d'affichage à cristaux liquides selon l'une quelconque des revendications 1 à 18, dans lequel la couche de cristaux liquides comprend un polymère de la composition de cristaux liquides, la composition de cristaux liquides comprenant en outre un composé polymérisable représenté par la formule générale (V) :

[Produit chimique 5]

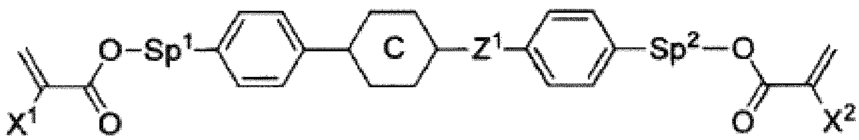

(V)

(dans laquelle $X^1$ et $X^2$ sont chacun indépendamment un hydrogène ou un méthyle ; $Sp^1$ et $Sp^2$ sont chacun indépendamment une liaison simple, un groupe alkylène de 1 à 8 atomes de carbone, ou $-O-(CH_2)_s-$ (dans lequel

s est un nombre entier allant de 2 à 7, et l'atome d'oxygène est fixé au cycle aromatique) ; $Z^1$ est $-OCH_2-$, $-CH_2O-$, -COO-, -OCO-, $-CF_2O-$, $-OCF_2-$,$-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$,$-COO-CH_2-$, $-OCO-CH_2-$, $-CH_2-COO-$, $-CH_2-OCO-$, $-CY^1=CY^2-$ (dans lequel $Y^1$ et $Y^2$ sont chacun indépendamment un fluor ou un hydrogène), -C=C-, ou une liaison simple; C est un 1,4-phénylène, un trans-1,4-cyclohexylène, ou une liaison simple ; et n'importe quel atome d'hydrogène dans le groupe 1,4-phénylène dans la formule est facultativement remplacé par un fluor).

**20.** Dispositif d'affichage à cristaux liquides selon la revendication 19, dans lequel C et $Z^1$ dans la formule générale (V) sont des liaisons simples.

FIG. 1

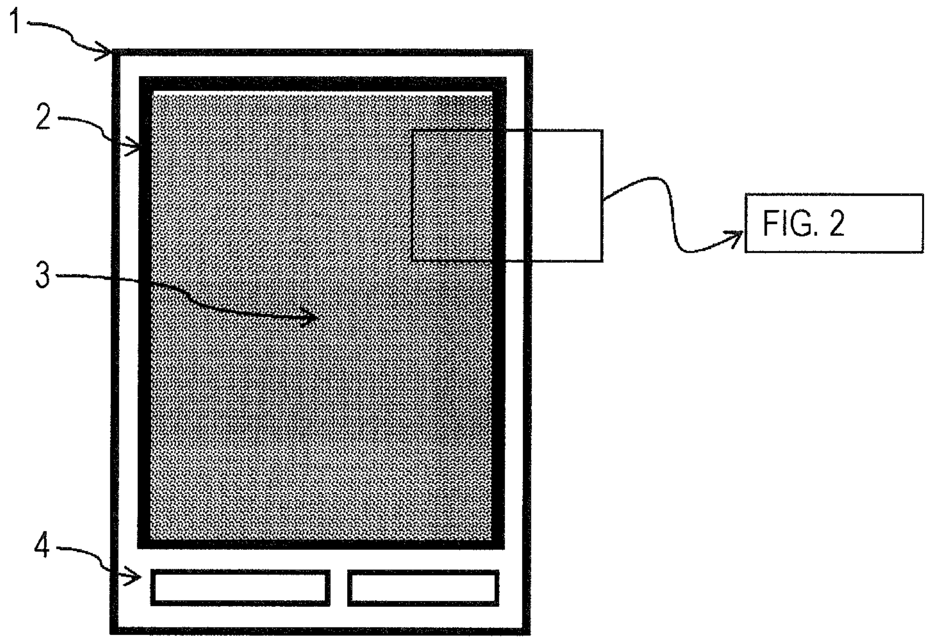


FIG. 2

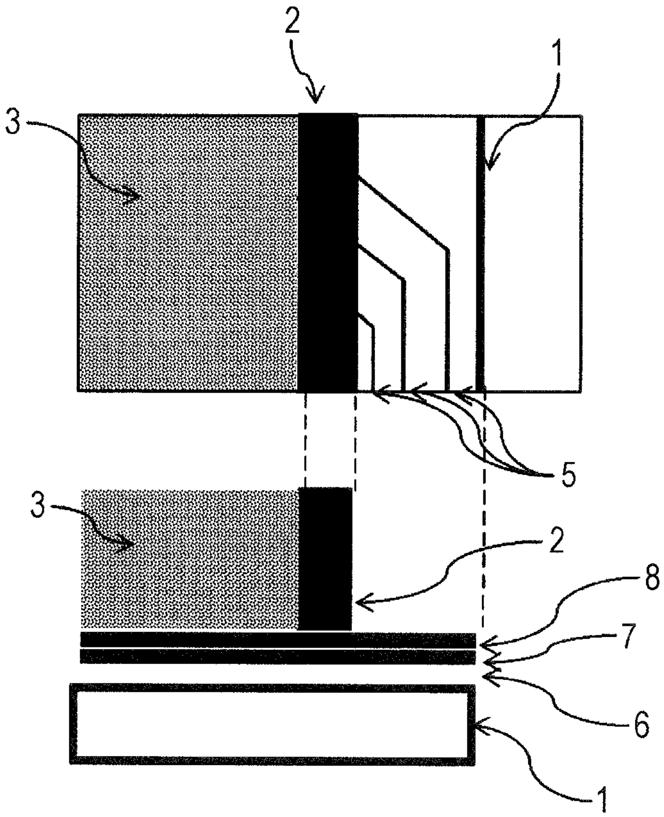

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011074384 A1
- WO 2009054276 A1
- WO 2014109266 A1
- JP 2013124324 A
- JP 2006023582 A
- JP 2008116825 A
- JP 2009175180 A


### Non-patent literature cited in the description


- **J. BRANDRUP et al.** Polymer Handbook. John & Wiley, 1999, vol. 1